# EUROPEAN PATENT APPLICATION

(11) **EP 3 926 719 A1**
(43) Date of publication of application: **22.12.2021**
(21) Application number: 19914719.0
(22) Date of filing: 19.12.2019
(51) Int. Cl.: H01M 4/86, H01M 8/12, H01M 8/1226, H01M 8/124

(54) **MEMBRANE ELECTRODE ASSEMBLY AND FUEL CELL**

(30) Priority: 13.02.2019 JP 2019023503; 13.02.2019 JP 2019023504; 13.02.2019 JP 2019023505; 13.02.2019 JP 2019023506; 24.10.2019 JP 2019193285
(71) Applicant: Panasonic Intellectual Property Management Co., Ltd., Osaka-shi, Osaka 540-6207 (JP)
(72) Inventor: NUNOO, Kosuke, Osaka (JP); GOTO, Takehito, Osaka (JP); MIKAMI, Yuichi, Osaka (JP); TERAYAMA, Takeshi, Osaka (JP); KUROHA, Tomohiro, Osaka (JP)
(74) Representative: Grünecker Patent- und Rechtsanwälte PartG mbB
(86) International application number: PCT/JP2019/049751
(87) International publication number: WO 2020/166202

(57) **Abstract**

A membrane electrode assembly according to the present disclosure is a membrane electrode assembly including: a solid electrolyte membrane containing an electrolyte material; and an electrode in contact with a reactant gas, wherein the electrode includes a structural support including a ceramic member, and a pore extending from a boundary surface in contact with the reactant gas toward the solid electrolyte membrane in the structural support and filled with a filler having at least one selected from the group consisting of hydrogen oxidation activity, oxygen reduction activity, proton reduction activity, steam decomposition activity, and oxide ion oxidation activity.

## Description

### Technical Field

The present disclosure relates to a membrane electrode assembly of an electrochemical device. More particularly, the present disclosure relates to a membrane electrode assembly of a fuel cell.

### Background Art

As one of electrochemical devices using an electrolyte material including a solid oxide, for example, a solid oxide fuel cell (hereinafter, SOFC) is known. Oxide ion conductors exemplified by stabilized zirconia are widely used as electrolyte materials for SOFCs. The ionic conductivity of oxide ion conductors decreases with decreasing temperature, and therefore SOFCs including stabilized zirconia as an electrolyte material requires an operating temperature of 700°C or more, for example. On the other hand, SOFCs including an electrolyte material with proton conductivity can operate at 600°C and therefore attract attention from the perspective of the chemical stability of members and cost reduction.

The shapes of solid oxide fuel cells are broadly divided into a cylindrical type and a flat type. The cylindrical type has a longer current path and a larger resistance loss, and therefore the flat type is being developed to achieve higher output power.

The flat type, however, is more likely to have cell breakage and cracking than the cylindrical type. In particular, flat type SOFCs have the problems of cell breakage and cracking resulting from a change in shape due to a difference in linear expansion coefficient between the electrode material and the electrolyte material during temperature increase and decrease (for example, Patent Literature 1). Thus, in Patent Literature 1, the linear expansion coefficient or shrinkage of the fuel electrode and the electrolyte is controlled to reduce the bending of the membrane electrode assembly.

### Citation List

### Patent Literature

PTL 1: International Publication No. WO 2017/014069

### Summary of Invention

### Technical Problem

In the prior art (Patent Literature 1), however, the change in shape of the membrane electrode assembly in the operating environment has not been fully studied. More specifically, when an electrode material to form a support and an electrolyte material have different linear expansion coefficients or shrinkage ratios, although a change in the shape of the membrane electrode assembly occurs inevitably in various operating environments, the change in shape of the membrane electrode assembly in such operating environments has not been fully studied.

The present disclosure proposes as an example a membrane electrode assembly that can have a smaller change in shape even in the operating environment.

### Solution to Problem

A membrane electrode assembly according to one aspect of the present disclosure is a membrane electrode assembly including a solid electrolyte membrane containing an electrolyte material and an electrode in contact with a hydrogen-containing gas, wherein the electrode includes a structural support including a ceramic member, and a pore extending from a boundary surface in contact with the hydrogen-containing gas toward the solid electrolyte membrane in the structural support and filled with a filler with hydrogen oxidation activity and electrical conductivity.

A fuel cell according to one aspect of the present disclosure includes a membrane electrode assembly including a solid electrolyte membrane containing an electrolyte material and an electrode in contact with a reactant gas, wherein the electrode includes a structural support including a ceramic member, and a pore extending from a boundary surface in contact with the reactant gas toward the solid electrolyte membrane in the structural support and filled with a filler having at least one selected from the group consisting of hydrogen oxidation activity, oxygen reduction activity, proton reduction activity, steam decomposition activity, and oxide ion oxidation activity.

### Advantageous Effects of Invention

The present disclosure is configured as described above and can advantageously decrease the change in shape even in the operating environment. Brief Description of Drawings

[Fig. 1] Fig. 1 is a plan view of a membrane electrode assembly according to a first embodiment of the present disclosure viewed from a first fuel electrode side boundary surface side in contact with a hydrogen-containing gas.
[Fig. 2] Fig. 2 is a schematic view of an example of an A-A cross section of the membrane electrode assembly illustrated in Fig. 1.
[Fig. 3] Fig. 3 is a schematic view of a modified example of the membrane electrode assembly illustrated in Fig. 1.
[Fig. 4] Fig. 4 is a schematic view of an example of a cross section of a membrane electrode assembly according to a modified example 1 of the first embodiment of the present disclosure.
[Fig. 5] Fig. 5 is a schematic view of an example of a cross section of a membrane electrode assembly according to a modified example 2 of the first embodiment of the present disclosure.
[Fig. 6] Fig. 6 is a schematic view of an example of a cross section of a membrane electrode assembly according to a modified example 3 of the first embodiment of the present disclosure.
[Fig. 7] Fig. 7 is a schematic perspective view of the positional relationship between a first fuel electrode side pore and a second fuel electrode side pore in a fuel electrode of the membrane electrode assembly illustrated in Fig. 6.
[Fig. 8] Fig. 8 is a schematic view of an example of a cross section of a membrane electrode assembly according to a modified example 4 of the first embodiment of the present disclosure.
[Fig. 9] Fig. 9 is a schematic view of an example of a cross section of a membrane electrode assembly according to a modified example 5 of the first embodiment of the present disclosure.
[Fig. 10] Fig. 10 is a schematic view of an example of a cross section of a membrane electrode assembly according to a modified example 6 of the first embodiment of the present disclosure.
[Fig. 11] Fig. 11 is a plan view of a membrane electrode assembly according to a second embodiment of the present disclosure viewed from a first air electrode side boundary surface side in contact with an oxidant gas.
[Fig. 12] Fig. 12 is a schematic view of an example of an A-A cross section of the membrane electrode assembly illustrated in Fig. 11.
[Fig. 13] Fig. 13 is a schematic view of a modified example of the membrane electrode assembly illustrated in Fig. 11.
[Fig. 14] Fig. 14 is a schematic view of an example of a cross section of a membrane electrode assembly according to a modified example 1 of the second embodiment of the present disclosure.
[Fig. 15] Fig. 15 is a schematic view of an example of a cross section of a membrane electrode assembly according to a modified example 2 of the second embodiment of the present disclosure.
[Fig. 16] Fig. 16 is a schematic view of an example of a cross section of a membrane electrode assembly according to a modified example 3 of the second embodiment of the present disclosure.
[Fig. 17] Fig. 17 is a schematic perspective view of the positional relationship between a first air electrode side pore and a second air electrode side pore in an air electrode of the membrane electrode assembly illustrated in Fig. 16.
[Fig. 18] Fig. 18 is a schematic view of an example of a cross section of a membrane electrode assembly according to a modified example 4 of the second embodiment of the present disclosure.
[Fig. 19] Fig. 19 is a schematic view of an example of a cross section of a membrane electrode assembly according to a modified example 5 of the second embodiment of the present disclosure.
[Fig. 20] Fig. 20 is a schematic view of an example of a cross section of a membrane electrode assembly according to a modified example 6 of the second embodiment of the present disclosure.
[Fig. 21] Fig. 21 is a plan view of a membrane electrode assembly according to a third embodiment of the present disclosure viewed from the electrode side.
[Fig. 22] Fig. 22 is a cross-sectional view of an A-A cross section schematically illustrating the structure of the membrane electrode assembly illustrated in Fig. 21.
[Fig. 23] Fig. 23 is a schematic view of a modified example of the membrane electrode assembly illustrated in Fig. 21.
[Fig. 24] Fig. 24 is a schematic view of an example of a cross section of a membrane electrode assembly according to a modified example 1 of the third embodiment of the present disclosure.
[Fig. 25] Fig. 25 is a schematic view of an example of a cross section of a membrane electrode assembly according to a modified example 2 of the third embodiment of the present disclosure.
[Fig. 26] Fig. 26 is a schematic view of an example of a cross section of a membrane electrode assembly according to a modified example 3 of the third embodiment of the present disclosure.
[Fig. 27] Fig. 27 is a schematic view of an example of a cross section of a membrane electrode assembly according to a modified example 4 of the third embodiment of the present disclosure.
[Fig. 28] Fig. 28 is a schematic view of an example of a cross section of a membrane electrode assembly according to a modified example 5 of the third embodiment of the present disclosure.
[Fig. 29] Fig. 29 is a schematic perspective view of the positional relationship between a first pore and a second pore in an electrode of the membrane electrode assembly illustrated in Fig. 28.
[Fig. 30] Fig. 30 is a schematic view of an example of a cross section of a membrane electrode assembly according to a modified example 6 of the third embodiment of the present disclosure.
[Fig. 31] Fig. 31 is a plan view of a membrane electrode assembly according to a fourth embodiment of the present disclosure viewed from a first air electrode side boundary surface side in contact with an oxidant gas.
[Fig. 32] Fig. 32 is a plan view of the membrane electrode assembly according to the fourth embodiment of the present disclosure viewed from a first fuel electrode side boundary surface side in contact with a hydrogen-containing gas.
[Fig. 33] Fig. 33 is an A-A cross-sectional view of schematically illustrating the structure of the membrane electrode assembly illustrated in Fig. 31.
[Fig. 34] Fig. 34 is a schematic view of a modified example of an air electrode of the membrane electrode assembly illustrated in Fig. 31.
[Fig. 35] Fig. 35 is a schematic view of a modified example of a fuel electrode of the membrane electrode assembly illustrated in Fig. 32.
[Fig. 36] Fig. 36 is a schematic cross-sectional view of the structure of a membrane electrode assembly according to a modified example 1 of the fourth embodiment of the present disclosure.
[Fig. 37] Fig. 37 is a schematic view of the positional relationship between an air electrode side pore and a fuel electrode side pore of the membrane electrode assembly according to the modified example 1 of the fourth embodiment of the present disclosure viewed from the first air electrode side boundary surface.
[Fig. 38] Fig. 38 is a schematic cross-sectional view of the structure of a membrane electrode assembly according to a modified example 2 of the fourth embodiment of the present disclosure.
[Fig. 39] Fig. 39 is a schematic view of the positional relationship between an air electrode side pore and a fuel electrode side pore of the membrane electrode assembly according to the modified example 2 of the fourth embodiment of the present disclosure viewed from the first air electrode side boundary surface.
[Fig. 40] Fig. 40 is a plan view of a membrane electrode assembly according to a modified example 3 of the fourth embodiment of the present disclosure viewed from the first air electrode side boundary surface side in contact with an oxidant gas.
[Fig. 41] Fig. 41 is a B-B cross-sectional view schematically illustrating the structure of the membrane electrode assembly illustrated in Fig. 40.
[Fig. 42] Fig. 42 is a schematic view of the positional relationship between an air electrode side pore and a fuel electrode side pore of the membrane electrode assembly according to the modified example 3 of the fourth embodiment of the present disclosure viewed from the first air electrode side boundary surface side.
[Fig. 43] Fig. 43 is a schematic cross-sectional view of the structure of a membrane electrode assembly according to a modified example 4 of the fourth embodiment of the present disclosure.
[Fig. 44] Fig. 44 is a schematic view of the positional relationship between an air electrode side pore and a fuel electrode side pore of the membrane electrode assembly according to the modified example 4 of the fourth embodiment of the present disclosure viewed from the first air electrode side boundary surface side.
[Fig. 45] Fig. 45 is a schematic cross-sectional view of the structure of a membrane electrode assembly according to a modified example 5 of the fourth embodiment of the present disclosure.
[Fig. 46] Fig. 46 is a schematic cross-sectional view of the structure of a membrane electrode assembly according to a modified example 6 of the fourth embodiment of the present disclosure.
[Fig. 47] Fig. 47 is a schematic cross-sectional view of the structure of a membrane electrode assembly according to a modified example 7 of the fourth embodiment of the present disclosure.
[Fig. 48] Fig. 48 is a schematic perspective view of the positional relationship between a first fuel electrode side pore and a second fuel electrode side pore of a fuel electrode and the positional relationship between a first air electrode side pore and a second air electrode side pore of an air electrode in the membrane electrode assembly illustrated in Fig. 47.
[Fig. 49] Fig. 49 is a schematic cross-sectional view of the structure of a membrane electrode assembly according to a modified example 8 of the fourth embodiment of the present disclosure.
[Fig. 50] Fig. 50 is a schematic cross-sectional view of the structure of a membrane electrode assembly according to a modified example 9 of the fourth embodiment of the present disclosure.

### Description of Embodiments

### Underlying Knowledge Forming Basis of the Present Disclosure

A change in the shape of a membrane electrode assembly is typically caused by the difference in linear expansion coefficient between materials to be bonded. The term "linear expansion coefficient", as used herein, refers to the linear expansion coefficient (K⁻¹) defined in JIS R 1618 "Measuring method of thermal expansion of fine ceramics by thermomechanical analysis". For example, ceramic materials used in solid electrolyte materials, such as partially stabilized zirconia (YSZ), lanthanum gallate based oxides, barium zirconate based oxides, and barium cerium based oxides, have a low linear expansion coefficient in the range of 8 to 11 x 10⁻⁶ /K, and metals typically used in electrodes (fuel electrodes), such as nickel, iron, cobalt, and palladium, have a high linear expansion coefficient in the range of 11 to 20 x 10⁻⁶ /K. Oxides of these metals also have a linear expansion coefficient in the range of approximately 10 to 20 x 10⁻⁶ /K, which is higher than the linear expansion coefficients of these ceramic materials. For example, NiO has a linear expansion coefficient of approximately 14 x 10⁻⁶ /K.

Metals, such as nickel, iron, cobalt, and lanthanum, typically used in electrodes (air electrodes) also have a high linear expansion coefficient in the range of 11 to 20 x 10⁻⁶ /K. Oxides of these metals also have a linear expansion coefficient in the range of approximately 10 to 20 x 10⁻⁶ /K, which is higher than the linear expansion coefficients of the ceramic materials. For example, lanthanum strontium cobalt iron composite oxides have a linear expansion coefficient in the range of approximately 15 to 18 x 10⁻⁶ /K.

Thus, electrode materials composed of a composite material of a metal or metal oxide and a ceramic have a higher linear expansion coefficient than solid electrolyte materials.

The shape of flat cells is flat at the sintering temperature because a solvent, binder, plasticizer, or the like is volatilized during temperature increase. During temperature decrease, a fuel electrode with a larger linear expansion coefficient has a greater volume change than a solid electrolyte membrane. When the solid electrolyte membrane is located on the fuel electrode, therefore, the fuel electrode is convexly bent. Thus, in Patent Literature 1, the bending is reduced by forming a layer with an intermediate linear expansion coefficient between a support electrode (a fuel electrode in Patent Literature 1) and a solid electrolyte membrane to decrease the difference in linear expansion coefficient between the materials to be bonded.

The inventors, however, have found that only the relaxation of bending during the sintering of the cell and the relaxation of thermal stress at the interface between different materials are studied in Patent Literature 1, and bending and thermal stress in actual operating environments of cells are not fully studied. The operating environment refers to a temperature rising process up to the operating temperature, a reduction treatment process, and a fastening state with a current collector. Actually, the bent shape changes in the reduction treatment process, and therefore it is necessary to consider crack control in the above operating environment. The reduction treatment refers to converting nickel oxide of the fuel electrode into metallic nickel in Patent Literature 1, for example.

More specifically, even if the linear expansion coefficient is controlled to reduce bending while sintering as in Patent Literature 1, volume contraction in the operating environment, such as the reduction treatment of nickel oxide, may increase bending and cause breakage or cracking.

As in the membrane electrode assembly including the solid electrolyte layer and the fuel electrode, in a membrane electrode assembly including a solid electrolyte membrane and an air electrode, the difference in linear expansion coefficient between materials to be bonded causes a change in the shape of the membrane electrode assembly.

The material of the air electrode is a material having both oxygen reduction activity and electrical conductivity and is typically an oxide, such as a lanthanum strontium cobalt iron composite oxide (LSCF), a lanthanum strontium cobalt composite oxide (LSC), a lanthanum strontium iron composite oxide (LSF), a lanthanum strontium manganese composite oxide (LSM), or a barium strontium cobalt iron composite oxide (BSCF). These oxides have a linear expansion coefficient in the range of approximately 11 to 23 x 10⁻⁶ /K, which is higher than the linear expansion coefficient of solid electrolyte materials.

Thus, in the membrane electrode assembly including the solid electrolyte membrane and the air electrode, the air electrode has a larger volume change than the solid electrolyte membrane during temperature increase and decrease, which causes bending and breakage or cracking in the membrane electrode assembly. This also causes a separation between the solid electrolyte membrane and the air electrode.

As a measure against the change in shape of the membrane electrode assembly including the solid electrolyte membrane and the air electrode, for example, a mixture of a material having both oxygen reduction activity and electrical conductivity and an electrolyte material may be used particularly in a portion adjacent to the electrolyte layer (that is, near the boundary surface) in the air electrode to decrease the difference in linear expansion coefficient between the solid electrolyte membrane and the air electrode. From the perspective of maintaining oxygen reduction activity and electrical conductivity in the air electrode, however, the present inventors have found that there is a limit to the decrease in the difference in linear expansion coefficient by mixing the electrolyte materials.

To decrease the change in the shape of the cell due to the difference in linear expansion coefficient, it is desirable to support the structure of the membrane electrode assembly by the solid electrolyte membrane itself. This, however, increases the thickness of the solid electrolyte membrane. Solid electrolyte materials have lower ionic conductivity than electrode materials. Thus, an increase in the thickness of the solid electrolyte membrane results in a decrease in battery performance.

An electrode of a membrane electrode assembly of the electrode support type may be composed of a mixture of nickel and a solid electrolyte material, for example, and serves four functions of electrical conduction, ionic conduction, gas diffusivity, and structural support of the membrane electrode assembly.

The present inventors have found that, to reduce bending due to a difference in linear expansion coefficient, at least the structural support function among the four functions of the electrode can be separated from the other functions to decrease the change in the shape of the membrane electrode assembly. More specifically, the present inventors have found that substantially equalizing the linear expansion coefficient of a portion for ensuring structural support (hereinafter referred to as a structural support) in the electrode with the linear expansion coefficient of the solid electrolyte membrane can reduce the bending of the cell even in the operating environment.

More specifically, the electrode includes the structural support and a member with high electrical conductivity, ionic conductivity, and gas diffusivity. As a member with high gas diffusivity among the electrical conductivity, ionic conductivity, and gas diffusivity, a plurality of pores that communicate between the flow path of a reactant gas and the solid electrolyte membrane and into which the reactant gas flows are formed in a structural support member. The pores are filled with a filler with electrical conductivity and ionic conductivity as a member with electrical conductivity and ionic conductivity. For example, it was found that when the electrode is a fuel electrode, the pores are filled with a filler with hydrogen oxidation activity and electrical conductivity to oxidize hydrogen in the hydrogen-containing gas flowing into the pores, and when the electrode is an air electrode, the pores are filled with a filler with oxygen reduction activity and electrical conductivity to reduce oxygen in the oxidant gas flowing into the pores. Such a structure can decrease the change in shape of the membrane electrode assembly in the operating environment. It can also enhance hydrogen oxidation activity and electrical conductivity or oxygen reduction activity and electrical conductivity.

Furthermore, as a result of extensive studies on such structures, the present inventors have found that it is necessary to study the gas diffusivity of the pores to improve the performance of the membrane electrode assembly. In particular, it was found that the gas diffusivity can be increased on the downstream side in the reactant gas flow direction to decrease concentration overpotential and improve the performance of the membrane electrode assembly.

The findings of the present inventors have not been clarified and solve the problem of bending of the membrane electrode assembly. The findings also solve the problem of performance degradation caused by concentration overpotential on the downstream side in the reactant gas flow direction. The present disclosure more specifically provides the following aspects.

A membrane electrode assembly according to a first aspect of the present disclosure is a membrane electrode assembly including a solid electrolyte membrane containing an electrolyte material and an electrode in contact with a reactant gas, wherein the electrode includes a structural support including a ceramic member, and a pore extending from a boundary surface in contact with the reactant gas toward the solid electrolyte membrane in the structural support and filled with a filler having at least one selected from the group consisting of hydrogen oxidation activity, oxygen reduction activity, proton reduction activity, steam decomposition activity, and oxide ion oxidation activity.

In this structure, the electrode including the structural support including the ceramic member can support the structure of the membrane electrode assembly and can have a smaller difference in thermal expansion coefficient from the solid electrolyte membrane. This can reduce the occurrence of bending in the membrane electrode assembly in the operating environment.

Furthermore, the electrode has the pore filled with the filler, and the filler with hydrogen oxidation activity can promote the oxidation of hydrogen, the filler with oxygen reduction activity can promote the reduction of oxygen, the filler with proton reduction activity can promote the reduction of protons, the filler with steam decomposition activity can promote the decomposition of steam, and the filler with oxide ion oxidation activity can promote the oxidation of oxide ions.

Thus, the membrane electrode assembly according to the first aspect of the present disclosure can advantageously have a smaller change in shape even in the operating environment.

"Boundary surface" and "first boundary surface" in the present specification are synonymous.

According to a second aspect of the present disclosure, in the membrane electrode assembly according to the first aspect, the reactant gas may be a hydrogen-containing gas, and the filler may have hydrogen oxidation activity and electrical conductivity.

In such a structure, the filler can have hydrogen oxidation activity and electrical conductivity, and the electrode can promote the oxidation of hydrogen and ensure electrical conductivity.

In the membrane electrode assembly according to the second aspect of the present disclosure, the pore may have a first opening on the boundary surface into which the hydrogen-containing gas flows as the reactant gas, and a second opening at an end of the pore on the solid electrolyte membrane side opposite the first opening.

In such a structure including the first opening and the second opening, hydrogen can flow into the pore through the first opening. The pore is filled with a filler. Thus, hydrogen is oxidized on the surface of the filler into a proton and an electron. Protons can be moved from the electrode toward the solid electrolyte membrane through the second opening, and electrons can be taken out of the electrode.

Thus, the membrane electrode assembly according to the second aspect of the present disclosure, for example, used as an electrode (that is, an anode) of a fuel cell can ensure power generation performance.

Furthermore, in the membrane electrode assembly according to the second aspect of the present disclosure, the pore may include a first pore, a second pore, and a communication path which communicates between the first pore and the second pore.

In such a structure, the communication path can increase the number of paths through which the hydrogen-containing gas can flow. This can further enhance hydrogen oxidation activity and electrical conductivity. Even if a failure in the path of the first pore or the second pore disrupts the flow of the hydrogen-containing gas, the hydrogen-containing gas can flow by another route through the communication path. Thus, the electrode can retain hydrogen oxidation activity and electrical conductivity.

According to a third aspect of the present disclosure, in the membrane electrode assembly according to the first or second aspect, the filler may be a compound containing Ni.

In such a structure, when the filler is a compound containing Ni, the filler can further enhance hydrogen oxidation activity and electrical conductivity.

According to a fourth aspect of the present disclosure, in the membrane electrode assembly according to any one of the first to third aspects, the filler may be a cermet.

In such a structure, when the filler is a cermet, the number of reaction fields for hydrogen oxidation can be increased. This can further enhance hydrogen oxidation activity.

In the membrane electrode assembly according to the third or fourth aspect of the present disclosure, the filler may be a porous material.

In such a structure, when the filler is a porous material, the hydrogen-containing gas involved in the reaction flows easily through the pores. This can further improve power generation performance.

In the membrane electrode assembly according to any one of the second to fourth aspects of the present disclosure, the structural support may include the ceramic member containing the electrolyte material.

In such a structure, when the structural support includes the ceramic member containing the electrolyte material, the structural support has a linear expansion coefficient close to the linear expansion coefficient of the solid electrolyte membrane. This can reduce the occurrence of bending in the operating environment.

According to a fifth aspect of the present disclosure, in the membrane electrode assembly according to the first aspect, the reactant gas is an oxidant gas, and the filler may have oxygen reduction activity and electrical conductivity.

In such a structure, the filler can have oxygen reduction activity and electrical conductivity, and the electrode can promote the reduction of oxygen and ensure electrical conductivity.

In the membrane electrode assembly according to the fifth aspect of the present disclosure, the pore may have a first opening on the boundary surface into which the oxidant gas flows as the reactant gas, and a second opening at an end of the pore on the solid electrolyte membrane side opposite the first opening.

In such a structure including the first opening and the second opening, the oxidant gas (oxygen) can flow into the pore through the first opening and move in the pore. The pore is filled with a filler. Thus, water is produced from oxygen that has been reduced on the filler surface and transferred near the second opening, protons that have passed through the solid electrolyte membrane, and electrons that have reached the electrode via an external circuit.

Thus, the membrane electrode assembly according to the fifth aspect of the present disclosure, for example, used as an electrode (that is, a cathode) of a fuel cell can ensure power generation performance.

Furthermore, in the membrane electrode assembly according to the fifth aspect of the present disclosure, the pore may include a first pore, a second pore, and a communication path which communicates between the first pore and the second pore.

In such a structure, the communication path can increase the number of paths through which the oxidant gas can flow. This can further enhance oxygen reduction activity and electrical conductivity. Even if a failure in the path of the first pore or the second pore disrupts the flow of the oxidant gas, the oxidant gas can flow by another route through the communication path. Thus, the electrode can retain oxygen reduction activity and electrical conductivity.

In the membrane electrode assembly according to the fifth aspect of the present disclosure, the filler may be a porous material.

In such a structure, when the filler is a porous material, the oxidant gas involved in the reaction flows easily through the pores. This can further improve power generation performance.

According to a sixth aspect of the present disclosure, in the membrane electrode assembly according to the fifth aspect, the filler may contain at least one element selected from the group consisting of Mn, Fe, Co, and Ni.

In such a structure, the filler to be used in the pore can be a compound containing at least one element selected from the group consisting of Mn, Fe, Co, and Ni and can have high oxygen reduction activity and electrical conductivity.

According to a seventh aspect of the present disclosure, in the membrane electrode assembly according to the fifth aspect, the filler may be at least one compound selected from the group consisting of lanthanum strontium cobalt composite oxides, lanthanum strontium cobalt iron composite oxides, lanthanum strontium iron composite oxides, and lanthanum nickel iron composite oxides.

In such a structure, the filler to be used in the pore can be at least one compound selected from the group consisting of lanthanum strontium cobalt composite oxides, lanthanum strontium cobalt iron composite oxides, lanthanum strontium iron composite oxides, and lanthanum nickel iron composite oxides and can have high oxygen reduction activity and electrical conductivity at approximately 600°C, which is the operating temperature of fuel cells and the like.

In the membrane electrode assembly according to any one of the fifth to seventh aspects of the present disclosure, the structural support may include a ceramic member containing the electrolyte material.

In such a structure, when the structural support includes the ceramic member containing the electrolyte material, the structural support has a linear expansion coefficient close to the linear expansion coefficient of the solid electrolyte membrane. This can reduce the occurrence of bending in the operating environment.

According to an eighth aspect of the present disclosure, in the membrane electrode assembly according to the first aspect, the structural support may have regions in which the pores have different opening areas per unit area on the boundary surface, and satisfies the relationship of first area ratio < second area ratio, wherein the first area ratio is an opening area of the pore per unit area of a upstream region in the flow direction of the reactant gas, and the second area ratio is an opening area of the pore per unit area of a downstream region.

In such a structure, the electrode including the structural support can support the structure of the membrane electrode assembly and can have a smaller difference in thermal expansion coefficient from the solid electrolyte membrane. This can reduce the occurrence of bending in the membrane electrode assembly in the operating environment.

Furthermore, the electrode has the pore filled with the filler in the structural support, and the opening area of the pore per unit area on the boundary surface between the structural support and the reactant gas satisfies the relationship of first area ratio < second area ratio. This can decrease concentration overpotential in the downstream region in the reactant gas flow direction. This can prevent performance degradation in the downstream region and improve the performance.

This can decrease the change in shape and improve the performance even in the operating environment.

The opening area of the pore per unit area means the ratio of the opening area of all pores included in the unit area in a predetermined region including the pores. Thus, the first area ratio can be calculated by dividing the total opening area of pores in the upstream region on the boundary surface by the area of the upstream region (that is, "the total opening area of pores in the upstream region + the area of the structural support in the upstream region"). The second area ratio can be calculated by dividing the total opening area of pores in the downstream region on the boundary surface by the area of the downstream region (that is, "the total opening area of pores in the downstream region + the area of the structural support in the downstream region").

According to a ninth aspect of the present disclosure, in the membrane electrode assembly according to the eighth aspect, the relationship of first area ratio < third area ratio < second area ratio may be satisfied, wherein the third area ratio is an opening area of the pore per unit area in a region between the upstream region and the downstream region.

In such a structure, the opening area of the pore per unit area satisfies the relationship of first area ratio < third area ratio < second area ratio. This can promote the gas diffusion effect not only in the downstream region in the reactant gas flow direction but also in the region between the upstream side and the downstream side. This can decrease concentration overpotential in the downstream region and in the region between the upstream side and the downstream side and prevent performance degradation.

According to a tenth aspect of the present disclosure, in a membrane electrode assembly according to the eighth aspect, the relationship of third area ratio < first area ratio < second area ratio may be satisfied, wherein the third area ratio is an opening area of the pore per unit area in a region between the upstream region and the downstream region.

In such a structure, the opening area of the pore per unit area satisfies the relationship of third area ratio < first area ratio < second area ratio. This can promote the gas diffusion effect in the downstream region in the reactant gas flow direction. This can decrease concentration overpotential in the downstream region and prevent performance degradation.

When a membrane electrode assembly according to the present disclosure is used, for example, in a fuel cell, the region between the upstream side and the downstream side in the reactant gas flow direction has a higher temperature than the other regions. The relationship of the third area ratio lower than the first area ratio and the second area ratio results in lower gas diffusivity in the region between the upstream side and the downstream side. This can decrease the current flow and the temperature rise in the region between the upstream side and the downstream side as compared with the other regions.

Furthermore, in the membrane electrode assembly according to any one of the eighth to tenth aspects of the present disclosure, the pore may include a first pore, a second pore, and a communication path which communicates between the first pore and the second pore.

In such a structure, the communication path can increase the number of paths through which the reactant gas can flow. This can further enhance hydrogen oxidation activity and electrical conductivity when the reactant gas is hydrogen and the filler has hydrogen oxidation activity and electrical conductivity. This can further enhance oxygen reducibility and electrical conductivity when the reactant gas is oxygen and the filler has oxygen reduction activity and electrical conductivity.

Even if a failure in the path of the first pore or the second pore disrupts the flow of the reactant gas, the reactant gas can flow by another route through the communication path. Thus, the electrode can retain hydrogen oxidation activity and electrical conductivity or redox properties and electrical conductivity.

In the membrane electrode assembly according to any one of the eighth to tenth aspects of the present disclosure, the filler may be a porous material.

In such a structure, when the filler is a porous material, the reactant gas involved in the reaction flows easily through the pores. This can further improve power generation performance.

In the membrane electrode assembly according to any one of the eighth to tenth aspects of the present disclosure, when the filler has oxygen reduction activity and electrical conductivity, the filler may be a compound containing at least one element selected from the group consisting of Mn, Fe, Co, and Ni.

In such a structure, the filler to be used in the pore is a compound containing at least one element selected from the group consisting of Mn, Fe, Co, and Ni. This can enhance oxygen reduction activity and electrical conductivity.

In the membrane electrode assembly according to any one of the eighth to tenth aspects of the present disclosure, when the filler has hydrogen oxidation activity and electrical conductivity, the filler is a compound containing Ni.

In such a structure, the filler to be used in the pore, which is a compound containing Ni, can further enhance hydrogen oxidation activity and electrical conductivity.

In the membrane electrode assembly according to any one of the eighth to tenth aspects of the present disclosure, the filler may be a cermet.

In such a structure, when the filler is a cermet, the filler can increase the number of reaction fields for hydrogen oxidation and further enhance hydrogen oxidation activity.

In the membrane electrode assembly according to any one of the eighth to tenth aspects of the present disclosure, the structural support may include a ceramic member containing the electrolyte material.

In such a structure, when the structural support includes the ceramic member containing the electrolyte material, the structural support has a linear expansion coefficient close to the linear expansion coefficient of the solid electrolyte membrane. This can reduce the occurrence of bending in the operating environment.

According to an eleventh aspect of the present disclosure, in the membrane electrode assembly according to any one of the first to tenth aspects, the pore may have a first opening on the boundary surface into which the reactant gas flows and a second opening opposite the first opening at an end of the pore on the solid electrolyte membrane side.

In such a structure, the reactant gas can flow into the pore through the first opening. The pore is filled with a filler.

Thus, the membrane electrode assembly according to the eleventh aspect of the present disclosure, for example, used as an electrode of a fuel cell can ensure power generation performance.

According to a twelfth aspect of the present disclosure, in the membrane electrode assembly according to any one of the first to eleventh aspects, the pore may include a first pore, a second pore, and a communication path which communicates between the first pore and the second pore.

In such a structure, the communication path can increase the number of paths through which the reactant gas can flow. Thus, such a structure can have at least one selected from the group consisting of higher hydrogen oxidation activity, higher oxygen reduction activity, higher proton reduction activity, higher steam decomposition activity, and higher oxide ion oxidation activity.

Even if a failure in the path of the first pore or the second pore disrupts the flow of the reactant gas, the hydrogen-containing gas can flow by another route through the communication path. Thus, the electrode can maintain at least one selected from the group consisting of hydrogen oxidation activity, oxygen reduction activity, proton reduction activity, steam decomposition activity, and oxide ion oxidation activity.

According to a thirteenth aspect of the present disclosure, in the membrane electrode assembly according to any one of the first to twelfth aspects, the filler may be a porous material.

In such a structure, when the filler is a porous material, the reactant gas involved in the reaction flows easily through the pores. This can further improve power generation performance.

According to a fourteenth aspect of the present disclosure, in the membrane electrode assembly according to the first aspect, the reactant gas may be a hydrogen-containing gas and an oxidant gas, the electrode may include a fuel electrode in contact with the hydrogen-containing gas and an air electrode in contact with the oxidant gas, and the air electrode, the solid electrolyte membrane, and the fuel electrode may be laminated in this order, the fuel electrode may include a fuel electrode side structural support as the structural support, and a fuel electrode side pore, as the pore, extending from a fuel electrode side boundary surface in contact with the hydrogen-containing gas toward a solid electrolyte membrane side in the fuel electrode side structural support and filled with a fuel electrode side filler with hydrogen oxidation activity and electrical conductivity, and the air electrode may include an air electrode side structural support as the structural support, and an air electrode side pore, as the pore, extending from an air electrode side boundary surface in contact with the oxidant gas to the solid electrolyte membrane side in the air electrode side structural support and filled with an air electrode side filler with oxygen reduction activity and electrical conductivity.

In such a structure, when the fuel electrode includes the fuel electrode side structural support and the air electrode includes the air electrode side structural support, both the fuel electrode side and the air electrode side can support the structure of the membrane electrode assembly, and the difference in thermal expansion coefficient from the solid electrolyte membrane can be decreased. This can reduce the occurrence of bending in the membrane electrode assembly in the operating environment.

The fuel electrode has the fuel electrode side pore filled with the fuel electrode side filler, and the air electrode has the air electrode side pore filled with the air electrode side filler. This can promote the oxidation of hydrogen and ensure electrical conductivity in the fuel electrode, and promote the reduction of oxygen and ensure electrical conductivity in the air electrode.

Thus, the membrane electrode assembly according to the first aspect of the present disclosure can advantageously have a smaller change in shape even in the operating environment.

"Fuel electrode side boundary surface" and "first fuel electrode side boundary surface" in the present specification are synonymous.

"Air electrode side boundary surface" and "first air electrode side boundary surface" in the present specification are synonymous.

According to a fifteenth aspect of the present disclosure, in the membrane electrode assembly according to the fourteenth aspect, the fuel electrode side pore may include a first fuel electrode side opening on the fuel electrode side boundary surface into which the hydrogen-containing gas flows, and a second fuel electrode side opening opposite the first fuel electrode side opening at an end of the fuel electrode side pore on the solid electrolyte membrane side, and the air electrode side pore may include a first air electrode side opening on the air electrode side boundary surface into which the oxidant gas flows, and a second air electrode side opening opposite the first air electrode side opening at an end of the pore on the solid electrolyte membrane side.

In such a structure, when the fuel electrode side pore has the first fuel electrode side opening and the second fuel electrode side opening, hydrogen can flow into the fuel electrode side pore through the first fuel electrode side opening. The fuel electrode side pore is filled with a fuel electrode side filler. Thus, hydrogen is oxidized on the surface of the fuel electrode side filler into a proton and an electron. Protons can be moved from the fuel electrode toward the solid electrolyte membrane through the second fuel electrode side opening, and electrons can be taken out of the fuel electrode.

Furthermore, when the air electrode side pore has the first air electrode side opening and the second air electrode side opening, the oxidant gas (oxygen) can flow into the air electrode side pore through the first air electrode side opening and move in the air electrode side pore. The air electrode side pore is filled with an air electrode side filler. Thus, water is produced from oxygen that has been reduced on the surface of the air electrode side filler and transferred near the second air electrode side opening, protons that have passed through the solid electrolyte membrane, and electrons that have reached the electrode via an external circuit.

Thus, a membrane electrode assembly according to the present disclosure, for example, used in a fuel cell can have satisfactory power generation performance.

According to a sixteenth aspect of the present disclosure, in the membrane electrode assembly according to the fifteenth aspect, a periphery of the second fuel electrode side opening of the fuel electrode side pore and a periphery of the second air electrode side opening of the air electrode side pore are arranged so as not to overlap when viewed from the top in the laminating direction of the membrane electrode assembly.

In the operating environment, stress is generated at each periphery of the second air electrode side opening and the second fuel electrode side opening.

In such a structure, the periphery of the second air electrode side opening and the periphery of the second fuel electrode side opening are arranged so as not to overlap when viewed from the top in the laminating direction of the membrane electrode assembly. This can prevent stress concentration in a particular region of the solid electrolyte membrane.

Thus, the membrane electrode assembly can have smaller bending and is less likely to have breakage or cracking.

According to a seventeenth aspect of the present disclosure, in the membrane electrode assembly according to the fifteenth or sixteenth aspect, a plane formed by a periphery of the second fuel electrode side opening may include a plane formed by a periphery of the second air electrode side opening when viewed from the top in the laminating direction of the membrane electrode assembly.

In the operating environment, stress is generated at each periphery of the second opening and a fourth opening.

In such a structure, the plane formed by the periphery of the second fuel electrode side opening includes the plane formed by the periphery of the second air electrode side opening when viewed from the top in the laminating direction of the membrane electrode assembly. Thus, the periphery of the second fuel electrode side opening does not overlap the periphery of the second air electrode side opening when viewed from the top in the laminating direction of the membrane electrode assembly. This can prevent stress concentration in a particular region of the solid electrolyte membrane in the operating environment.

Furthermore, the ion diffusion length in the solid electrolyte membrane in an electrochemical reaction can be shortened as compared with a structure with the positional relationship in which the plane formed by the periphery of the second fuel electrode side opening and the plane formed by the periphery of the second air electrode side opening are separated from each other so as not to overlap when viewed from the top. This can decrease internal resistance in the electrochemical reaction.

Furthermore, the plane formed by the periphery of the second fuel electrode side opening can be enlarged to expand a region filled with a material with hydrogen oxidation activity and electrical conductivity and to increase the number of reaction fields or electrical conduction paths for hydrogen oxidation. This can further enhance hydrogen oxidation activity and electrical conductivity.

According to an eighteenth aspect of the present disclosure, in the membrane electrode assembly according to the fifteenth or sixteenth aspect, a plane formed by a periphery of the second air electrode side opening may include a plane formed by a periphery of the second fuel electrode side opening when viewed from the top in the laminating direction of the membrane electrode assembly.

In the operating environment, stress is generated at each periphery of the second air electrode side opening and the second fuel electrode side opening.

In such a structure, the plane formed by the periphery of the second air electrode side opening includes the plane formed by the periphery of the second fuel electrode side opening when viewed from the top in the laminating direction of the membrane electrode assembly. Thus, the periphery of the second air electrode side opening does not overlap the periphery of the second fuel electrode side opening when viewed from the top in the laminating direction of the membrane electrode assembly. This can prevent stress concentration in a particular region of the solid electrolyte membrane in the operating environment.

Furthermore, the ion diffusion length in the solid electrolyte membrane in an electrochemical reaction can be shortened as compared with a structure with the positional relationship in which the plane formed by the periphery of the second air electrode side opening and the plane formed by the periphery of the second fuel electrode side opening are separated from each other so as not to overlap when viewed from the top. This can decrease internal resistance in the electrochemical reaction.

Furthermore, the plane formed by the periphery of the second air electrode side opening can be enlarged to expand a region filled with a material with oxygen reduction activity and electrical conductivity and to increase the number of reaction fields or electrical conduction paths for oxygen reduction. This can further enhance oxygen reduction activity and electrical conductivity.

According to a nineteenth aspect of the present disclosure, in the membrane electrode assembly according to the fifteenth aspect, a periphery of the second fuel electrode side opening of the fuel electrode side pore and a periphery of the second air electrode side opening of the air electrode side pore are arranged so as to at least partly overlap when viewed from the top in the laminating direction of the membrane electrode assembly.

In such a structure, the fuel electrode side pore and the air electrode side pore are arranged such that the periphery of the second fuel electrode side opening may at least partly overlap the periphery of the second air electrode side opening when viewed from the top in the laminating direction of the membrane electrode assembly. This can increase the degree of freedom of the arrangement of the fuel electrode side pore and the air electrode side pore, thus enabling a large number of arrangements. This can increase the area occupied by the fuel electrode side pore in the fuel electrode and the area occupied by the air electrode side pore in the air electrode.

This can expand the reaction field and electrical conduction path for oxygen reduction or the reaction field and electrical conduction path for hydrogen oxidation and can further enhance oxygen reduction activity, hydrogen oxidation activity, and electrical conductivity.

According to a twentieth aspect of the present disclosure, in the membrane electrode assembly according to any one of the fourteenth to nineteenth aspects, the fuel electrode side pore may include a first fuel electrode side pore, a second fuel electrode side pore, and a fuel electrode side communication path which communicates between the first fuel electrode side pore and the second fuel electrode side pore.

In such a structure, the fuel electrode side communication path can increase the number of paths through which the hydrogen-containing gas can flow. This can further enhance hydrogen oxidation activity and electrical conductivity. Even if a failure in the path of the first fuel electrode side pore or the second fuel electrode side pore disrupts the flow of the hydrogen-containing gas, the hydrogen-containing gas can flow by another route through the fuel electrode side communication path. Thus, the fuel electrode can retain hydrogen oxidation activity and electrical conductivity.

According to a twenty-first aspect of the present disclosure, in the membrane electrode assembly according to any one of the fourteenth to twentieth aspects, the air electrode side pore may include a first air electrode side pore, a second air electrode side pore, and an air electrode side communication path which communicates between the first air electrode side pore and the second air electrode side pore.

In such a structure, the air electrode side communication path can increase the number of paths through which the oxidant gas can flow. This can further enhance oxygen reduction activity and electrical conductivity. Even if a failure in the path of the first air electrode side pore or the second air electrode side pore disrupts the flow of the oxidant gas, the oxidant gas can flow by another route through the air electrode side communication path. Thus, the air electrode can retain oxygen reduction activity and electrical conductivity.

According to a twenty-second aspect of the present disclosure, in the membrane electrode assembly according to any one of the fourteenth to twenty-first aspects, the fuel electrode side filler may contain Ni.

In such a structure, when the fuel electrode side filler contains Ni, the fuel electrode side filler can further enhance hydrogen oxidation activity and electrical conductivity.

According to a twenty-third aspect of the present disclosure, in the membrane electrode assembly according to any one of the fourteenth to twenty-second aspects, the fuel electrode side filler may be a cermet.

In such a structure, when the air electrode side filler is a cermet, the number of reaction fields for hydrogen oxidation can be increased. This can further enhance hydrogen oxidation activity.

According to a twenty-fourth aspect of the present disclosure, in the membrane electrode assembly according to any one of the fourteenth to twenty-third aspects, the air electrode side filler may be a compound containing at least one element selected from the group consisting of Mn, Fe, Co, and Ni.

In such a structure, the filler to be used in the pore can be a compound containing at least one element selected from the group consisting of Mn, Fe, Co, and Ni and can have high oxygen reduction activity and electrical conductivity.

According to a twenty-fifth aspect of the present disclosure, in the membrane electrode assembly according to any one of the fourteenth to twenty-fourth aspects, at least one selected from the group consisting of the fuel electrode side filler and the air electrode side filler may be a porous material.

In such a structure, at least one selected from the group consisting of the fuel electrode side filler and the air electrode side filler is a porous material. Thus, when the fuel electrode side filler is a porous material, the hydrogen-containing gas involved in the reaction flows easily through the fuel electrode side pore. When the air electrode side filler is a porous material, the oxidant gas involved in the reaction flows easily through the air electrode side pore. This can further improve power generation performance.

According to a twenty-sixth aspect of the present disclosure, in the membrane electrode assembly according to any one of the fourteenth to twenty-fifth aspects, at least one selected from the group consisting of the fuel electrode side structural support and the air electrode side structural support may include the ceramic member containing the electrolyte material.

In such a structure, when at least one selected from the group consisting of the fuel electrode side structural support and the air electrode side structural support contains the electrolyte material in the ceramic member, the linear expansion coefficient can be close to the linear expansion coefficient of the solid electrolyte membrane. This can reduce the occurrence of bending in the operating environment.

According to a twenty-seventh aspect of the present disclosure, in the membrane electrode assembly according to any one of the first to twenty-sixth aspects, the pore may have a cavity with a tortuosity of 1.5 or less.

In such a structure, when the pore has a cavity with a tortuosity of 1.5 or less, the gas diffusivity can be improved.

According to a twenty-eighth aspect of the present disclosure, in the membrane electrode assembly according to any one of the first to twenty-seventh aspects, the structural support may have a tortuosity of 1 or more and 1.2 or less.

In such a structure, when the structural support has a tortuosity of 1 or more and 1.2 or less, the structural support can have improved strength.

According to a twenty-nineth aspect of the present disclosure, in the membrane electrode assembly according to any one of the first to twenty-eighth aspects, the electrolyte material may have proton conductivity.

A fuel cell according to a thirtieth aspect of the present disclosure includes a membrane electrode assembly including a solid electrolyte membrane containing an electrolyte material and an electrode in contact with a reactant gas, wherein the electrode includes a structural support including a ceramic member, and a pore extending from a boundary surface in contact with the reactant gas to the solid electrolyte membrane in the structural support and filled with a filler having at least one selected from the group consisting of hydrogen oxidation activity, oxygen reduction activity, proton reduction activity, steam decomposition activity, and oxide ion oxidation activity.

In this structure, the electrode of the membrane electrode assembly including the structural support including the ceramic member can support the structure of the membrane electrode assembly and can have a smaller difference in thermal expansion coefficient from the solid electrolyte membrane. This can reduce the occurrence of bending in the membrane electrode assembly in the operating environment of the fuel cell.

Furthermore, the electrode of the membrane electrode assembly has the pore filled with the filler, and the filler with hydrogen oxidation activity can promote the oxidation of hydrogen, the filler with oxygen reduction activity can promote the reduction of oxygen, the filler with proton reduction activity can promote the reduction of protons, the filler with steam decomposition activity can promote the decomposition of steam, and the filler with oxide ion oxidation activity can promote the oxidation of oxide ions.

Thus, the fuel cell according to the thirtieth aspect of the present disclosure can advantageously have a smaller change in shape even in the operating environment.

Embodiments of the present disclosure are described below with reference to the accompanying drawings. The following embodiments are examples of the above aspects. Thus, the shape, material, constituent, and arrangement and coupling of constituents described below are only examples and do not limit the aspects unless otherwise specified in the appended claims. Among the constituents described below, constituents not described in the independent claims defining the highest level concepts of the aspects are described as optional constituents. Those denoted by like reference numerals in the drawings are sometimes not described again. Constituents in the drawings are schematically illustrated for the sake of clarity, and their shapes and dimensions may not be accurate.

### (First Embodiment)

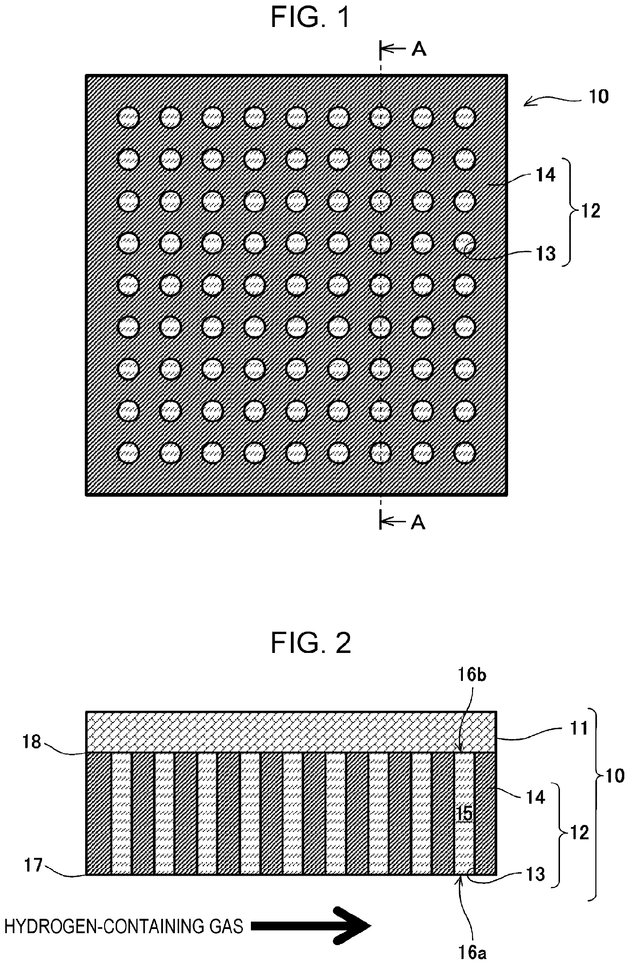

A membrane electrode assembly 10 according to a first embodiment is described below with reference to Figs. 1 and 2. Fig. 1 is a plan view of the membrane electrode assembly 10 according to the first embodiment of the present disclosure viewed from a surface in contact with a hydrogen-containing gas (that is, a first fuel electrode side boundary surface 17 in Fig. 2). Fig. 2 is a schematic view of an example of an A-A cross section of the membrane electrode assembly 10 illustrated in Fig. 1.

As illustrated in Figs. 1 and 2, the membrane electrode assembly 10 includes a solid electrolyte membrane 11 containing an electrolyte material and a fuel electrode 12 in contact with the hydrogen-containing gas. The membrane electrode assembly 10 is a member for use in an electrochemical device, for example, and includes a stack of the solid electrolyte membrane 11 and the fuel electrode 12, as illustrated in Fig. 1.

The fuel electrode 12 includes a fuel electrode side structural support 14 including a ceramic member and a fuel electrode side pore 13, which extends from the first fuel electrode side boundary surface 17 (hereinafter sometimes referred to as a boundary surface) in contact with the hydrogen-containing gas in the fuel electrode side structural support 14 to the solid electrolyte membrane 11 and is filled with a fuel electrode side filler 15 with hydrogen oxidation activity and electrical conductivity. The fuel electrode side structural support 14 supports the structure of the membrane electrode assembly 10. As illustrated in Fig. 2, the fuel electrode side pore 13 extends linearly from the first fuel electrode side boundary surface 17 to the solid electrolyte membrane 11.

The electrolyte material in the solid electrolyte membrane 11 may be a proton conductor, such as a barium zirconium oxide or a barium cerium oxide, or an oxide ion conductor, such as stabilized zirconia, a lanthanum gallate based oxide, or a ceria based oxide. The proton conductor may contain a dopant, such as ytterbium. In other words, the proton conductor may be a barium zirconium based oxide or a barium cerium based oxide.

The fuel electrode side structural support 14 includes a ceramic member containing an electrolyte material. A material with a small difference in linear expansion coefficient from the solid electrolyte membrane 11 is used in the ceramic member constituting the fuel electrode side structural support 14. The phrase "a small difference in linear expansion coefficient" means that the difference in linear expansion coefficient from the solid electrolyte membrane 11 is preferably 2 x 10⁻⁶ K⁻¹ or less, for example. The difference in linear expansion coefficient can be decreased to decrease the change in shape of a cell.

The ceramic member may be a dense material. The dense material has a relative density of 85% or more measured using Archimedes' principle or by a mercury intrusion method, for example. The dense material can improve the cell strength.

Thus, the fuel electrode 12 including the fuel electrode side structural support 14 can support the structure of the membrane electrode assembly 10 and can have a smaller difference in thermal expansion coefficient from the solid electrolyte membrane 11. This can reduce the occurrence of bending in the membrane electrode assembly 10 in the operating environment.

The hydrogen-containing gas may be hydrogen or may be, for example, a reformed gas produced by reforming of methane gas or hydrogen gas containing steam produced by electrolysis of water.

As illustrated in Fig. 2, the fuel electrode side pore 13 has a first fuel electrode side opening 16a into which the hydrogen-containing gas flows formed on the first fuel electrode side boundary surface 17 in contact with the hydrogen-containing gas in the fuel electrode side structural support 14, and a second fuel electrode side opening 16b at an end of the fuel electrode side pore 13 on the solid electrolyte membrane 11 side opposite the first fuel electrode side opening 16a. In the example of Fig. 2, the second fuel electrode side opening 16b is located on a second fuel electrode side boundary surface 18 in contact with the solid electrolyte membrane 11 in the fuel electrode side structural support 14.

Thus, a gas passage (not shown) through which the hydrogen-containing gas flows is located on the first fuel electrode side boundary surface 17 on which the first fuel electrode side opening 16a of the fuel electrode side pore 13 is located, and the hydrogen-containing gas flowing through the gas passage flows into the fuel electrode side pore 13 through the first fuel electrode side opening 16a. The fuel electrode side pore 13 is filled with the fuel electrode side filler 15 described later, and hydrogen is oxidized into a proton and an electron on the surface of the fuel electrode side filler 15. The protons move from the fuel electrode 12 to the solid electrolyte membrane 11 through the second fuel electrode side opening 16b. The electrons move through the fuel electrode side pore 13 and are taken out of the fuel electrode 12.

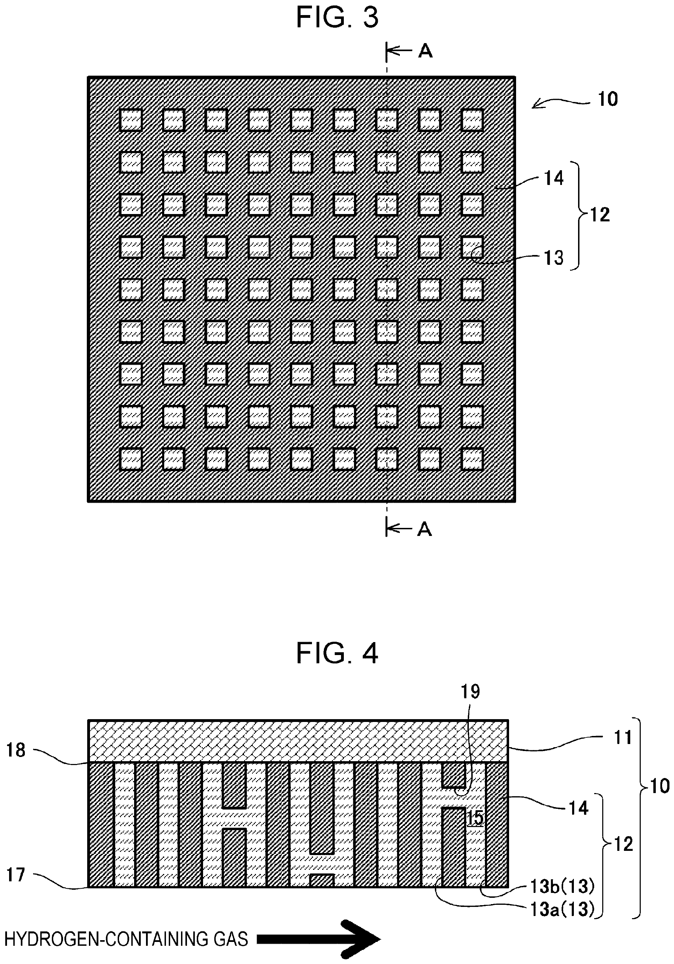

The opening shape of the fuel electrode side pore 13 may be round as illustrated in Fig. 1 or square as illustrated in Fig. 3. The fuel electrode side pore 13 may have any opening shape. A round opening is preferred from the perspective of the strength of the fuel electrode side structural support 14. Fig. 3 illustrates a modified example of the membrane electrode assembly 10 illustrated in Fig. 1.

The arrangement pattern of the fuel electrode side pores 13 may be a parallel pattern in which the fuel electrode side pores 13 are arranged in parallel, as illustrated in Fig. 1 or 3, or may be a zigzag pattern in which the fuel electrode side pores 13 are staggered. Alternatively, the fuel electrode side pores 13 may be randomly arranged. The fuel electrode side pore 13 may have any shape and arrangement pattern, provided that the fuel electrode side structural support 14 can retain sufficient strength and the fuel electrode side filler 15 in the fuel electrode side pore 13 can provide required hydrogen oxidation activity and electrical conductivity.

The round fuel electrode side pore 13 may have an opening diameter in the range of 0.01 to 1 mm, and the square fuel electrode side pore 13 may have a side length in the range of 0.01 to 1 mm. The ratio of the area occupied by the fuel electrode side pores 13 on the main surface of the fuel electrode 12 (that is, the first fuel electrode side boundary surface 17 or the second fuel electrode side boundary surface 18) may be 50% or less, desirably 30% or less, of the entire main surface of the fuel electrode 12. A large area occupied by the fuel electrode side pores 13 on the main surface of the fuel electrode 12 results in improved power generation performance. However, it causes larger bending in the fuel electrode 12.

The fuel electrode side filler 15 in the fuel electrode side pore 13 can promote the oxidation of hydrogen and ensure electrical conductivity. The fuel electrode side filler 15 may be composed of at least one material with hydrogen oxidation activity and electrical conductivity. For example, the fuel electrode side filler 15 may be composed of a material with hydrogen oxidation activity and electrical conductivity. Alternatively, the fuel electrode side filler 15 may be composed of a combination of a material with hydrogen oxidation activity and a material with electrical conductivity. Alternatively, the fuel electrode side filler 15 may be composed of a compound consisting of a plurality of materials to have hydrogen oxidation activity and electrical conductivity.

Examples of the material with hydrogen oxidation activity and electrical conductivity include Ni, Pt, Pd, and Ir. The fuel electrode side filler 15 may desirably be a compound containing Ni. Ni is a material with high hydrogen oxidation activity and electrical conductivity, for example, for use in fuel electrodes of electrochemical devices, such as solid oxide fuel cells.

The fuel electrode side filler 15 may be a cermet. The cermet is a mixture of a metal and a ceramic material and is, for example, a cermet composed of Ni as a metal and a proton conductor, such as a barium zirconium oxide or a barium cerium oxide, or an oxide ion conductor, such as stabilized zirconia, a lanthanum gallate based oxide, or a ceria based oxide, as a ceramic material. The proton conductor may contain a dopant, such as ytterbium. In other words, the proton conductor may be a barium zirconium based oxide or a barium cerium based oxide. When the cermet is a mixture of Ni and an electrolyte material, the hydrogen oxidation activity can be improved due to an increased number of reaction fields for hydrogen oxidation.

The fuel electrode side filler 15 may be a porous material containing Ni. The porous material has a porosity of 20% or more measured using Archimedes' principle or by a mercury intrusion method, for example. The fuel electrode side filler 15 formed of a porous material can increase the supply of the hydrogen-containing gas involved in hydrogen oxidation and improve hydrogen oxidation activity.

### (Modified Example 1)

Next, a membrane electrode assembly 10 according to a modified example 1 of the first embodiment of the present disclosure is described with reference to Fig. 4. Fig. 4 is a schematic view of an example of a cross section of the membrane electrode assembly 10 according to the modified example 1 of the first embodiment of the present disclosure. The cross-section of the membrane electrode assembly 10 in Fig. 4 also has a cross-sectional structure taken along the line A-A of the membrane electrode assembly 10 illustrated in Fig. 1.

The membrane electrode assembly 10 according to the modified example 1 of the first embodiment is the same as the membrane electrode assembly 10 according to the first embodiment in that the membrane electrode assembly 10 according to the modified example 1 includes the solid electrolyte membrane 11 and the fuel electrode 12, and the fuel electrode 12 includes the fuel electrode side structural support 14 and the fuel electrode side pore 13 filled with the fuel electrode side filler 15. Thus, detailed description of these common members is omitted.

As illustrated in Fig. 4, however, the membrane electrode assembly 10 according to the modified example 1 of the first embodiment is different from the membrane electrode assembly 10 according to the first embodiment in that the fuel electrode 12 further includes a fuel electrode side communication path 19 for communication between the fuel electrode side pores 13 (for example, a first fuel electrode side pore 13a and a second fuel electrode side pore 13b).

More specifically, the membrane electrode assembly 10 includes at least one fuel electrode side communication path 19 for communication between the first fuel electrode side pore 13a and the second fuel electrode side pore 13b. This structure can increase the number of paths through which the hydrogen-containing gas can flow in the membrane electrode assembly 10 according to the modified example 1 of the first embodiment. This can further enhance hydrogen oxidation activity and electrical conductivity. Even if a failure in the path of the first fuel electrode side pore 13a or the second fuel electrode side pore 13b disrupts the flow of the hydrogen-containing gas, the hydrogen-containing gas can flow by another route through the fuel electrode side communication path 19. Thus, the fuel electrode 12 can retain hydrogen oxidation activity and electrical conductivity.

Although the fuel electrode side communication path 19 is filled with the fuel electrode side filler 15 in Fig. 4, the fuel electrode side communication path 19 is not necessarily filled with the fuel electrode side filler 15, provided that the flow path of the hydrogen-containing gas is provided. As illustrated in Fig. 4, the fuel electrode side filler 15 in the fuel electrode side communication path 19 is suitable to improve hydrogen oxidation activity and electrical conductivity.

### (Modified Example 2)

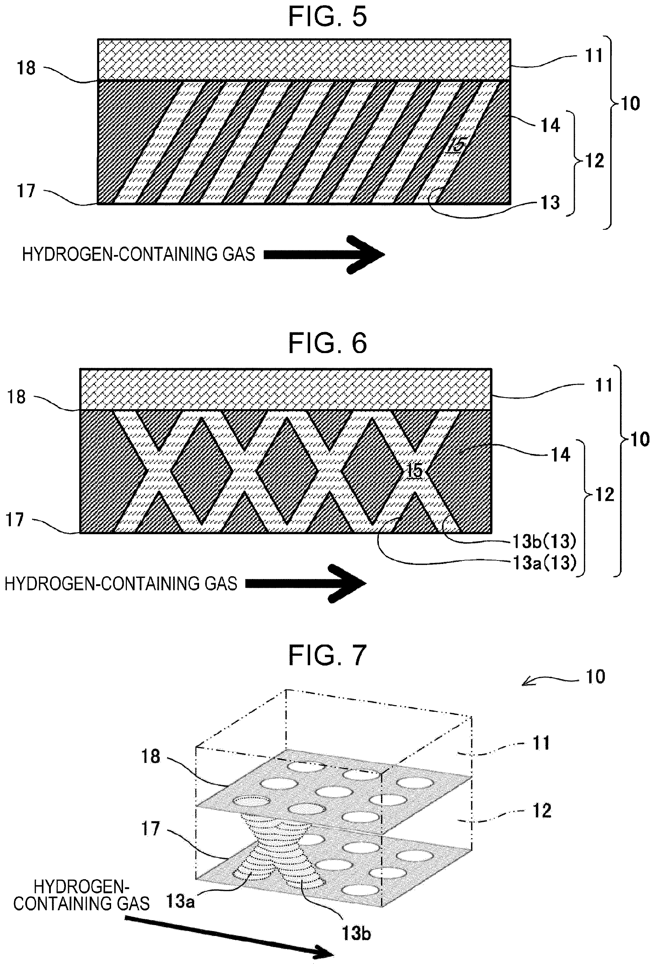

Next, a membrane electrode assembly 10 according to a modified example 2 of the first embodiment of the present disclosure is described with reference to Fig. 5. Fig. 5 is a schematic view of an example of a cross section of the membrane electrode assembly 10 according to the modified example 2 of the first embodiment of the present disclosure. The cross-section of the membrane electrode assembly 10 in Fig. 5 also has a cross-sectional structure taken along the line A-A of the membrane electrode assembly 10 illustrated in Fig. 1.

The membrane electrode assembly 10 according to the modified example 2 of the first embodiment is the same as the membrane electrode assembly 10 according to the first embodiment in that the membrane electrode assembly 10 according to the modified example 2 includes the solid electrolyte membrane 11 and the fuel electrode 12, and the fuel electrode 12 includes the fuel electrode side structural support 14 and the fuel electrode side pore 13 filled with the fuel electrode side filler 15. Thus, detailed description of these common members is omitted.

As illustrated in Fig. 5, however, the fuel electrode side pore 13 of the membrane electrode assembly 10 according to the modified example 2 of the first embodiment extends in a different direction from the fuel electrode side pore 13 of the membrane electrode assembly 10 according to the first embodiment. More specifically, in the fuel electrode side structural support 14 of the membrane electrode assembly 10 according to the first embodiment, the fuel electrode side pore 13 extends from the side in contact with the hydrogen-containing gas (that is, the first fuel electrode side boundary surface 17) to the solid electrolyte membrane 11 side (that is, the second fuel electrode side boundary surface 18) perpendicularly to the main surface of the fuel electrode 12 (that is, the first fuel electrode side boundary surface 17 or the second fuel electrode side boundary surface 18). On the other hand, in the fuel electrode side structural support 14 of the membrane electrode assembly 10 according to the modified example 2 of the first embodiment, the fuel electrode side pores 13 extend obliquely from the first fuel electrode side boundary surface 17 to the second fuel electrode side boundary surface 18 at an acute angle with respect to the main surface of the fuel electrode 12. In other words, the fuel electrode side pores 13 tilt with respect to the main surface of the fuel electrode 12 toward the downstream side in the flow direction of the hydrogen-containing gas.

This structure can improve the flow distribution of the hydrogen-containing gas flowing into the fuel electrode side pores 13 and flowing through the fuel electrode side pores 13. Thus, the membrane electrode assembly 10 according to the modified example 2 of the first embodiment can increase the supply of the hydrogen-containing gas and thereby improve hydrogen oxidation activity.

### (Modified Example 3)

Next, the structure of a membrane electrode assembly 10 according to a modified example 3 of the first embodiment of the present disclosure is described with reference to Figs. 6 and 7. Fig. 6 is a schematic view of an example of a cross section of the membrane electrode assembly 10 according to the modified example 3 of the first embodiment of the present disclosure. The cross-section of the membrane electrode assembly 10 in Fig. 6 also has a cross-sectional structure taken along the line A-A of the membrane electrode assembly 10 illustrated in Fig. 1. Fig. 7 is a schematic perspective view of the positional relationship between a first fuel electrode side pore 13a and a second fuel electrode side pore 13b in a fuel electrode 12 of the membrane electrode assembly 10 illustrated in Fig. 6.

The membrane electrode assembly 10 according to the modified example 3 of the first embodiment is the same as the membrane electrode assembly 10 according to the first embodiment in that the membrane electrode assembly 10 according to the modified example 3 includes the solid electrolyte membrane 11 and the fuel electrode 12, and the fuel electrode 12 includes the fuel electrode side structural support 14 and the fuel electrode side pore 13 filled with the fuel electrode side filler 15. Thus, detailed description of these common members is omitted.

As illustrated in Figs. 6 and 7, however, the fuel electrode side pore 13 of the membrane electrode assembly 10 according to the modified example 3 of the first embodiment extends in a different direction from the fuel electrode side pore 13 of the membrane electrode assembly 10 according to the first embodiment. More specifically, in the fuel electrode side structural support 14 of the membrane electrode assembly 10 according to the first embodiment, the fuel electrode side pore 13 extends from the side in contact with the hydrogen-containing gas (that is, the first fuel electrode side boundary surface 17) to the solid electrolyte membrane 11 side (that is, the second fuel electrode side boundary surface 18) perpendicularly to the main surface of the fuel electrode 12 (that is, the first fuel electrode side boundary surface 17 or the second fuel electrode side boundary surface 18). On the other hand, as illustrated in Figs. 6 and 7, in the fuel electrode side structural support 14 of the membrane electrode assembly 10 according to the modified example 3 of the first embodiment, the first fuel electrode side pore 13a crosses and communicates with the second fuel electrode side pore 13b. This arrangement is repeated to form a three-dimensional network, and the fuel electrode side pores 13 extend from the first fuel electrode side boundary surface 17 to the second fuel electrode side boundary surface 18.

In Figs. 6 and 7, the first fuel electrode side pore 13a crosses the second fuel electrode side pore 13b. Furthermore, another fuel electrode side pore 13 may be arranged to cross the first fuel electrode side pore 13a and the second fuel electrode side pore 13b.

In this structure, the first fuel electrode side pore 13a and the second fuel electrode side pore 13b can communicate with each other and form a network structure. This can promote the flow of the hydrogen-containing gas and improve hydrogen oxidation activity. This also enables the fuel electrode side filler 15 to be densely filled and can improve electrical conductivity.

### (Modified Example 4)

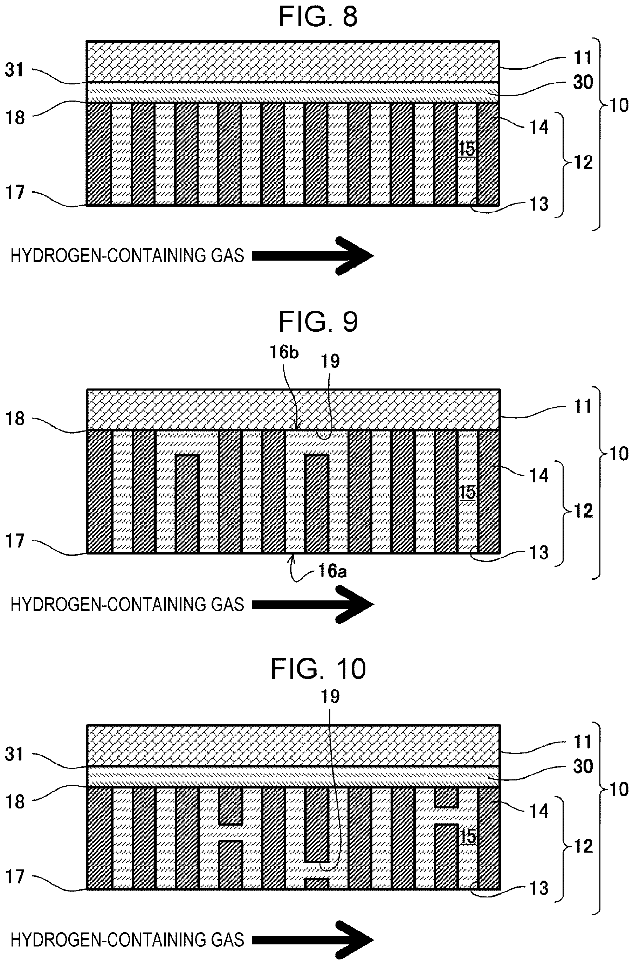

Next, a membrane electrode assembly 10 according to a modified example 4 of the first embodiment of the present disclosure is described with reference to Fig. 8. Fig. 8 is a schematic view of an example of a cross section of the membrane electrode assembly 10 according to the modified example 4 of the first embodiment of the present disclosure. The cross-section of the membrane electrode assembly 10 in Fig. 8 also has a cross-sectional structure taken along the line A-A of the membrane electrode assembly 10 illustrated in Fig. 1.

The membrane electrode assembly 10 according to the modified example 4 of the first embodiment is the same as the membrane electrode assembly 10 according to the first embodiment in that the membrane electrode assembly 10 according to the modified example 4 includes the solid electrolyte membrane 11 and the fuel electrode 12, and the fuel electrode 12 includes the fuel electrode side structural support 14 and the fuel electrode side pore 13 filled with the fuel electrode side filler 15. Thus, detailed description of these common members is omitted.

As illustrated in Fig. 8, however, the membrane electrode assembly 10 according to the modified example 4 of the first embodiment is different from the membrane electrode assembly 10 according to the first embodiment in that a fuel electrode side functional layer 30 is formed between the solid electrolyte membrane 11 and the fuel electrode 12.

The fuel electrode side functional layer 30 is formed of a material with hydrogen oxidation activity and electrical conductivity like the fuel electrode side filler 15. The fuel electrode side functional layer 30 is in contact with the fuel electrode 12 on the second fuel electrode side boundary surface 18 and is in contact with the solid electrolyte membrane 11 on a third fuel electrode side boundary surface 31. The fuel electrode side functional layer 30 may be formed of the same material as or a different material from the fuel electrode side filler 15.

This structure can increase the number of reaction fields near the solid electrolyte membrane 11 in which a hydrogen oxidation reaction occurs. This can improve hydrogen oxidation activity.

Although the fuel electrode side pores 13 of the membrane electrode assembly 10 extend perpendicularly to the main surface of the fuel electrode 12 in Fig. 8, the present disclosure is not limited to this structure. For example, as in the membrane electrode assembly 10 according to the modified example 2 of the first embodiment, the fuel electrode side pores 13 may extend obliquely at an acute angle with respect to the main surface of the fuel electrode 12. Alternatively, as in the membrane electrode assembly 10 according to the modified example 3 of the first embodiment, the fuel electrode side pores 13 may cross and form a three-dimensional network.

### (Modified Example 5)

Next, a membrane electrode assembly 10 according to a modified example 5 of the first embodiment of the present disclosure is described with reference to Fig. 9. Fig. 9 is a schematic view of an example of a cross section of the membrane electrode assembly 10 according to the modified example 5 of the first embodiment of the present disclosure. The cross-section of the membrane electrode assembly 10 in Fig. 9 also has a cross-sectional structure taken along the line A-A of the membrane electrode assembly 10 illustrated in Fig. 1.

The membrane electrode assembly 10 according to the modified example 5 of the first embodiment is the same as the membrane electrode assembly 10 according to the first embodiment in that the membrane electrode assembly 10 according to the modified example 5 includes the solid electrolyte membrane 11 and the fuel electrode 12, and the fuel electrode 12 includes the fuel electrode side structural support 14 and the fuel electrode side pore 13 filled with the fuel electrode side filler 15. Thus, detailed description of these common members is omitted.

As illustrated in Fig. 9, however, the membrane electrode assembly 10 according to the modified example 5 of the first embodiment is different from the membrane electrode assembly 10 according to the first embodiment in that the membrane electrode assembly 10 according to the modified example 5 includes a fuel electrode side communication path 19 and the fuel electrode side communication path 19 is located along the second fuel electrode side boundary surface 18. The fuel electrode side communication path 19 is the same as the fuel electrode side communication path 19 of the membrane electrode assembly 10 according to the modified example 1 of the first embodiment and is therefore not described in detail here.

As illustrated in Fig. 9, the fuel electrode side communication path 19 is located along the second fuel electrode side boundary surface 18 between the solid electrolyte membrane 11 and the fuel electrode 12 and is filled with the fuel electrode side filler 15. A wall surface of the fuel electrode side communication path 19 on the second fuel electrode side boundary surface 18 side is opened and forms a second fuel electrode side opening 16b. This can increase the contact area between the solid electrolyte membrane 11 and the fuel electrode side filler 15 as compared with a structure in which the fuel electrode side communication path 19 is not formed along the second fuel electrode side boundary surface 18. This can increase the number of reaction fields near the solid electrolyte membrane 11 in which a hydrogen oxidation reaction occurs and improve hydrogen oxidation activity.

### (Modified Example 6)

Next, a membrane electrode assembly 10 according to a modified example 5 of the first embodiment of the present disclosure is described with reference to Fig. 10. Fig. 10 is a schematic view of an example of a cross section of the membrane electrode assembly 10 according to the modified example 6 of the first embodiment of the present disclosure. The cross-section of the membrane electrode assembly 10 in Fig. 10 also has a cross-sectional structure taken along the line A-A of the membrane electrode assembly 10 illustrated in Fig. 1.

The membrane electrode assembly 10 according to the modified example 6 of the first embodiment is the same as the membrane electrode assembly 10 according to the first embodiment in that the membrane electrode assembly 10 according to the modified example 6 includes the solid electrolyte membrane 11 and the fuel electrode 12, and the fuel electrode 12 includes the fuel electrode side structural support 14 and the fuel electrode side pore 13 filled with the fuel electrode side filler 15. Thus, detailed description of these common members is omitted.

As illustrated in Fig. 10, however, the membrane electrode assembly 10 according to the modified example 6 of the first embodiment is different from the membrane electrode assembly 10 according to the first embodiment in that the fuel electrode 12 has a fuel electrode side communication path 19 for communication between the fuel electrode side pores 13 and further includes a fuel electrode side functional layer 30 between the solid electrolyte membrane 11 and the fuel electrode 12. In other words, the membrane electrode assembly 10 according to the modified example 6 of the first embodiment is a combination of the membrane electrode assembly 10 according to the modified example 1 of the first embodiment and the membrane electrode assembly 10 according to the modified example 4 of the first embodiment. The fuel electrode side communication path 19, which is described in the modified example 1 of the first embodiment, and the fuel electrode side functional layer 30, which is described in the modified example 4 of the first embodiment, are not described in detail here.

As illustrated in Fig. 10, the membrane electrode assembly 10 according to the modified example 6 of the first embodiment includes the fuel electrode side functional layer 30, which can increase the number of reaction fields near the solid electrolyte membrane 11 in which a hydrogen oxidation reaction occurs. This can improve hydrogen oxidation activity. Furthermore, the fuel electrode side communication path 19 can increase the number of paths through which the hydrogen-containing gas can flow. This can further enhance hydrogen oxidation activity and electrical conductivity. Even if a failure in the path of the fuel electrode side pores 13 disrupts the flow of the hydrogen-containing gas, the hydrogen-containing gas can flow by another route through the fuel electrode side communication path 19. Thus, the fuel electrode 12 can retain hydrogen oxidation activity and electrical conductivity.

### (Second Embodiment)

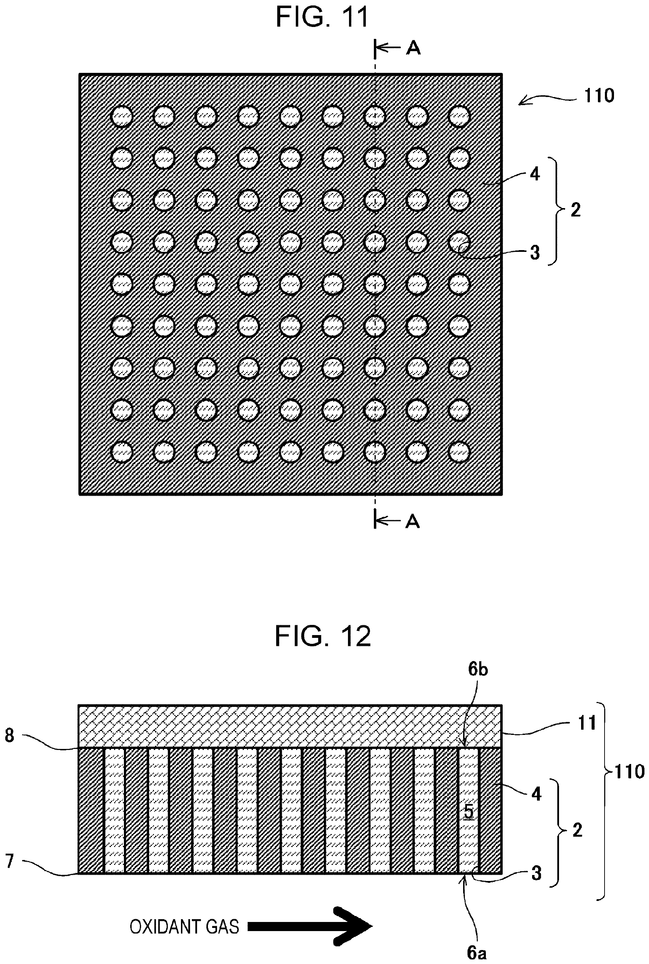

A membrane electrode assembly 110 according to a second embodiment is described below with reference to Figs. 11 and 12. Fig. 11 is a plan view of the membrane electrode assembly 110 according to the second embodiment of the present disclosure viewed from a surface in contact with an oxidant gas (that is, a first air electrode side boundary surface 7 in Fig. 12). Fig. 12 is a schematic view of an example of an A-A cross section of the membrane electrode assembly 110 illustrated in Fig. 11.

As illustrated in Figs. 11 and 12, the membrane electrode assembly 110 includes a solid electrolyte membrane 11 containing an electrolyte material and an air electrode 2 in contact with the oxidant gas. The membrane electrode assembly 110 is a member for use in an electrochemical device, for example, and includes a stack of the solid electrolyte membrane 11 and the air electrode 2, as illustrated in Fig. 11.

The air electrode 2 includes an air electrode side structural support 4 including a ceramic member and an air electrode side pore 3, which extends from the first air electrode side boundary surface 7 (hereinafter sometimes referred to as a boundary surface) in contact with the oxidant gas in the air electrode side structural support 4 to the solid electrolyte membrane 11 and is filled with an air electrode side filler 5 with oxygen reduction activity and electrical conductivity. The air electrode side structural support 4 supports the structure of the membrane electrode assembly 10. As illustrated in Fig. 12, the air electrode side pore 3 extends linearly from the first air electrode side boundary surface 7 to the solid electrolyte membrane 11.

The electrolyte material in the solid electrolyte membrane 11 may be a proton conductor, such as a barium zirconium oxide or a barium cerium oxide, or an oxide ion conductor, such as stabilized zirconia, a lanthanum gallate based oxide, or a ceria based oxide. The proton conductor may contain a dopant, such as ytterbium. In other words, the proton conductor may be a barium zirconium based oxide or a barium cerium based oxide.

The air electrode side structural support 4 includes a ceramic member containing an electrolyte material. A material with a small difference in linear expansion coefficient from the solid electrolyte membrane 11 is used in the ceramic member constituting the air electrode side structural support 4. The phrase "a small difference in linear expansion coefficient" means that the difference in linear expansion coefficient from the solid electrolyte membrane 11 is preferably 2 x 10⁻⁶ K⁻¹ or less, for example. The difference in linear expansion coefficient can be decreased to decrease the change in shape of a cell.

The ceramic member may be a dense material. The dense material has a relative density of 85% or more measured using Archimedes' principle or by a mercury intrusion method, for example. The dense material can improve the cell strength.

Thus, the air electrode 2 including the air electrode side structural support 4 can support the structure of the membrane electrode assembly 110 and can have a smaller difference in thermal expansion coefficient from the solid electrolyte membrane 11. This can reduce the occurrence of bending in the membrane electrode assembly 110 in the operating environment.

The oxidant gas may be oxygen or a gas containing oxygen, for example, air.

As illustrated in Fig. 12, the air electrode side pore 3 has a first air electrode side opening 6a into which the oxidant gas flows formed on the first air electrode side boundary surface 7 in contact with the oxidant gas in the air electrode side structural support 4, and a second air electrode side opening 6b at an end of the air electrode side pore 3 on the solid electrolyte membrane 11 side opposite the first air electrode side opening 6a. In the example of Fig. 12, the second air electrode side opening 6b is located on a second air electrode side boundary surface 8 in contact with the solid electrolyte membrane 11 in the air electrode side structural support 4.

Thus, a gas passage (not shown) through which the oxygen-containing gas flows is located on the first air electrode side boundary surface 7 on which the first air electrode side opening 6a of the air electrode side pore 3 is located, and the oxidant gas (for example, oxygen) flowing through the gas passage flows into the air electrode side pore 3 through the first air electrode side opening 6a. The air electrode side pore 3 is filled with the air electrode side filler 5. Thus, water is produced from oxygen that has been reduced on the surface of the air electrode side filler 5 and transferred near the second air electrode side opening 6b, protons that have passed through the solid electrolyte membrane 11, and electrons that have reached the air electrode 2 via an external circuit (not shown).

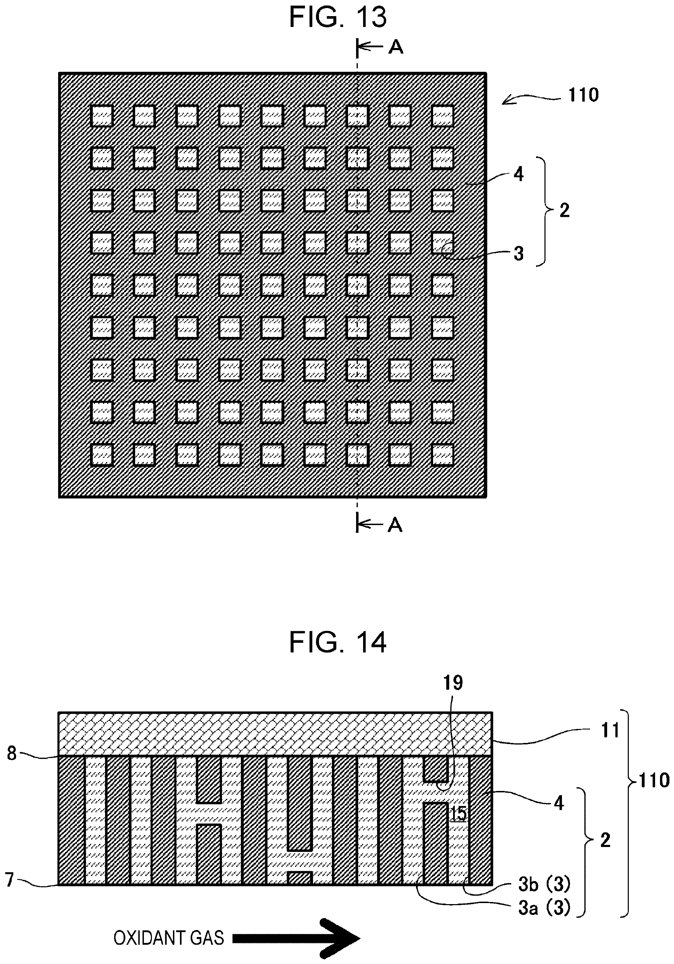

The opening shape of the air electrode side pore 3 may be round as illustrated in Fig. 11 or square as illustrated in Fig. 13. The air electrode side pore 3 may have any opening shape. A round opening is preferred from the perspective of the strength of the air electrode side structural support 4. Fig. 13 is a schematic view of a modified example of the membrane electrode assembly 10 illustrated in Fig. 11.

The arrangement pattern of the air electrode side pores 3 may be a parallel pattern in which the air electrode side pores 3 are arranged in parallel, as illustrated in Fig. 11 or 13, or may be a zigzag pattern in which the air electrode side pores 3 are staggered. Alternatively, the air electrode side pores 3 may be randomly arranged. The air electrode side pore 3 may have any shape and arrangement pattern, provided that the air electrode side structural support 4 can retain sufficient strength and the air electrode side filler 5 in the air electrode side pore 3 can provide required oxygen reduction activity and electrical conductivity.

The round air electrode side pore 3 may have an opening diameter in the range of 0.01 to 1 mm, and the square air electrode side pore 3 may have a side length in the range of 0.01 to 1 mm. The ratio of the area occupied by the air electrode side pores 3 on the main surface of the air electrode 2 (that is, the first air electrode side boundary surface 7 or the second air electrode side boundary surface 8) may be 50% or less, desirably 30% or less, of the entire main surface of the air electrode 2. A large area occupied by the air electrode side pores 3 on the main surface of the air electrode 2 results in improved power generation performance. However, it causes larger bending in the air electrode 2.

The air electrode side filler 5 in the air electrode side pore 3 can promote the reduction of oxygen and ensure electrical conductivity. The air electrode side filler 5 may be composed of at least one material with oxygen reduction activity and electrical conductivity. For example, the air electrode side filler 5 may be composed of a material with oxygen reduction activity and electrical conductivity. Alternatively, the air electrode side filler 5 may be composed of a combination of a material with oxygen reduction activity and a material with electrical conductivity. Alternatively, the air electrode side filler 5 may be composed of a compound consisting of a plurality of materials to have oxygen reduction activity and electrical conductivity.

The material with oxygen reduction activity and electrical conductivity constituting the air electrode side filler 5 may be a compound containing at least one element selected from the group consisting of Mn, Fe, Co, and Ni. More specifically, for example, the material may be a lanthanum strontium cobalt iron composite oxide (LSCF), a lanthanum strontium cobalt composite oxide (LSC), a lanthanum strontium iron composite oxide (LSF), a lanthanum strontium manganese composite oxide (LSM), a barium strontium cobalt iron composite oxide (BSCF), a samarium strontium cobalt composite oxide (SSC), a lanthanum nickel iron composite oxide, a lanthanum nickel composite oxide, or a barium gadolinium lanthanum cobalt composite oxide.

The material with oxygen reduction activity and electrical conductivity is desirably a lanthanum strontium cobalt iron composite oxide. Lanthanum strontium cobalt iron composite oxides are materials with high oxygen reduction activity and electrical conductivity, for example, for use in air electrodes of electrochemical devices, such as solid oxide fuel cells.

The air electrode side filler 5 may be composed of a mixture of materials with either oxygen reduction or electrical conductivity. In such a structure, for example, a lanthanum strontium cobalt iron composite oxide may be used as an oxygen reducing material, and a lanthanum strontium manganese composite oxide may be used as an electrically conductive material.

Furthermore, the air electrode side filler 5 may be a porous material of an oxide containing at least one element selected from the group consisting of Mn, Fe, Co, and Ni. The porous material has a porosity of 20% or more measured using Archimedes' principle or by a mercury intrusion method, for example. The air electrode side filler 5 formed of a porous material can increase the supply of the oxidant gas involved in oxygen reduction and improve oxygen reduction activity.

### (Modified Example 1)

Next, a membrane electrode assembly 110 according to a modified example 1 of the second embodiment of the present disclosure is described with reference to Fig. 14. Fig. 14 is a schematic view of an example of a cross section of the membrane electrode assembly 110 according to the modified example 1 of the second embodiment of the present disclosure. The cross-section of the membrane electrode assembly 110 in Fig. 14 also has a cross-sectional structure taken along the line A-A of the membrane electrode assembly 110 illustrated in Fig. 11.

The membrane electrode assembly 110 according to the modified example 1 of the second embodiment is the same as the membrane electrode assembly 110 according to the second embodiment in that the membrane electrode assembly 110 according to the modified example 1 includes the solid electrolyte membrane 11 and the air electrode 2, and the air electrode 2 includes the air electrode side structural support 4 and the air electrode side pore 3 filled with the air electrode side filler 5. Thus, detailed description of these common members is omitted.

As illustrated in Fig. 14, however, the membrane electrode assembly 110 according to the modified example 1 of the second embodiment is different from the membrane electrode assembly 110 according to the second embodiment in that the air electrode 2 further includes an air electrode side communication path 9 for communication between the air electrode side pores 3 (that is, a first air electrode side pore 3a and a second air electrode side pore 3b).

More specifically, the membrane electrode assembly 110 includes at least one air electrode side communication path 9 for communication between the first air electrode side pore 3a and the second air electrode side pore 3b. This structure can increase the number of paths through which the oxidant gas can flow in the membrane electrode assembly 110 according to the modified example 1 of the second embodiment. This can further enhance oxygen reduction activity and electrical conductivity. Even if a failure in the path of the first air electrode side pore 3a or the second air electrode side pore 3b disrupts the flow of the oxidant gas, the oxidant gas can flow by another route through the air electrode side communication path 9. Thus, the air electrode 2 can retain oxygen reduction activity and electrical conductivity.

Although the air electrode side communication path 9 is filled with the air electrode side filler 5 in Fig. 14, the air electrode side communication path 9 is not necessarily filled with the air electrode side filler 5, provided that the flow path of the oxidant gas is provided. As illustrated in Fig. 14, the air electrode side filler 5 in the air electrode side communication path 9 is suitable to improve oxygen reduction activity and electrical conductivity.

### (Modified Example 2)

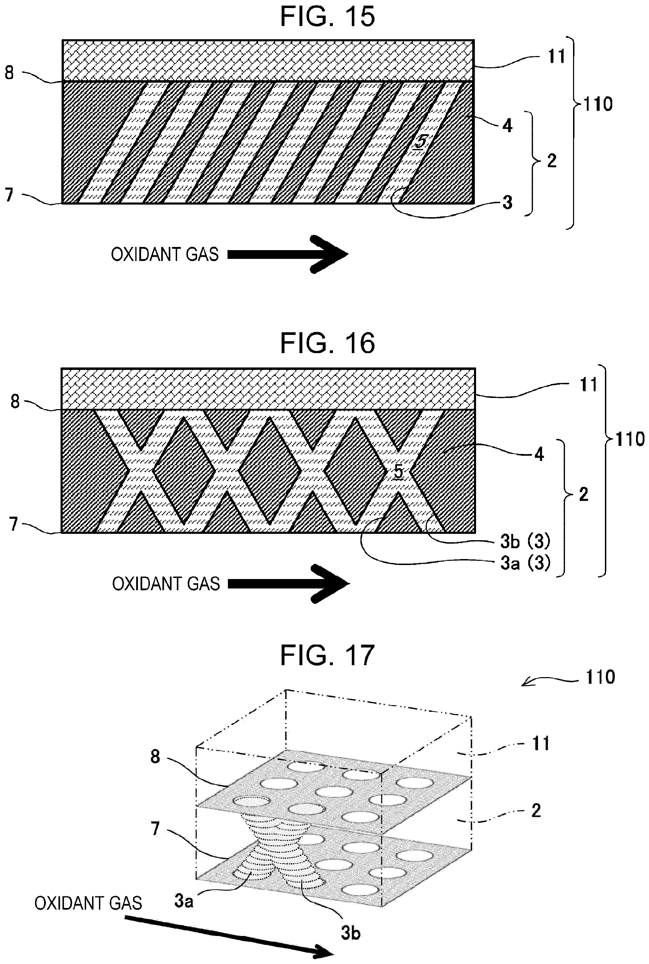

Next, a membrane electrode assembly 110 according to a modified example 2 of the second embodiment of the present disclosure is described with reference to Fig. 15. Fig. 15 is a schematic view of an example of a cross section of the membrane electrode assembly 110 according to the modified example 2 of the second embodiment of the present disclosure. The cross-section of the membrane electrode assembly 110 in Fig. 15 also has a cross-sectional structure taken along the line A-A of the membrane electrode assembly 110 illustrated in Fig. 11.

The membrane electrode assembly 110 according to the modified example 2 of the second embodiment is the same as the membrane electrode assembly 110 according to the second embodiment in that the membrane electrode assembly 110 according to the modified example 2 includes the solid electrolyte membrane 11 and the air electrode 2, and the air electrode 2 includes the air electrode side structural support 4 and the air electrode side pore 3 filled with the air electrode side filler 5. Thus, detailed description of these common members is omitted.

As illustrated in Fig. 15, however, the air electrode side pore 3 of the membrane electrode assembly 110 according to the modified example 2 of the second embodiment extends in a different direction from the air electrode side pore 3 of the membrane electrode assembly 110 according to the second embodiment. More specifically, in the air electrode side structural support 4 of the membrane electrode assembly 110 according to the second embodiment, the air electrode side pore 3 extends from the side in contact with the oxidant gas (that is, the first air electrode side boundary surface 7) to the solid electrolyte membrane 11 side (that is, the second air electrode side boundary surface 8) perpendicularly to the main surface of the air electrode 2 (that is, the first air electrode side boundary surface 7 or the second air electrode side boundary surface 8). On the other hand, in the air electrode side structural support 4 of the membrane electrode assembly 110 according to the modified example 2 of the second embodiment, the air electrode side pores 3 extend obliquely from the first air electrode side boundary surface 7 to the second air electrode side boundary surface 8 at an acute angle with respect to the main surface of the air electrode 2. In other words, the air electrode side pores 3 tilt with respect to the main surface of the air electrode 2 toward the downstream side in the flow direction of the oxidant gas.

This structure can improve the flow distribution of the oxidant gas flowing into the air electrode side pores 3 and flowing through the air electrode side pores 3. Thus, the membrane electrode assembly 110 according to the modified example 2 of the second embodiment can increase the supply of the oxidant gas and thereby improve oxygen reduction activity.

### (Modified Example 3)

Next, a membrane electrode assembly 110 according to a modified example 3 of the second embodiment of the present disclosure is described with reference to Figs. 16 and 17. Fig. 16 is a schematic view of an example of a cross section of the membrane electrode assembly 110 according to the modified example 3 of the second embodiment of the present disclosure. The cross-section of the membrane electrode assembly 110 in Fig. 16 also has a cross-sectional structure taken along the line A-A of the membrane electrode assembly 110 illustrated in Fig. 11. Fig. 17 is a schematic perspective view of the positional relationship between a first air electrode side pore 3a and a second air electrode side pore 3b in an air electrode 2 of the membrane electrode assembly 110 illustrated in Fig. 16.

The membrane electrode assembly 110 according to the modified example 3 of the second embodiment is the same as the membrane electrode assembly 110 according to the second embodiment in that the membrane electrode assembly 110 according to the modified example 3 includes the solid electrolyte membrane 11 and the air electrode 2, and the air electrode 2 includes the air electrode side structural support 4 and the air electrode side pore 3 filled with the air electrode side filler 5. Thus, detailed description of these common members is omitted.

As illustrated in Figs. 16 and 17, however, the air electrode side pore 3 of the membrane electrode assembly 110 according to the modified example 3 of the second embodiment extends in a different direction from the air electrode side pore 3 of the membrane electrode assembly 110 according to the second embodiment. More specifically, in the air electrode side structural support 4 of the membrane electrode assembly 110 according to the second embodiment, the air electrode side pore 3 extends from the side in contact with the oxidant gas (that is, the first air electrode side boundary surface 7) to the solid electrolyte membrane 11 side (that is, the second air electrode side boundary surface 8) perpendicularly to the main surface of the air electrode 2 (that is, the first air electrode side boundary surface 7 or the second air electrode side boundary surface 8). On the other hand, as illustrated in Figs. 16 and 17, in the air electrode side structural support 4 of the membrane electrode assembly 110 according to the modified example 3 of the second embodiment, the first air electrode side pore 3a crosses and communicates with the second air electrode side pore 3b. This arrangement is repeated to form a three-dimensional network, and the air electrode side pores 3 extend from the first air electrode side boundary surface 7 to the second air electrode side boundary surface 8.

In Figs. 16 and 17, the first air electrode side pore 3a crosses the second air electrode side pore 3b. Furthermore, another air electrode side pore 3 may be arranged to cross the first air electrode side pore 3a and the second air electrode side pore 3b.

In this structure, the first air electrode side pore 3a and the second air electrode side pore 3b can communicate with each other and form a network structure. This can promote the flow of the oxidant gas and improve oxygen reduction activity. This also enables the air electrode side filler 5 to be densely filled and can improve electrical conductivity.

### (Modified Example 4)

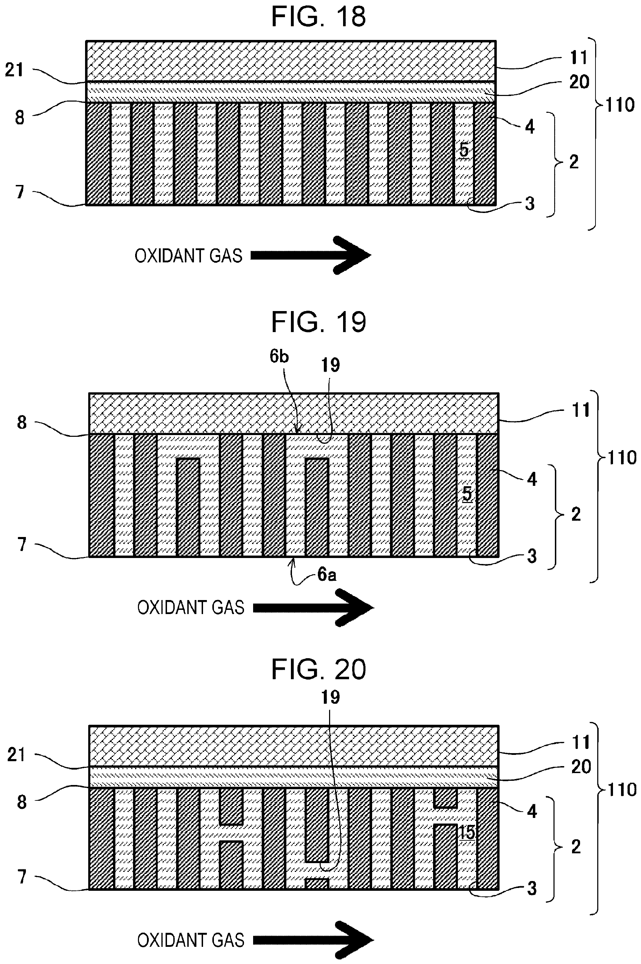

Next, a membrane electrode assembly 110 according to a modified example 4 of the second embodiment of the present disclosure is described with reference to Fig. 18. Fig. 18 is a schematic view of an example of a cross section of the membrane electrode assembly 110 according to the modified example 4 of the second embodiment of the present disclosure. The cross-section of the membrane electrode assembly 110 in Fig. 18 also has a cross-sectional structure taken along the line A-A of the membrane electrode assembly 110 illustrated in Fig. 11.

The membrane electrode assembly 110 according to the modified example 4 of the second embodiment is the same as the membrane electrode assembly 110 according to the second embodiment in that the membrane electrode assembly 110 according to the modified example 4 includes the solid electrolyte membrane 11 and the air electrode 2, and the air electrode 2 includes the air electrode side structural support 4 and the air electrode side pore 3 filled with the air electrode side filler 5. Thus, detailed description of these common members is omitted.

As illustrated in Fig. 18, however, the membrane electrode assembly 110 according to the modified example 4 of the second embodiment is different from the membrane electrode assembly 110 according to the second embodiment in that an air electrode side functional layer 20 is formed between the solid electrolyte membrane 11 and the air electrode 2.

The air electrode side functional layer 20 is formed of a material with oxygen reduction activity and electrical conductivity like the air electrode side filler 5. The air electrode side functional layer 20 is in contact with the air electrode 2 on the second air electrode side boundary surface 8 and is in contact with the solid electrolyte membrane 11 on a third air electrode side boundary surface 21. The air electrode side functional layer 20 may be formed of the same material as or a different material from the air electrode side filler 5.

This structure can increase the number of reaction fields near the solid electrolyte membrane 11 in which an oxygen reduction reaction occurs. This can improve oxygen reduction activity.

Although the air electrode side pores 3 of the membrane electrode assembly 110 extend perpendicularly to the main surface of the air electrode 2 in Fig. 18, the present disclosure is not limited to this structure. For example, as in the membrane electrode assembly 110 according to the modified example 2 of the second embodiment, the air electrode side pores 3 may extend obliquely at an acute angle with respect to the main surface of the air electrode 2. Alternatively, as in the membrane electrode assembly 110 according to the modified example 3 of the second embodiment, the air electrode side pores 3 may cross and form a three-dimensional network.

### (Modified Example 5)

Next, a membrane electrode assembly 110 according to a modified example 5 of the second embodiment of the present disclosure is described with reference to Fig. 19. Fig. 19 is a schematic view of an example of a cross section of the membrane electrode assembly 110 according to the modified example 5 of the second embodiment of the present disclosure. The cross-section of the membrane electrode assembly 110 in Fig. 19 also has a cross-sectional structure taken along the line A-A of the membrane electrode assembly 110 illustrated in Fig. 11.

The membrane electrode assembly 110 according to the modified example 5 of the second embodiment is the same as the membrane electrode assembly 110 according to the second embodiment in that the membrane electrode assembly 110 according to the modified example 5 includes the solid electrolyte membrane 11 and the air electrode 2, and the air electrode 2 includes the air electrode side structural support 4 and the air electrode side pore 3 filled with the air electrode side filler 5. Thus, detailed description of these common members is omitted.

As illustrated in Fig. 19, however, the membrane electrode assembly 110 according to the modified example 5 of the second embodiment is different from the membrane electrode assembly 110 according to the second embodiment in that the membrane electrode assembly 110 according to the modified example 5 includes an air electrode side communication path 9 and the air electrode side communication path 9 is located along the second air electrode side boundary surface 8. The air electrode side communication path 9 is the same as the air electrode side communication path 9 of the membrane electrode assembly 110 according to the modified example 1 of the second embodiment and is therefore not described in detail here.

As illustrated in Fig. 19, the air electrode side communication path 9 is located along the second air electrode side boundary surface 8 between the solid electrolyte membrane 11 and the air electrode 2 and is filled with the air electrode side filler 5. A wall surface of the air electrode side communication path 9 on the second air electrode side boundary surface 8 side is opened and forms a second air electrode side opening 6b. This can increase the contact area between the solid electrolyte membrane 11 and the air electrode side filler 5 as compared with a structure in which the air electrode side communication path 9 is not formed along the second air electrode side boundary surface 8. This can increase the number of reaction fields near the solid electrolyte membrane 11 in which an oxygen reduction reaction occurs and improve oxygen reduction activity.

### (Modified Example 6)

Next, a membrane electrode assembly 110 according to a modified example 6 of the second embodiment of the present disclosure is described with reference to Fig. 20. Fig. 20 is a schematic view of an example of a cross section of the membrane electrode assembly 110 according to the modified example 6 of the second embodiment of the present disclosure. The cross-section of the membrane electrode assembly 110 in Fig. 20 also has a cross-sectional structure taken along the line A-A of the membrane electrode assembly 110 illustrated in Fig. 11.

The membrane electrode assembly 110 according to the modified example 6 of the second embodiment is the same as the membrane electrode assembly 110 according to the second embodiment in that the membrane electrode assembly 110 according to the modified example 6 includes the solid electrolyte membrane 11 and the air electrode 2, and the air electrode 2 includes the air electrode side structural support 4 and the air electrode side pore 3 filled with the air electrode side filler 5. Thus, detailed description of these common members is omitted.

As illustrated in Fig. 20, however, the membrane electrode assembly 110 according to the modified example 6 of the second embodiment is different from the membrane electrode assembly 110 according to the second embodiment in that the air electrode 2 has an air electrode side communication path 9 for communication between the air electrode side pores 3 and further includes an air electrode side functional layer 20 between the solid electrolyte membrane 11 and the air electrode 2. In other words, the membrane electrode assembly 110 according to the modified example 6 of the second embodiment is a combination of the membrane electrode assembly 110 according to the modified example 1 of the second embodiment and the membrane electrode assembly 110 according to the modified example 4 of the second embodiment. The air electrode side communication path 9, which is described in the modified example 1 of the second embodiment, and the air electrode side functional layer 20, which is described in the modified example 4 of the second embodiment, are not described in detail here.

As illustrated in Fig. 20, the membrane electrode assembly 110 according to the modified example 6 of the second embodiment includes the air electrode side functional layer 20, which can increase the number of reaction fields near the solid electrolyte membrane 11 in which an oxygen reduction reaction occurs. This can improve oxygen reduction activity. Furthermore, the air electrode side communication path 9 can increase the number of paths through which the oxidant gas can flow. This can further enhance oxygen reduction activity and electrical conductivity. Even if a failure in the path of the air electrode side pore 3 disrupts the flow of the oxidant gas, the oxidant gas can flow by another route through the air electrode side communication path 9. Thus, the air electrode 2 can retain oxygen reduction activity and electrical conductivity.

### (Third Embodiment)

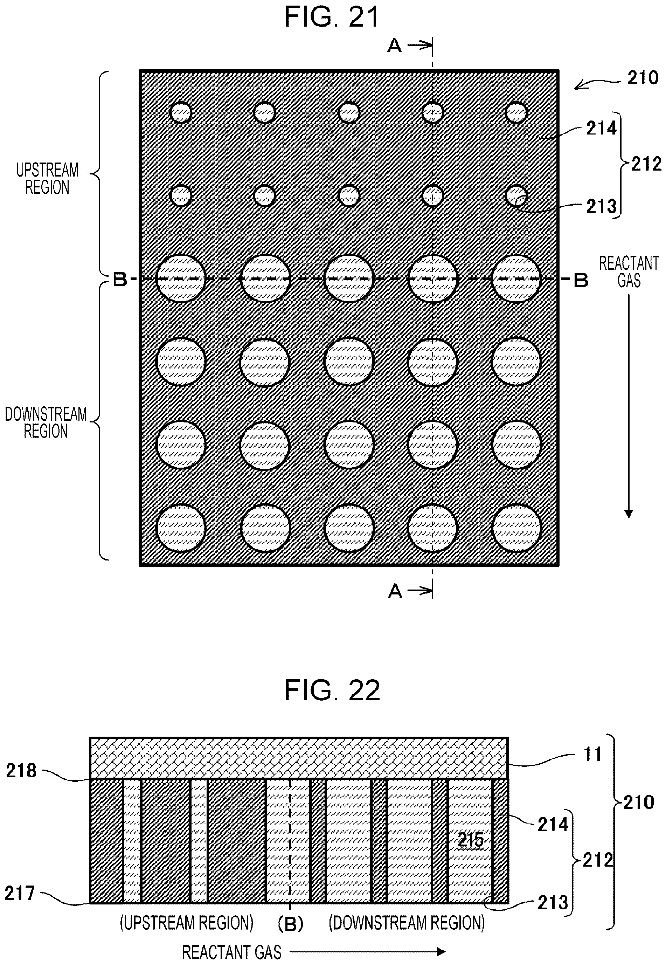

A membrane electrode assembly 210 according to a third embodiment is described below with reference to Figs. 21 and 22. Fig. 21 is a plan view of the membrane electrode assembly 210 according to the third embodiment of the present disclosure viewed from a surface in contact with a reactant gas (that is, a first boundary surface 217 in Fig. 22). Fig. 22 is a cross-sectional view of an A-A cross section schematically illustrating the structure of the membrane electrode assembly 210 illustrated in Fig. 21.

As illustrated in Figs. 21 and 22, the membrane electrode assembly 210 includes a solid electrolyte membrane 11 containing an electrolyte material and an electrode 212 in contact with the reactant gas. The membrane electrode assembly 210 is a member for use in an electrochemical device, for example, and includes a stack of the solid electrolyte membrane 11 and the electrode 212, as illustrated in Fig. 22.

The electrode 212 includes a structural support 214 including a ceramic member and a pore 213, which extends from the first boundary surface 217 (hereinafter sometimes referred to as a boundary surface) in contact with the reactant gas in the structural support 214 to the solid electrolyte membrane 11 and is filled with a filler 215 with oxygen reduction activity and electrical conductivity or a filler 215 with hydrogen oxidation activity and electrical conductivity.

The electrode 212 may be, for example, a fuel electrode or an air electrode of an electrochemical device, such as a fuel cell. When the electrode 212 is a fuel electrode, the reactant gas in contact with the first boundary surface 217 is a hydrogen-containing gas, and the filler 215 has hydrogen oxidation activity and electrical conductivity. The hydrogen-containing gas may be hydrogen or may be, for example, a reformed gas produced by reforming of methane gas or hydrogen gas containing steam produced by electrolysis of water.

When the electrode 212 is an air electrode of an electrochemical device, the reactant gas in contact with the first boundary surface 217 is an oxidant gas, and the filler 215 has oxygen reduction activity and electrical conductivity. The oxidant gas may be oxygen or a gas containing oxygen, for example, air.

The structural support 214 has regions in which the pores 213 have different opening areas per unit area on the first boundary surface 217, and satisfies a relationship of "first area ratio < second area ratio", wherein the first area ratio is the opening area of the pores 213 per unit area of a upstream region (upstream region) in the flow direction of the reactant gas, and the second area ratio is the opening area of the pores 213 per unit area of a downstream region (downstream region). The first area ratio can be calculated by dividing the sum of the opening areas of the pores 213 in the upstream region on the first boundary surface 217 by the area of the upstream region (that is, "the sum of the opening areas of the pores 213 in the upstream region + the area of the structural supports 214 in the upstream region"). The second area ratio can be calculated by dividing the sum of the opening areas of the pores 213 in the downstream region on the first boundary surface 217 by the area of the downstream region (that is, "the sum of the opening areas of the pores 213 in the downstream region + the area of the structural supports 214 in the downstream region"). In Fig. 21, the range of the upstream region and the range of the downstream region are separated by the broken line for convenience. In the following drawings, the range of each region is also indicated by a broken line.

In the membrane electrode assembly 210 according to the third embodiment, the pores 213 are arranged on the first boundary surface 217 so as to satisfy the relationship of "first area ratio < second area ratio". In the membrane electrode assembly 210 according to the third embodiment, as illustrated in Fig. 21, the opening area of each pore 213 in the downstream region on the first boundary surface 217 is larger than the opening area of each pore 213 in the upstream region on the first boundary surface 217. However, the opening area of each pore 213 in the upstream region may be the same as the opening area of each pore 213 in the downstream region, and the number of the pores 213 per unit area in the downstream region may be larger than the number of the pores 213 per unit area in the upstream region. Alternatively, the opening area of each pore 213 and the number of the pores 213 per unit area may be larger in the downstream region than in the upstream region.

The reactant gas moves and diffuses in the electrode 212 through the pores 213. Due to the difference in the movement speed of the reactant gas, a difference in concentration occurs between the upstream region and the downstream region in the reactant gas flow direction in the reaction field formed near the solid electrolyte membrane 11 in the electrode 212. Such a difference in concentration in the reaction field decreases the electromotive force of the electrochemical device. The decrease in the electromotive force due to the diffusion of the reactant gas is referred to as concentration overpotential or diffusion overpotential. In particular, in the membrane electrode assembly 210, the electromotive force is more decreased in the downstream region than in the upstream region in the reactant gas flow direction, which impairs the performance of an electrochemical device including the membrane electrode assembly 210.

Thus, the second area ratio in the downstream region higher than the first area ratio in the upstream region can enhance gas diffusivity in the downstream region of the electrode 212. This can decrease the concentration overpotential in the downstream region in the reactant gas flow direction. This can prevent performance degradation in the downstream region and improve the performance of the electrochemical device.

Furthermore, in the membrane electrode assembly 210 according to the third embodiment, only the number or opening area of the pores 213 in the structural support 214 can be adjusted to satisfy the relationship of first area ratio < second area ratio and enhance the diffusivity of the reactant gas in the downstream region compared with the upstream region.

Although compositions with different porosities may be combined to produce an electrode to enhance the diffusivity of the reactant gas in the downstream region of the membrane electrode assembly, this makes it difficult to produce a membrane electrode assembly as compared with the membrane electrode assembly 210 according to the third embodiment. It also makes it difficult to provide a structure in which the structural support function is independent of the other functions as in the membrane electrode assembly 210 according to the third embodiment.

Although the upstream region and the downstream region are divided by the line B-B perpendicular to the reactant gas flow direction in Fig. 21, the ranges of the upstream region and the downstream region are not limited to these. The first boundary surface 217 can be arbitrarily divided into the upstream region and the downstream region in the reactant gas flow direction. Although the upstream region and the downstream region are divided by the line B-B in Fig. 21, the upstream region is not necessarily in contact with the downstream region. For example, the upstream region may be a specified range extending from an end of the first boundary surface 217 on the upstream side in the reactant gas flow direction to the downstream side in the reactant gas flow direction. Alternatively, the downstream region may be a specified range extending from an end of the first boundary surface 217 on the downstream side in the reactant gas flow direction to the upstream side in the reactant gas flow direction. In other words, the upstream region is a specified range on the upstream side of the first boundary surface 217 in the reactant gas flow direction, and the downstream region is a specified range on the downstream side of the first boundary surface 217 in the reactant gas flow direction. The range of the upstream region does not overlap the range of the downstream region.

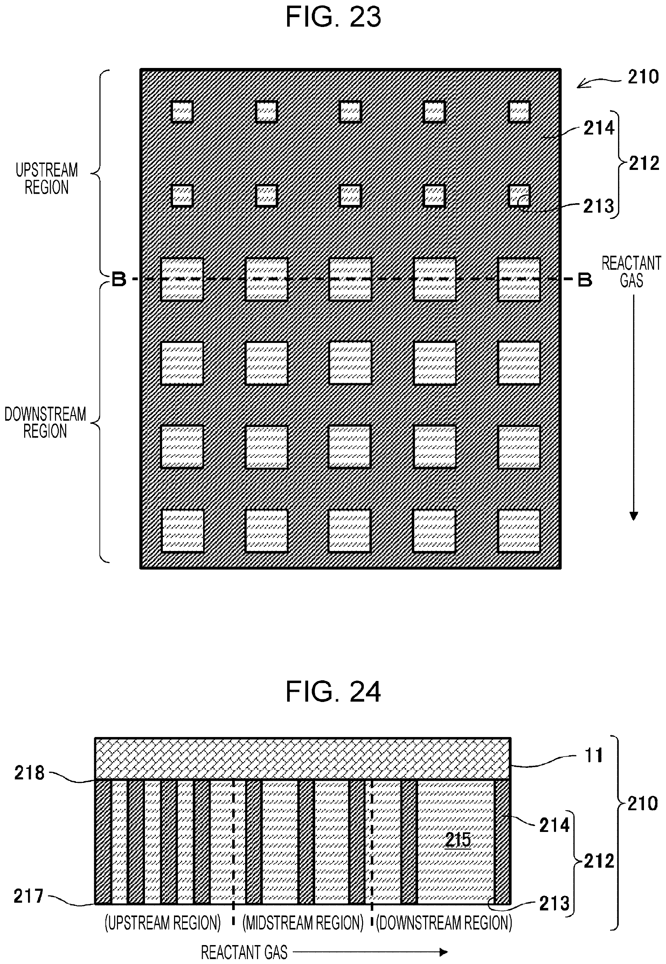

The opening shape of the pore 213 may be round as illustrated in Fig. 21 or square as illustrated in Fig. 23. Although the pore 213 may have any opening shape, a round pore is preferable in terms of the strength of the structural support 214. Fig. 23 illustrates a modified example of the membrane electrode assembly 210 of Fig. 21.

The arrangement pattern of the pores 213 may be a parallel pattern in which the pores 213 are arranged in parallel, as illustrated in Fig. 21 or 23, or may be a zigzag pattern in which the pores 213 are staggered. Alternatively, the pores 213 may be randomly arranged. The pore 213 may have any shape and arrangement pattern, provided that the structural support 214 can retain sufficient strength and the filler 215 in the pore 213 can provide required oxygen reduction activity and electrical conductivity or required hydrogen oxidation activity and electrical conductivity.

The round pore 213 may have an opening diameter in the range of 0.01 to 1 mm, and the square pore may have a side length in the range of 0.01 to 1 mm. The ratio of the area occupied by the pores 213 on the main surface of the electrode 212 (that is, the first boundary surface 217) may be 50% or less, desirably 30% or less, of the entire main surface of the electrode 212. A large occupied area of the pores 213 on the main surface of the electrode 212 results in improved power generation performance but larger bending in the electrode 212.

When the electrode 212 is an air electrode of an electrochemical device, such as a fuel cell, for example, the filler 215 in the pore 213 can promote reduction of oxygen and ensure electrical conductivity. In this case, the filler 215 may be composed of at least one material with oxygen reduction activity and electrical conductivity. For example, the filler 215 may be composed of a material with oxygen reduction activity and electrical conductivity. Alternatively, the filler 215 may be composed of a combination of a material with oxygen reduction activity and a material with electrical conductivity. Alternatively, the filler 215 may be composed of a compound consisting of a plurality of materials to have oxygen reduction activity and electrical conductivity.

The material with oxygen reduction activity and electrical conductivity constituting the filler 215 may be a compound containing at least one element selected from the group consisting of Mn, Fe, Co, and Ni. More specifically, for example, the material may be a lanthanum strontium cobalt iron composite oxide (LSCF), a lanthanum strontium cobalt composite oxide (LSC), a lanthanum strontium iron composite oxide (LSF), a lanthanum strontium manganese composite oxide (LSM), a barium strontium cobalt iron composite oxide (BSCF), a samarium strontium cobalt composite oxide (SSC), a lanthanum nickel iron composite oxide, a lanthanum nickel composite oxide, or a barium gadolinium lanthanum cobalt composite oxide.

The filler 215 may be a composite of an oxide containing at least one selected from the group consisting of Mn, Fe, Co, and Ni and another oxide or a metal. The filler 215 may be composed of a mixture of materials with either oxygen reduction or electrical conductivity. In such a structure, for example, a lanthanum strontium cobalt iron composite oxide may be used as an oxygen reducing material, and a lanthanum strontium manganese composite oxide may be used as an electrically conductive material. The filler 215 may be a porous material of an oxide containing at least one element selected from the group consisting of Mn, Fe, Co, and Ni. The porous material has a porosity of 20% or more measured using Archimedes' principle or by a mercury intrusion method, for example. The filler 215 formed of a porous material can increase the supply of the oxidant gas involved in oxygen reduction and improve oxygen reduction activity.

When the electrode 212 is a fuel electrode of an electrochemical device, such as a fuel cell, for example, the filler 215 in the pore 213 can promote oxidation of hydrogen and ensure electrical conductivity. In this case, the filler 215 may be composed of at least one material with hydrogen oxidation activity and electrical conductivity. For example, the filler 215 may be composed of a material with hydrogen oxidation activity and electrical conductivity. Alternatively, the filler 215 may be composed of a combination of a material with hydrogen oxidation activity and a material with electrical conductivity. Alternatively, the filler 215 may be composed of a compound consisting of a plurality of materials to have hydrogen oxidation activity and electrical conductivity.

Examples of the material with hydrogen oxidation activity and electrical conductivity constituting the filler 215 include Ni, Pt, Pd, and Ir. The filler 215 may desirably be a compound containing Ni. Ni is a material with high hydrogen oxidation activity and electrical conductivity, for example, for use in fuel electrodes of electrochemical devices, such as solid oxide fuel cells.

The filler 215 may be a cermet. The cermet is a mixture of a metal and a ceramic material and is, for example, a cermet composed of Ni as a metal and a proton conductor, such as a barium zirconium oxide or a barium cerium oxide, or an oxide ion conductor, such as stabilized zirconia, a lanthanum gallate based oxide, or a ceria based oxide, as a ceramic material. The proton conductor may contain a dopant, such as ytterbium. In other words, the proton conductor may be a barium zirconium based oxide or a barium cerium based oxide. When the cermet is a mixture of Ni and an electrolyte material, the hydrogen oxidation activity can be improved due to an increased number of reaction fields for hydrogen oxidation.

The filler 215 may be a porous material containing Ni. The porous material has a porosity of 20% or more measured using Archimedes' principle or by a mercury intrusion method, for example. The filler 215 formed of a porous material can increase the supply of the hydrogen-containing gas involved in hydrogen oxidation and improve hydrogen oxidation activity.

The solid electrolyte membrane 11 contains an electrolyte material. The electrolyte material may be a proton conductor, such as a barium zirconium oxide or a barium cerium oxide, or an oxide ion conductor, such as stabilized zirconia, a lanthanum gallate based oxide, or a ceria based oxide. The proton conductor may contain a dopant, such as ytterbium. In other words, the proton conductor may be a barium zirconium based oxide or a barium cerium based oxide.

The structural support 214 includes a ceramic member containing the electrolyte material. A material with a small difference in linear expansion coefficient from the solid electrolyte membrane 11 is used in the ceramic member constituting the structural support 214. The phrase "a small difference in linear expansion coefficient" means that the difference in linear expansion coefficient from the solid electrolyte membrane 11 is preferably 2 × 10⁻⁶ K⁻¹ or less, for example. The difference in linear expansion coefficient can be decreased to decrease the change in shape of a cell.

The ceramic member may be a dense material. The dense material has a relative density of 85% or more measured using Archimedes' principle or by a mercury intrusion method, for example. The dense material can improve the cell strength.

Thus, the electrode 212 including the structural support 214 can support the structure of the membrane electrode assembly 210 and can have a smaller difference in thermal expansion coefficient from the solid electrolyte membrane 11. This can reduce the occurrence of bending in the membrane electrode assembly 210 in the operating environment.

### (Modified Example 1)

Next, a membrane electrode assembly 210 according to a modified example 1 of the third embodiment of the present disclosure is described with reference to Fig. 24. Fig. 24 is a schematic view of an example of a cross section of the membrane electrode assembly 210 according to the modified example 1 of the third embodiment of the present disclosure. The cross-section of the membrane electrode assembly 210 in Fig. 24 also has a cross-sectional structure taken along the line A-A of the membrane electrode assembly 210 illustrated in Fig. 21.

The membrane electrode assembly 210 according to the modified example 1 of the third embodiment is the same as the membrane electrode assembly 210 according to the third embodiment in that the membrane electrode assembly 210 according to the modified example 1 includes the solid electrolyte membrane 11 and the electrode 212, and the electrode 212 includes the structural support 214 and the pore 213 filled with the filler 215. Thus, detailed description of these common members is omitted.

As illustrated in Fig. 24, however, the membrane electrode assembly 210 according to the modified example 1 of the third embodiment is different from the membrane electrode assembly 210 according to the third embodiment in that the first boundary surface 217 of the electrode 212 is divided into three regions of an upstream region, a midstream region, and a downstream region in the reactant gas flow direction, and the opening areas of the pores 213 per unit area are different between the regions.

More specifically, the membrane electrode assembly 210 according to the modified example 1 of the third embodiment includes the midstream region between the upstream region and the downstream region and is configured to satisfy the relationship of "first area ratio < third area ratio < second area ratio", wherein the third area ratio is the opening area of the pores 213 per unit area in the midstream region. In other words, in the membrane electrode assembly 210 according to the modified example 1 of the third embodiment, the opening area of the pores 213 per unit area on the first boundary surface 217 of the electrode 212 increases in the order of the upstream region, the midstream region, and the downstream region.

Although the boundaries of the upstream region, the downstream region, and the midstream region may be defined by three line segments equally dividing the first boundary surface 217 in the reactant gas flow direction, as illustrated in Fig. 24, the range of each region is not limited to this. The range of each region can be arbitrarily determined in consideration of the diffusivity of the reactant gas in the electrode 212.

Such a structure can decrease concentration overpotential not only in the downstream region but also in the midstream region between the upstream region and the downstream region in the membrane electrode assembly 210 according to the modified example 1 of the third embodiment.

### (Modified Example 2)

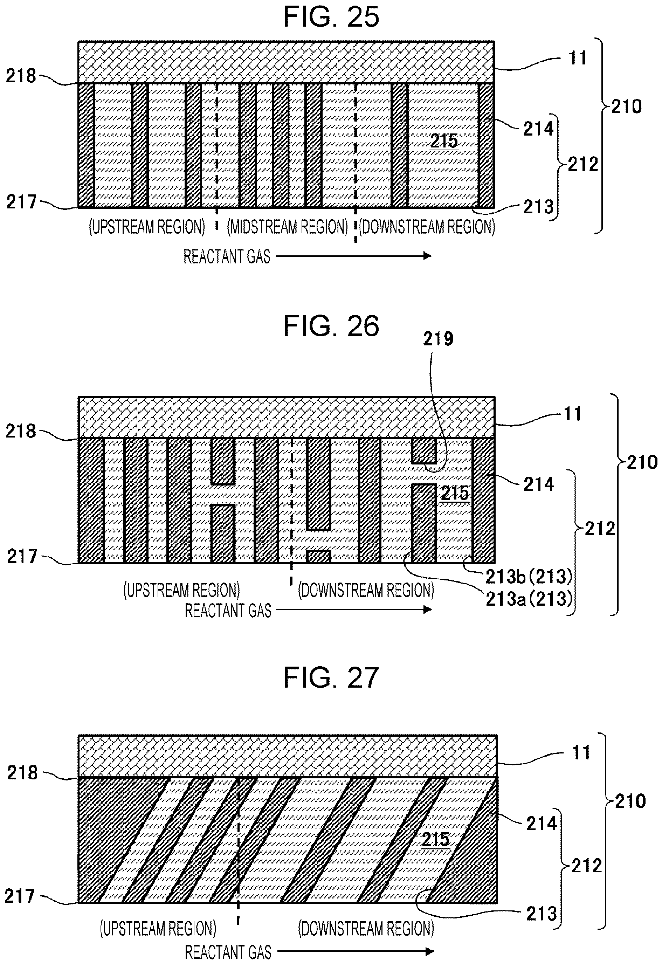

Next, a membrane electrode assembly 210 according to a modified example 2 of the third embodiment of the present disclosure is described with reference to Fig. 25. Fig. 25 is a schematic view of an example of a cross section of the membrane electrode assembly 210 according to the modified example 2 of the third embodiment of the present disclosure. The cross-section of the membrane electrode assembly 210 in Fig. 25 also has a cross-sectional structure taken along the line A-A of the membrane electrode assembly 210 illustrated in Fig. 21.

The membrane electrode assembly 210 according to the modified example 2 of the third embodiment is the same as the membrane electrode assembly 210 according to the third embodiment in that the membrane electrode assembly 210 according to the modified example 2 includes the solid electrolyte membrane 11 and the electrode 212, and the electrode 212 includes the structural support 214 and the pore 213 filled with the filler 215. Thus, detailed description of these common members is omitted.

As illustrated in Fig. 25, however, like the membrane electrode assembly 210 according to the modified example 1 of the third embodiment, the membrane electrode assembly 210 according to the modified example 2 of the third embodiment is different from the membrane electrode assembly 210 according to the third embodiment in that the first boundary surface 217 of the electrode 212 is divided into three regions of an upstream region, a midstream region, and a downstream region in the reactant gas flow direction, and the opening areas of the pores 213 are different between the regions.

More specifically, the membrane electrode assembly 210 according to the modified example 2 of the third embodiment includes the midstream region between the upstream region and the downstream region and is configured to satisfy the relationship of "third area ratio < first area ratio < second area ratio", wherein the third area ratio is the opening area of the pores 213 per unit area in the midstream region. In other words, in the membrane electrode assembly 210 according to the modified example 1 of the third embodiment, the opening area of the pores 213 per unit area on the first boundary surface 217 of the electrode 212 increases in the order of the midstream region, the upstream region, and the downstream region.

Although the boundaries of the upstream region, the midstream region, and the downstream region may be defined by three line segments equally dividing the first boundary surface 217 in the reactant gas flow direction, as illustrated in Fig. 25, the range of each region is not limited to this. The range of each region can be arbitrarily determined in consideration of the diffusivity of the reactant gas in the electrode 212.

The membrane electrode assembly 210 according to the modified example 2 of the third embodiment with such a structure can promote the gas diffusion effect in the downstream region (downstream region) in the reactant gas flow direction. This can decrease the concentration overpotential in the downstream region and prevent performance degradation.

When the membrane electrode assembly 210 according to the modified example 2 of the third embodiment is used, for example, in a fuel cell, the midstream region has a higher temperature than the other regions. Thus, in the membrane electrode assembly 210 according to the modified example 2 of the third embodiment, the pores 213 are arranged such that the third area ratio is lower than the first area ratio and the second area ratio to decrease gas diffusivity in the midstream region. In the membrane electrode assembly 210 according to the modified example 2 of the third embodiment, a decrease in gas diffusivity in this way can make electric current more difficult to flow in the midstream region than in the other regions and thereby decrease the temperature rise.

### (Modified Example 3)

Next, a membrane electrode assembly 210 according to a modified example 3 of the third embodiment of the present disclosure is described with reference to Fig. 26. Fig. 26 is a schematic view of an example of a cross section of the membrane electrode assembly 210 according to the modified example 3 of the third embodiment of the present disclosure. The cross-section of the membrane electrode assembly 210 in Fig. 26 also has a cross-sectional structure taken along the line A-A of the membrane electrode assembly 210 illustrated in Fig. 21.

The membrane electrode assembly 210 according to the modified example 3 of the third embodiment is the same as the membrane electrode assembly 210 according to the third embodiment in that the membrane electrode assembly 210 according to the modified example 3 includes the solid electrolyte membrane 11 and the electrode 212, and the electrode 212 includes the structural support 214 and the pore 213 filled with the filler 215. The membrane electrode assembly 210 according to the modified example 3 of the third embodiment is also the same as the membrane electrode assembly 210 according to the third embodiment in that the number or opening area of the pores 213 in the structural support 214 is adjusted in the upstream region and the downstream region to satisfy the relationship of "first area ratio < second area ratio". Thus, detailed description of these common members is omitted.

However, the membrane electrode assembly 210 according to the modified example 3 of the third embodiment is different from the membrane electrode assembly 210 according to the third embodiment in that the pores 213 include a communication path 219 for communicating the first pore 213a and the second pore 213b.

More specifically, the membrane electrode assembly 210 according to the modified example 3 of the third embodiment has at least one communication path 219 for communication between one of the pores 213, which is referred to as the first pore 213a, and another of the pores 213, which is referred to as the second pore 213b, in the upstream or downstream region. This structure can increase the number of paths through which the reactant gas can flow in the membrane electrode assembly 210 according to the modified example 3 of the third embodiment. This can further enhance oxygen reduction activity and electrical conductivity or hydrogen oxidation activity and electrical conductivity.

Even if a failure in the path of the first the pore 213a or the second pore 213b disrupts the flow of the reactant gas, the reactant gas can flow by another route through the communication path 219. Thus, the electrode 212 can retain hydrogen oxidation activity and electrical conductivity or redox properties and electrical conductivity.

Although the communication path 219 is filled with the filler 215 in Fig. 26, the communication path 219 is not necessarily filled with the filler 215, provided that the flow path of the reactant gas is provided. The communication path 219 filled with the filler 215, as illustrated in Fig. 26, is, however, preferable to improve hydrogen oxidation activity and electrical conductivity or oxygen reduction activity and electrical conductivity.

Furthermore, as illustrated in Fig. 26, the number of the communication paths 219 for communication between the pores 213 is greater in the downstream region than in the upstream region. A greater number of the communication paths 219 in the downstream region than in the upstream region in the membrane electrode assembly 210 according to the modified example 3 of the third embodiment can enhance the diffusivity of the reactant gas in the downstream region.

Although the first boundary surface 217 is divided into the upstream region and the downstream region and the relationship of "first area ratio < second area ratio" is satisfied in the membrane electrode assembly 210 according to the modified example 3 of the third embodiment, the present disclosure is not limited to this. For example, as in the membrane electrode assembly 210 according to the modified example 1 of the third embodiment, the first boundary surface 217 may be divided into three regions of the upstream region, the midstream region, and the downstream region, and the relationship of "first area ratio < third area ratio < second area ratio" may be satisfied. Alternatively, as in the membrane electrode assembly 210 according to the modified example 2 of the third embodiment, the first boundary surface 217 may be divided into three regions of the upstream region, the midstream region, and the downstream region, and the relationship of "third area ratio < first area ratio < second area ratio" may be satisfied.

### (Modified Example 4)

Next, a membrane electrode assembly 210 according to a modified example 4 of the third embodiment of the present disclosure is described with reference to Fig. 27. Fig. 27 is a schematic view of an example of a cross section of the membrane electrode assembly 210 according to the modified example 4 of the third embodiment of the present disclosure. The cross-section of the membrane electrode assembly 210 in Fig. 27 also has a cross-sectional structure taken along the line A-A of the membrane electrode assembly 210 illustrated in Fig. 21.

The membrane electrode assembly 210 according to the modified example 4 of the third embodiment is the same as the membrane electrode assembly 210 according to the third embodiment in that the membrane electrode assembly 210 according to the modified example 4 includes the solid electrolyte membrane 11 and the electrode 212, and the electrode 212 includes the structural support 214 and the pore 213 filled with the filler 215. The membrane electrode assembly 210 according to the modified example 4 of the third embodiment is also the same as the membrane electrode assembly 210 according to the third embodiment in that the number or opening area of the pores 213 in the structural support 214 is adjusted in the upstream region and the downstream region to satisfy the relationship of "first area ratio < second area ratio". Thus, detailed description of these common members is omitted.

As illustrated in Fig. 27, however, the pore 213 of the membrane electrode assembly 210 according to the modified example 4 of the third embodiment extends in a different direction from the pore 213 of the membrane electrode assembly 210 according to the third embodiment. More specifically, in the structural support 214 of the membrane electrode assembly 210 according to the third embodiment, the pore 213 extends from the side in contact with the reactant gas (that is, the first boundary surface 217) to the solid electrolyte membrane 11 side (that is, a second boundary surface 218) perpendicularly to the main surface of the electrode 212 (that is, the first boundary surface 217 or the second boundary surface 218). On the other hand, in the structural support 214 of the membrane electrode assembly 210 according to the modified example 2 of the third embodiment, the pores 213 extend obliquely from the first boundary surface 217 to the second boundary surface 218 at an acute angle with respect to the main surface of the electrode 212. In other words, the pores 213 tilt with respect to the main surface of the electrode 212 toward the downstream side in the flow direction of the oxidant gas.

This structure can improve the flow distribution of the reactant gas flowing into the pores 213 and flowing through the pores 213. Thus, the membrane electrode assembly 210 according to the modified example 2 of the third embodiment can increase the supply of the reactant gas and thereby improve hydrogen oxidation activity or oxygen reduction activity.

Although the first boundary surface 217 is divided into the upstream region and the downstream region and the relationship of "first area ratio < second area ratio" is satisfied in the membrane electrode assembly 210 according to the modified example 4 of the third embodiment, the present disclosure is not limited to this. For example, as in the membrane electrode assembly 210 according to the modified example 1 of the third embodiment, the first boundary surface 217 may be divided into three regions of the upstream region, the midstream region, and the downstream region, and the relationship of "first area ratio < third area ratio < second area ratio" may be satisfied. Alternatively, as in the membrane electrode assembly 210 according to the modified example 2 of the third embodiment, the first boundary surface 217 may be divided into three regions of the upstream region, the midstream region, and the downstream region, and the relationship of "third area ratio < first area ratio < second area ratio" may be satisfied.

### (Modified Example 5)

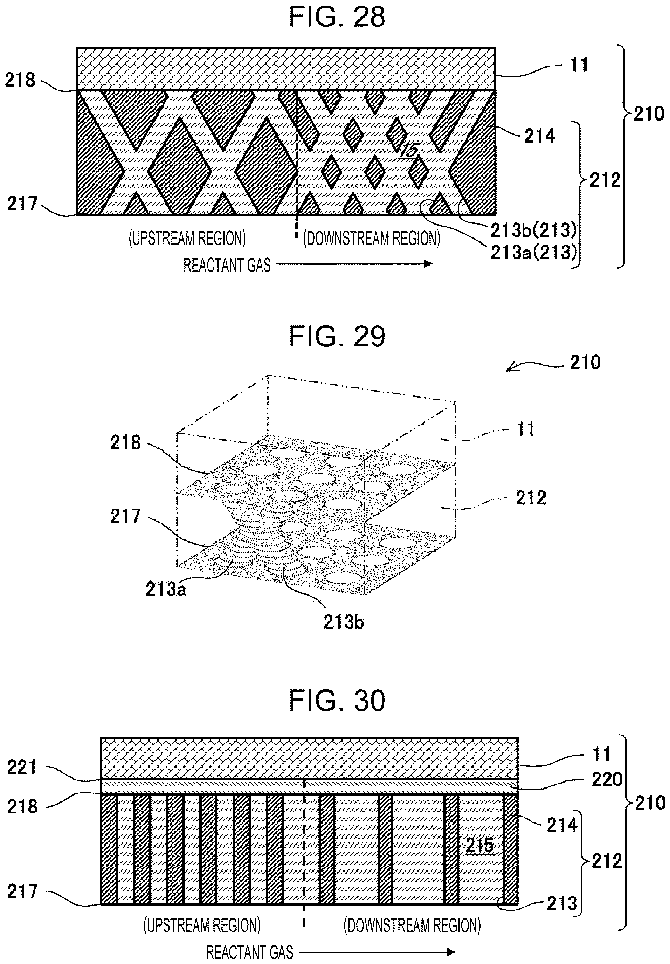

Next, a membrane electrode assembly 210 according to a modified example 5 of the third embodiment of the present disclosure is described with reference to Figs. 28 and 29. Fig. 28 is a schematic view of an example of a cross section of the membrane electrode assembly 210 according to the modified example 5 of the third embodiment of the present disclosure. The cross-section of the membrane electrode assembly 210 in Fig. 28 also has a cross-sectional structure taken along the line A-A of the membrane electrode assembly 210 illustrated in Fig. 21. Fig. 29 is a schematic perspective view of the positional relationship between a first pore 213a and a second pore 213b in an electrode 212 of the membrane electrode assembly 210 illustrated in Fig. 28.

The membrane electrode assembly 210 according to the modified example 5 of the third embodiment is the same as the membrane electrode assembly 210 according to the third embodiment in that the membrane electrode assembly 210 according to the modified example 5 includes the solid electrolyte membrane 11 and the electrode 212, and the electrode 212 includes the structural support 214 and the pore 213 filled with the filler 215. The membrane electrode assembly 210 according to the modified example 5 of the third embodiment is also the same as the membrane electrode assembly 210 according to the third embodiment in that the pores 213 are formed such that the relationship of "first area ratio < second area ratio" on the first boundary surface 217 is satisfied. Thus, detailed description of these common members is omitted.

As illustrated in Fig. 28, however, the pores 213 of the membrane electrode assembly 210 according to the modified example 5 of the third embodiment are different from the pores 213 of the membrane electrode assembly 210 according to the third embodiment in the extending direction and in that all the pores 213 on the first boundary surface 217 have the same opening area. Furthermore, to satisfy the relationship of "first area ratio < second area ratio" on the first boundary surface 217, the membrane electrode assembly 210 according to the modified example 5 of the third embodiment is different from the membrane electrode assembly 210 according to the third embodiment in that the number of the pores 213 per unit area is greater in the downstream region than in the upstream region.

More specifically, in the structural support 214 of the membrane electrode assembly 210 according to the third embodiment, the pore 213 extends from the side in contact with the reactant gas (that is, the first boundary surface 217) to the solid electrolyte membrane 11 side (that is, the second boundary surface 218) perpendicularly to the main surface of the electrode 212 (that is, the first boundary surface 217 or the second boundary surface 218). On the other hand, as illustrated in Figs. 28 and 29, in the air electrode side structural support 214 of the membrane electrode assembly 210 according to the modified example 5 of the third embodiment, the pores 213 (for example, the first pore 213a and the second pore 213b) in the structural support 214 cross and communicate with each other. This arrangement is repeated to form a three-dimensional network, and the pores 213 extend from the first boundary surface 217 to the second boundary surface 218.

Although the first pore 213a crosses the second pore 213b in Figs. 28 and 29, another pore 213 may be arranged to cross the first pore 213a and the second pore 213b.

Furthermore, to satisfy the relationship of "first area ratio < second area ratio" on the first boundary surface 217, in the membrane electrode assembly 210 according to the modified example 5 of the third embodiment, as illustrated in Fig. 28, the number of pores 213 crossing one pore 213 is greater in the downstream region than in the upstream region.

Such a structure enables the pores 213 to communicate with each other and form a network structure, can promote the flow of the reactant gas, and can improve hydrogen oxidation activity or oxygen reduction activity. This also enables the filler 215 to be densely filled and can improve electrical conductivity.

Although the first boundary surface 217 is divided into the upstream region and the downstream region and the relationship of "first area ratio < second area ratio" is satisfied in the membrane electrode assembly 210 according to the modified example 5 of the third embodiment, the present disclosure is not limited to this. For example, as in the membrane electrode assembly 210 according to the modified example 1 of the third embodiment, the first boundary surface 217 may be divided into three regions of the upstream region, the midstream region, and the downstream region, and the relationship of "first area ratio < third area ratio < second area ratio" may be satisfied. Alternatively, as in the membrane electrode assembly 210 according to the modified example 2 of the third embodiment, the first boundary surface 217 may be divided into three regions of the upstream region, the midstream region, and the downstream region, and the relationship of "third area ratio < first area ratio < second area ratio" may be satisfied.

### (Modified Example 6)

Next, a membrane electrode assembly 210 according to a modified example 6 of the third embodiment of the present disclosure is described with reference to Fig. 30. Fig. 30 is a schematic view of an example of a cross section of the membrane electrode assembly 210 according to the modified example 6 of the third embodiment of the present disclosure. The cross-section of the membrane electrode assembly 210 in Fig. 30 also has a cross-sectional structure taken along the line A-A of the membrane electrode assembly 210 illustrated in Fig. 21.

The membrane electrode assembly 210 according to the modified example 6 of the third embodiment is the same as the membrane electrode assembly 210 according to the third embodiment in that the membrane electrode assembly 210 according to the modified example 6 includes the solid electrolyte membrane 11 and the electrode 212, and the electrode 212 includes the structural support 214 and the pore 213 filled with the filler 215. The membrane electrode assembly 210 according to the modified example 6 of the third embodiment is also the same as the membrane electrode assembly 210 according to the third embodiment in that the number or opening area of the pores 213 in the structural support 214 is adjusted in the upstream region and the downstream region to satisfy the relationship of "first area ratio < second area ratio". Thus, detailed description of these common members is omitted.

As illustrated in Fig. 30, however, the membrane electrode assembly 210 according to the modified example 6 of the third embodiment is different from the membrane electrode assembly 210 according to the third embodiment in that a functional layer 220 is formed between the solid electrolyte membrane 11 and the electrode 212.

The functional layer 220 is a layer containing the material for the filler 215. More specifically, when the electrode 212 is a fuel electrode of an electrochemical device, such as a fuel cell, the functional layer 220 contains a material with hydrogen oxidation activity and electrical conductivity. When the electrode 212 is an air electrode of an electrochemical device, such as a fuel cell, the functional layer 220 contains a material with oxygen reduction activity and electrical conductivity. The functional layer 220 is in contact with the electrode 212 on the second boundary surface 218 and is in contact with the solid electrolyte membrane 11 on a third boundary surface 221. The functional layer 220 may be formed of the same material as or a different material from the filler 215.

When the electrode 212 is a fuel electrode of an electrochemical device, such a structure can increase the number of reaction fields near the solid electrolyte membrane 11 in which a hydrogen oxidation reaction occurs, that is, near the third boundary surface 221. When the electrode 212 is an air electrode of an electrochemical device, such a structure can increase the number of reaction fields near the solid electrolyte membrane 11 in which an oxygen reduction reaction occurs, that is, near the third boundary surface 221. Thus, the membrane electrode assembly 210 according to the modified example 6 of the third embodiment can improve hydrogen oxidation activity or oxygen reduction activity.

Although the pores 213 of the membrane electrode assembly 210 extend perpendicularly to the main surface of the electrode 212 (that is, the first boundary surface 217 or the second boundary surface 218) in Fig. 30, the present disclosure is not limited to this structure. For example, as in the membrane electrode assembly 210 according to the modified example 4 of the third embodiment, the pores 213 may extend obliquely at an acute angle with respect to the main surface of the electrode 212. Alternatively, as in the membrane electrode assembly 210 according to the modified example 5 of the third embodiment, the pores 213 may cross and form a three-dimensional network.

Although the first boundary surface 217 is divided into the upstream region and the downstream region and the relationship of "first area ratio < second area ratio" is satisfied in the membrane electrode assembly 210 according to the modified example 6 of the third embodiment, the present disclosure is not limited to this. For example, as in the membrane electrode assembly 210 according to the modified example 1 of the third embodiment, the first boundary surface 217 may be divided into three regions of the upstream region, the midstream region, and the downstream region, and the relationship of "first area ratio < third area ratio < second area ratio" may be satisfied. Alternatively, as in the membrane electrode assembly 210 according to the modified example 2 of the third embodiment, the first boundary surface 217 may be divided into three regions of the upstream region, the midstream region, and the downstream region, and the relationship of "third area ratio < first area ratio < second area ratio" may be satisfied.

Although the membrane electrode assemblies 210 according to the third embodiment and the modified examples 1 to 6 of the third embodiment include a single layer electrode 212, the present disclosure is not limited to this. For example, the membrane electrode assembly 210 may further include another electrode on a main surface of the solid electrolyte membrane 11 opposite the main surface on which the electrode 212 is located, and the other electrode, the solid electrolyte membrane 11, and the electrode 212 are laminated in this order. The other electrode may have the structure of the electrode 212.

### (Fourth Embodiment)

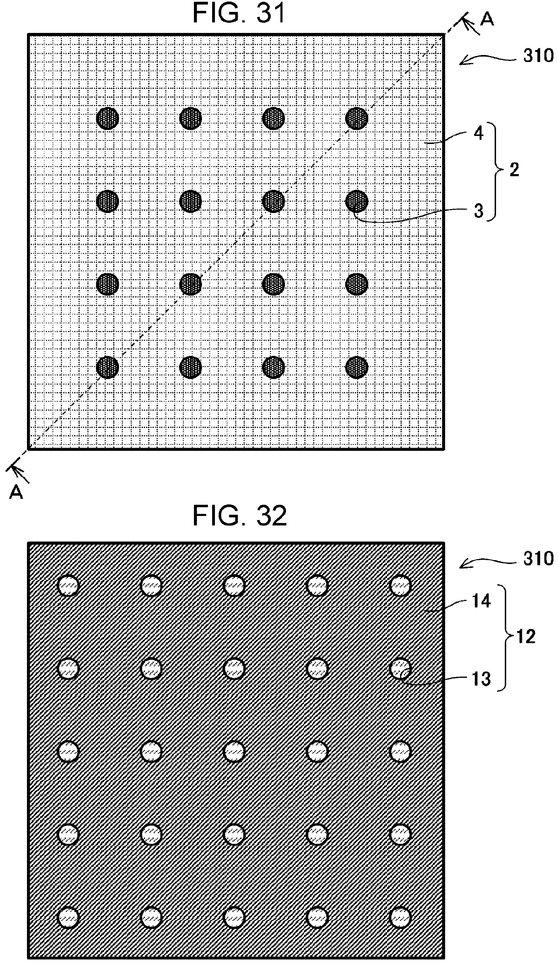

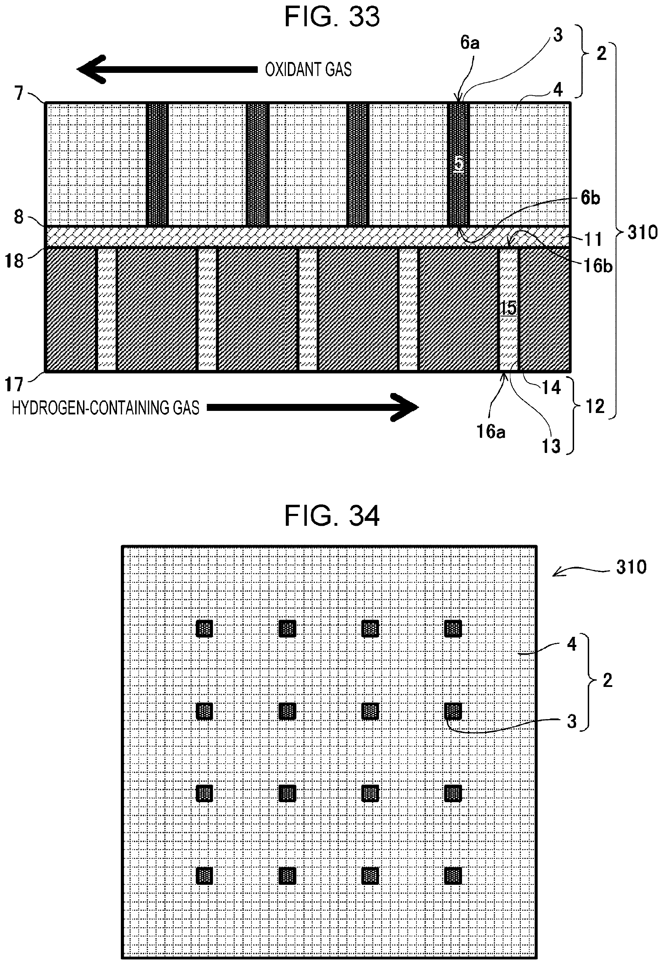

A membrane electrode assembly 310 according to a fourth embodiment is described below with reference to Figs. 31 to 33. Fig. 31 is a plan view of the membrane electrode assembly 310 according to the fourth embodiment of the present disclosure viewed from a surface in contact with an oxidant gas (that is, the first air electrode side boundary surface 7 in Fig. 33). Fig. 32 is a plan view of the membrane electrode assembly 310 according to the fourth embodiment of the present disclosure viewed from a surface in contact with a hydrogen-containing gas (that is, the first fuel electrode side boundary surface 17 in Fig. 33). Fig. 33 is a schematic A-A cross-sectional view of the structure of the membrane electrode assembly 310 illustrated in Fig. 31. Although the oxidant gas and the hydrogen-containing gas flow in opposite directions in the membrane electrode assembly 310 in Fig. 33, the oxidant gas and the hydrogen-containing gas may flow in other directions. For example, the oxidant gas and the hydrogen-containing gas may flow in the same direction. Alternatively, when the membrane electrode assembly 310 is viewed from the top in the laminating direction, the oxidant gas flow may cross the hydrogen-containing gas flow.

As illustrated in Figs. 31 to 33, the membrane electrode assembly 310 includes the solid electrolyte membrane 11 containing an electrolyte material, the fuel electrode 12 in contact with the hydrogen-containing gas, and the air electrode 2 in contact with the oxidant gas. The membrane electrode assembly 310 is a member for use in an electrochemical device, for example, and includes the air electrode 2, the solid electrolyte membrane 11, and the fuel electrode 12 laminated in this order, as illustrated in Fig. 33. Thus, the air electrode 2 is located on one main surface of the solid electrolyte membrane 11, the fuel electrode 12 is located on the other main surface, and the solid electrolyte membrane 11 is located between the air electrode 2 and the fuel electrode 12.

The fuel electrode 12 includes the fuel electrode side structural support 14 including a ceramic member and the fuel electrode side pore 13, which extends from the first fuel electrode side boundary surface 17 (that is, the fuel electrode side boundary surface) in contact with the hydrogen-containing gas in the fuel electrode side structural support 14 to the solid electrolyte membrane 11 and is filled with the fuel electrode side filler 15 with hydrogen oxidation activity and electrical conductivity. The fuel electrode side structural support 14 supports the structure of the membrane electrode assembly 310. As illustrated in Fig. 33, the fuel electrode side pore 13 extends linearly from the first fuel electrode side boundary surface 17 to the solid electrolyte membrane 11.

The air electrode 2 includes the air electrode side structural support 4 including a ceramic member and the air electrode side pore 3, which extends from the first air electrode side boundary surface 7 (that is, the air electrode side boundary surface) in contact with the oxidant gas in the air electrode side structural support 4 to the solid electrolyte membrane 11 and is filled with the air electrode side filler 5 with oxygen reduction activity and electrical conductivity. The air electrode 2 is configured such that the air electrode side structural support 4 can also support the structure of the membrane electrode assembly 310. As illustrated in Fig. 33, the air electrode side pore 3 extends linearly from the first air electrode side boundary surface 7 to the solid electrolyte membrane 11.

The electrolyte material in the solid electrolyte membrane 11 may be a proton conductor, such as a barium zirconium oxide or a barium cerium oxide, or an oxide ion conductor, such as stabilized zirconia, a lanthanum gallate based oxide, or a ceria based oxide. The proton conductor may contain a dopant, such as ytterbium. In other words, the proton conductor may be a barium zirconium based oxide or a barium cerium based oxide.

The air electrode side structural support 4 and the fuel electrode side structural support 14 include a ceramic member containing an electrolyte material. A material with a small difference in linear expansion coefficient from the solid electrolyte membrane 11 is used in the ceramic member constituting the air electrode side structural support 4 and the fuel electrode side structural support 14. The phrase "a small difference in linear expansion coefficient" means that the difference in linear expansion coefficient from the solid electrolyte membrane 11 is preferably 2 × 10⁻⁶ K⁻¹ or less, for example. The difference in linear expansion coefficient can be decreased to decrease the change in shape of a cell.

The ceramic member constituting the air electrode side structural support 4 or the fuel electrode side structural support 14 may be a dense material. The dense material has a relative density of 85% or more measured using Archimedes' principle or by a mercury intrusion method, for example. The dense material can improve the cell strength.

Thus, the air electrode 2 including the air electrode side structural support 4 and the fuel electrode 12 including the fuel electrode side structural support 14 can support the structure of the membrane electrode assembly 310 and can have a smaller difference in thermal expansion coefficient from the solid electrolyte membrane 11. This can reduce the occurrence of bending in the membrane electrode assembly 310 in the operating environment.

The oxidant gas may be oxygen or a gas containing oxygen, for example, air. The hydrogen-containing gas may be hydrogen or may be, for example, a reformed gas produced by reforming of methane gas or hydrogen gas containing steam produced by electrolysis of water.

As illustrated in Fig. 33, the air electrode side pore 3 has the first air electrode side opening 6a into which the oxidant gas flows formed on the first air electrode side boundary surface 7 in contact with the oxidant gas in the air electrode side structural support 4, and the second air electrode side opening 6b at an end of the air electrode side pore 3 on the solid electrolyte membrane 11 side opposite the first air electrode side opening 6a. In the example of Fig. 33, the second air electrode side opening 6b is located on the second air electrode side boundary surface 8 in contact with the solid electrolyte membrane 11 in the air electrode side structural support 4.

Thus, a gas passage (not shown) through which the oxygen-containing gas flows is located on the first air electrode side boundary surface 7 on which the first air electrode side opening 6a is located, and the oxidant gas (oxygen) flowing through the gas passage flows into the air electrode side pore 3 through the first air electrode side opening 6a. The air electrode side pore 3 is filled with the air electrode side filler 5 described later. Thus, water is produced from oxygen that has been reduced on the surface of the air electrode side filler 5 and transferred near the second air electrode side opening 6b, protons that have passed through the solid electrolyte membrane 11, and electrons that have reached the air electrode 2 via an external circuit (not shown).

As illustrated in Fig. 33, the fuel electrode side pore 13 has the first fuel electrode side opening 16a into which the hydrogen-containing gas flows formed on the first fuel electrode side boundary surface 17 in contact with the hydrogen-containing gas in the fuel electrode side structural support 14, and the second fuel electrode side opening 16b at an end of the fuel electrode side pore 13 on the solid electrolyte membrane 11 side opposite the first fuel electrode side opening 16a. In the example of Fig. 32, the second fuel electrode side opening 16b is located on the second fuel electrode side boundary surface 18 in contact with the solid electrolyte membrane 11 in the fuel electrode side structural support 14.

Thus, a gas passage (not shown) through which the hydrogen-containing gas flows is located on the first fuel electrode side boundary surface 17 on which the first fuel electrode side opening 16a is located, and the hydrogen-containing gas flowing through the gas passage flows into the fuel electrode side pore 13 through the first fuel electrode side opening 16a. The fuel electrode side pore 13 is filled with the fuel electrode side filler 15 described later. Thus, hydrogen is oxidized on the surface of the fuel electrode side filler 15 into a proton and an electron. The protons move from the fuel electrode 12 to the solid electrolyte membrane 11 through the second fuel electrode side opening 16b. The electrons move through the fuel electrode side pore 13 and are taken out of the fuel electrode 12.

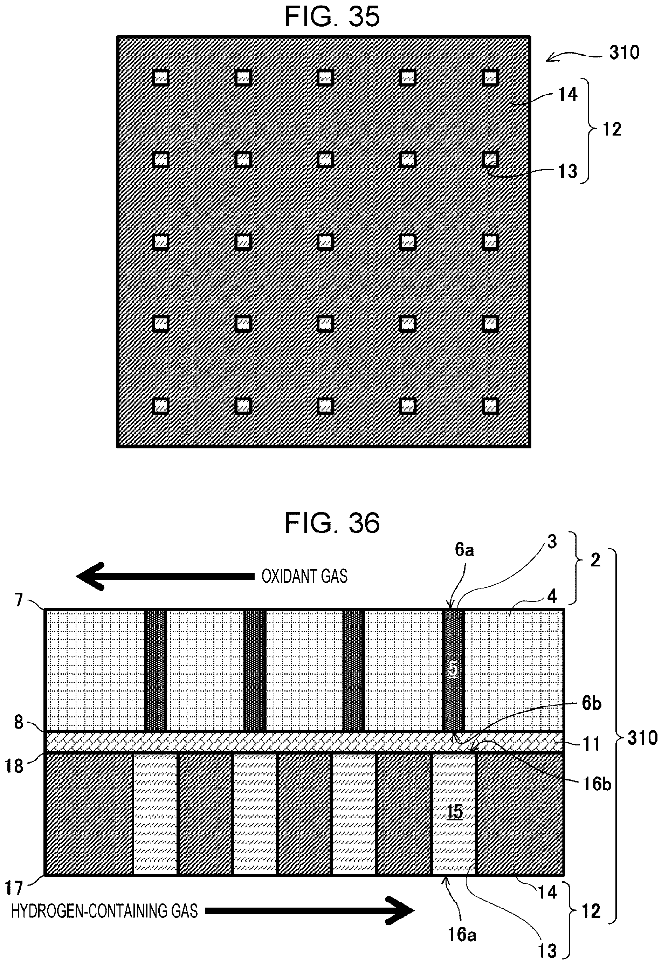

As illustrated in Fig. 31, the air electrode side pore 3 may have a round opening shape. Likewise, as illustrated in Fig. 32, the fuel electrode side pore 13 may also have a round opening shape. Alternatively, as illustrated in Fig. 34, the air electrode side pore 3 may have a square opening shape. Likewise, as illustrated in Fig. 35, the fuel electrode side pore 13 may also have a square opening shape. Fig. 34 illustrates a modified example of the air electrode 2 of the membrane electrode assembly 310 illustrated in Fig. 31. Fig. 35 illustrates a modified example of the fuel electrode 12 of the membrane electrode assembly 310 illustrated in Fig. 32.

The air electrode side pore 3 and the fuel electrode side pore 13 may have any opening shape. A round opening is preferred from the perspective of the strength of the air electrode side structural support 4 and the fuel electrode side structural support 14.

The arrangement pattern of the air electrode side pore 3 and the fuel electrode side pore 13 may be a parallel pattern in which the air electrode side pores 3 and the fuel electrode side pores 13 are arranged in parallel, as illustrated in Fig. 31 or 32 or Fig. 34 or 35, or may be a zigzag pattern in which the air electrode side pores 3 and the fuel electrode side pores 13 are staggered. Alternatively, the air electrode side pores 3 and the fuel electrode side pores 13 may be randomly arranged.

The air electrode side pore 3 may have any shape and arrangement pattern, provided that the air electrode side structural support 4 can retain sufficient strength and the air electrode side filler 5 in the air electrode side pore 3 can provide required oxygen reduction activity and electrical conductivity. Likewise, the fuel electrode side pore 13 may have any shape and arrangement pattern, provided that the fuel electrode side structural support 14 can retain sufficient strength and the fuel electrode side filler 15 in the fuel electrode side pore 13 can provide required hydrogen oxidation activity and electrical conductivity.

The round air electrode side pore 3 and the round fuel electrode side pore 13 may have an opening diameter in the range of 0.01 to 1 mm, and the square air electrode side pore 3 and the square fuel electrode side pore 13 may have a side length in the range of 0.01 to 1 mm. The ratio of the area occupied by the air electrode side pores 3 on the main surface of the air electrode 2 (that is, the first air electrode side boundary surface 7 or the second air electrode side boundary surface 8) may be 50% or less, desirably 30% or less, of the entire main surface of the air electrode 2. A large occupied area of the air electrode side pores 3 on the main surface of the air electrode 2 results in improved power generation performance but larger bending in the air electrode 2. Likewise, the ratio of the area occupied by the fuel electrode side pores 13 on the main surface of the fuel electrode 12 (that is, the first fuel electrode side boundary surface 17 or the second fuel electrode side boundary surface 18) may be 50% or less, desirably 30% or less, of the entire main surface of the fuel electrode 12. A large area occupied by the fuel electrode side pores 13 on the main surface of the fuel electrode 12 results in improved power generation performance. However, it causes larger bending in the fuel electrode 12.

In the membrane electrode assembly 310, the air electrode side pore 3 and the fuel electrode side pore 13 have the following positional relationship. That is, the periphery of the second fuel electrode side opening 16b of the fuel electrode side pore 13 and the periphery of the second air electrode side opening 6b of the air electrode side pore 3 are arranged so as not to overlap when viewed from the top in the laminating direction of the membrane electrode assembly 310, as illustrated in Fig. 33. As illustrated in Fig. 33, in the arrangement in which the periphery of the second fuel electrode side opening 16b does not overlap the periphery of the second air electrode side opening 6b, a plane formed by the periphery of the second fuel electrode side opening 16b may not overlap a plane formed by the periphery of the second air electrode side opening 6b when viewed from the top in the laminating direction of the membrane electrode assembly 310. Although details are described later, when viewed from the top in the laminating direction of the membrane electrode assembly 310, the plane formed by the periphery of the second fuel electrode side opening 16b may overlap the plane formed by the periphery of the second air electrode side opening 6b, but the peripheries may not overlap.

In the operating environment of an electrochemical device, such as a fuel cell, for example, stress is generated in the peripheries of the second air electrode side opening 6b and the second fuel electrode side opening 16b during temperature increase and decrease, for example.

In such a structure, the periphery of the second air electrode side opening 6b and the periphery of the second fuel electrode side opening 16b are arranged so as not to overlap when viewed from the top in the laminating direction of the membrane electrode assembly 310. This can prevent stress concentration in a particular region of the solid electrolyte membrane 11.

Thus, the membrane electrode assembly 310 can have smaller bending and is less likely to have breakage or cracking.

The air electrode side filler 5 in the air electrode side pore 3 can promote the reduction of oxygen and ensure electrical conductivity. The air electrode side filler 5 may be composed of at least one material with oxygen reduction activity and electrical conductivity. For example, the air electrode side filler 5 may be composed of a material with oxygen reduction activity and electrical conductivity. Alternatively, the air electrode side filler 5 may be composed of a combination of a material with oxygen reduction activity and a material with electrical conductivity. Alternatively, the air electrode side filler 5 may be composed of a compound consisting of a plurality of materials to have oxygen reduction activity and electrical conductivity.

The material with oxygen reduction activity and electrical conductivity constituting the air electrode side filler 5 may be a compound containing at least one element selected from the group consisting of Mn, Fe, Co, and Ni. More specifically, for example, the material may be a lanthanum strontium cobalt iron composite oxide (LSCF), a lanthanum strontium cobalt composite oxide (LSC), a lanthanum strontium iron composite oxide (LSF), a lanthanum strontium manganese composite oxide (LSM), a barium strontium cobalt iron composite oxide (BSCF), a samarium strontium cobalt composite oxide (SSC), a lanthanum nickel iron composite oxide, a lanthanum nickel composite oxide, or a barium gadolinium lanthanum cobalt composite oxide.

The air electrode side filler 5 may be a composite of an oxide containing at least one selected from the group consisting of Mn, Fe, Co, and Ni and another oxide or a metal. Furthermore, the air electrode side filler 5 may be composed of a mixture of materials with either oxygen reduction or electrical conductivity. In such a structure, for example, a lanthanum strontium cobalt iron composite oxide may be used as an oxygen reducing material, and a lanthanum strontium manganese composite oxide may be used as an electrically conductive material.

The air electrode side filler 5 may be a porous material. The porous material has a porosity of 20% or more measured using Archimedes' principle or by a mercury intrusion method, for example. The air electrode side filler 5 formed of a porous material can increase the supply of the oxidant gas involved in oxygen reduction and improve oxygen reduction activity.

On the other hand, the fuel electrode side filler 15 in the fuel electrode side pore 13 can promote the oxidation of hydrogen and ensure electrical conductivity. The fuel electrode side filler 15 may be composed of at least one material with hydrogen oxidation activity and electrical conductivity. For example, the fuel electrode side filler 15 may be composed of a material with hydrogen oxidation activity and electrical conductivity. Alternatively, the fuel electrode side filler 15 may be composed of a combination of a material with hydrogen oxidation activity and a material with electrical conductivity. Alternatively, the fuel electrode side filler 15 may be composed of a compound consisting of a plurality of materials to have hydrogen oxidation activity and electrical conductivity.

Examples of the material with hydrogen oxidation activity and electrical conductivity constituting the fuel electrode side filler 15 include Ni, Pt, Pd, and Ir. The fuel electrode side filler 15 may desirably be a compound containing Ni. Ni is a material with high hydrogen oxidation activity and electrical conductivity, for example, for use in fuel electrodes of electrochemical devices, such as solid oxide fuel cells.

The fuel electrode side filler 15 may be a cermet. The cermet is a mixture of a metal and a ceramic material and is, for example, a cermet composed of Ni as a metal and a proton conductor, such as a barium zirconium oxide or a barium cerium oxide, or an oxide ion conductor, such as stabilized zirconia, a lanthanum gallate based oxide, or a ceria based oxide, as a ceramic material. The proton conductor may contain a dopant, such as ytterbium. In other words, the proton conductor may be a barium zirconium based oxide or a barium cerium based oxide. When the cermet is a mixture of Ni and an electrolyte material, the hydrogen oxidation activity can be improved due to an increased number of reaction fields for hydrogen oxidation.

The fuel electrode side filler 15 may be a porous material containing Ni. The porous material has a porosity of 20% or more measured using Archimedes' principle or by a mercury intrusion method, for example. The fuel electrode side filler 15 formed of a porous material can increase the supply of the hydrogen-containing gas involved in hydrogen oxidation and improve hydrogen oxidation activity.

### (Modified Example 1)

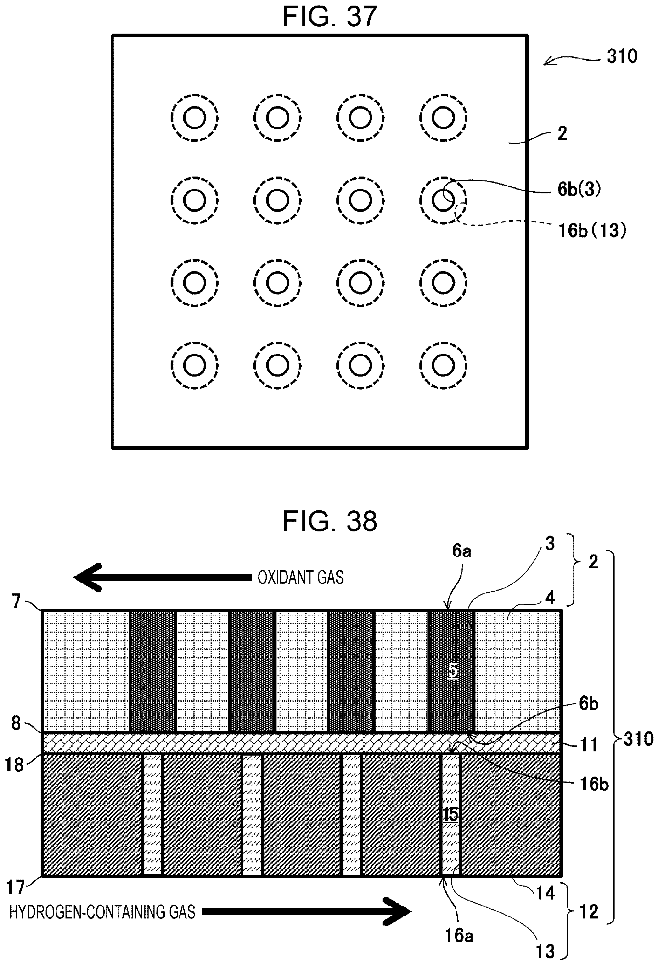

Next, a membrane electrode assembly 310 according to a modified example 1 of the fourth embodiment of the present disclosure is described with reference to Figs. 36 and 37. Fig. 36 is a schematic cross-sectional view of the structure of the membrane electrode assembly 310 according to the modified example 1 of the fourth embodiment of the present disclosure. The cross section of the membrane electrode assembly 310 according to the modified example 1 of the fourth embodiment illustrated in Fig. 36 has a cross-sectional structure taken along the line A-A of the membrane electrode assembly 310 illustrated in Fig. 31. Fig. 37 is a schematic view of the positional relationship between the air electrode side pore 3 and the fuel electrode side pore 13 of the membrane electrode assembly 310 according to the modified example 1 of the fourth embodiment of the present disclosure viewed from the first air electrode side boundary surface 7.

The membrane electrode assembly 310 according to the modified example 1 of the fourth embodiment is the same as the membrane electrode assembly 310 according to the fourth embodiment in that the membrane electrode assembly 310 according to the modified example 1 includes the solid electrolyte membrane 11, the air electrode 2, and the fuel electrode 12, the air electrode 2 includes the air electrode side structural support 4 and the air electrode side pore 3 filled with the air electrode side filler 5, and the fuel electrode 12 includes the fuel electrode side structural support 14 and the fuel electrode side pore 13 filled with the fuel electrode side filler 15. Thus, detailed description of these common members is omitted.

As illustrated in Figs. 36 and 37, however, the membrane electrode assembly 310 according to the modified example 1 of the fourth embodiment has a different positional relationship between the air electrode side pore 3 and the fuel electrode side pore 13. More specifically, a plane formed by the periphery of the second fuel electrode side opening 16b includes a plane formed by the periphery of the second air electrode side opening 6b when viewed from the top in the laminating direction of the membrane electrode assembly 310.

In the membrane electrode assembly 310 with such a structure according to the modified example 1 of the fourth embodiment, the periphery of the second fuel electrode side opening 16b does not overlap the periphery of the second air electrode side opening 6b when viewed from the top in the laminating direction, and this can prevent stress concentration in a particular region of the solid electrolyte membrane 11 in the operating environment.

Furthermore, in the membrane electrode assembly 310 according to the modified example 1 of the fourth embodiment, the ion diffusion length in the solid electrolyte membrane 11 during an electrochemical reaction can be shortened, as compared with the membrane electrode assembly 310 according to the fourth embodiment illustrated in Fig. 33 with the structure in which the plane formed by the periphery of the second fuel electrode side opening 16b and the plane formed by the periphery of the second air electrode side opening 6b are separated from each other so as not to overlap when the membrane electrode assembly 310 is viewed from the top in the laminating direction. This can decrease internal resistance in the electrochemical reaction.

Furthermore, the plane formed by the periphery of the second fuel electrode side opening 16b can be enlarged to expand a region filled with a material with hydrogen oxidation activity and electrical conductivity and to increase the number of reaction fields or electrical conduction paths for hydrogen oxidation. This can further enhance hydrogen oxidation activity and electrical conductivity.

### (Modified Example 2)

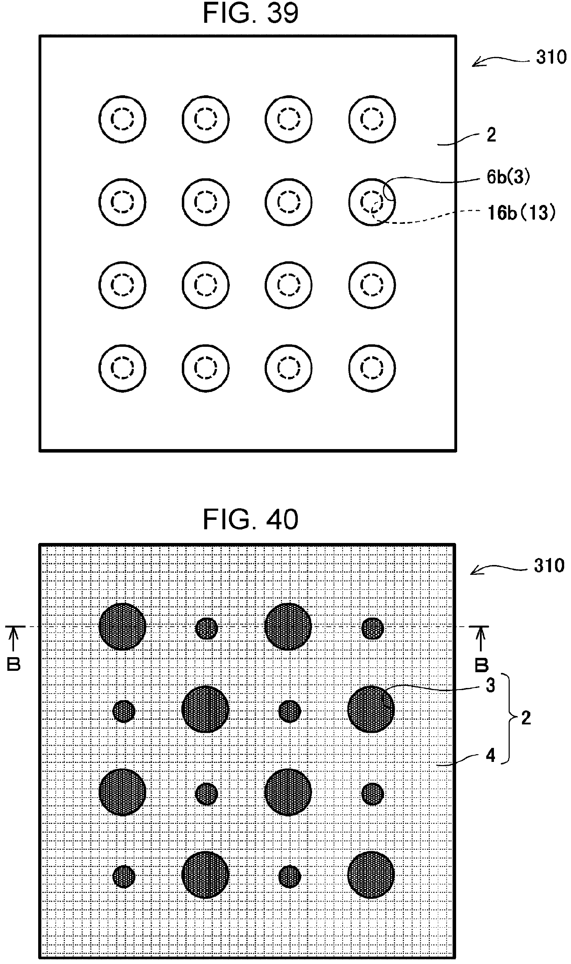

Next, a membrane electrode assembly 310 according to a modified example 2 of the fourth embodiment of the present disclosure is described with reference to Figs. 38 and 39. Fig. 38 is a schematic cross-sectional view of the structure of the membrane electrode assembly 310 according to the modified example 2 of the fourth embodiment of the present disclosure. The cross section of the membrane electrode assembly 310 according to the modified example 2 of the fourth embodiment illustrated in Fig. 38 has a cross-sectional structure taken along the line A-A of the membrane electrode assembly 310 illustrated in Fig. 31. Fig. 39 is a schematic view of the positional relationship between the air electrode side pore 3 and the fuel electrode side pore 13 of the membrane electrode assembly 310 according to the modified example 2 of the fourth embodiment of the present disclosure viewed from the first air electrode side boundary surface 7.

The membrane electrode assembly 310 according to the modified example 2 of the fourth embodiment is the same as the membrane electrode assembly 310 according to the fourth embodiment in that the membrane electrode assembly 310 according to the modified example 2 includes the solid electrolyte membrane 11, the air electrode 2, and the fuel electrode 12, the air electrode 2 includes the air electrode side structural support 4 and the air electrode side pore 3 filled with the air electrode side filler 5, and the fuel electrode 12 includes the fuel electrode side structural support 14 and the fuel electrode side pore 13 filled with the fuel electrode side filler 15. Thus, detailed description of these common members is omitted.

As illustrated in Figs. 38 and 39, however, the membrane electrode assembly 310 according to the modified example 2 of the fourth embodiment is different from the membrane electrode assembly 310 according to the fourth embodiment in the positional relationship between the air electrode side pore 3 and the fuel electrode side pore 13. More specifically, the membrane electrode assembly 310 according to the modified example 2 of the fourth embodiment is arranged such that the plane formed by the periphery of the second air electrode side opening 6b includes the plane formed by the periphery of the second fuel electrode side opening 16b when viewed from the top in the laminating direction.

In the membrane electrode assembly 310 with such a structure according to the modified example 2 of the fourth embodiment, the periphery of the second air electrode side opening 6b does not overlap the periphery of the second fuel electrode side opening 16b when viewed from the top in the laminating direction, and this can prevent stress concentration in a particular region of the solid electrolyte membrane 11 in the operating environment.

Furthermore, Fig. 33 shows a structure example with the positional relationship in which the plane formed by the periphery of the second air electrode side opening 6b and the plane formed by the periphery of the second fuel electrode side opening 16b are separated from each other so as not to overlap when the membrane electrode assembly 310 is viewed from the top in the laminating direction. The ion diffusion length in the solid electrolyte membrane 11 during an electrochemical reaction can be shorter in the membrane electrode assembly 310 illustrated in Fig. 38 than in Fig. 33. This can decrease internal resistance in the electrochemical reaction.

Furthermore, the plane formed by the periphery of the second air electrode side opening 6b can be enlarged to expand a region filled with a material with oxygen reduction activity and electrical conductivity and to increase the number of reaction fields or electrical conduction paths for oxygen reduction. This can further enhance oxygen reduction activity and electrical conductivity.

### (Modified Example 3)

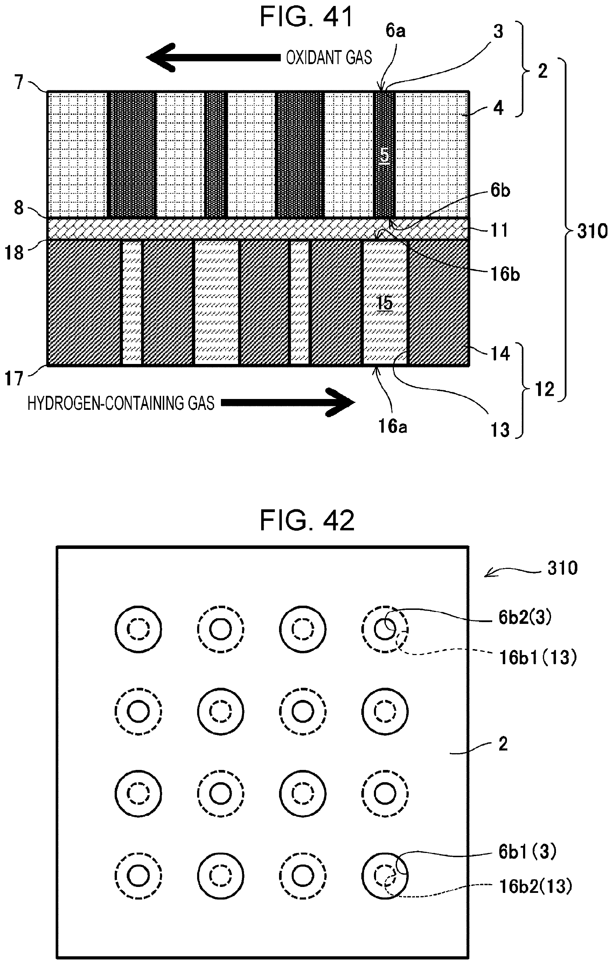

Next, a membrane electrode assembly 310 according to a modified example 3 of the fourth embodiment of the present disclosure is described with reference to Figs. 40 to 42. Fig. 40 is a plan view of the membrane electrode assembly 310 according to the modified example 3 of the fourth embodiment of the present disclosure viewed from the first air electrode side boundary surface 7 side in contact with the oxidant gas. Fig. 41 is a B-B cross-sectional view schematically illustrating the structure of the membrane electrode assembly 310 illustrated in Fig. 40. Fig. 42 is a schematic view of the positional relationship between the air electrode side pore 3 and the fuel electrode side pore 13 of the membrane electrode assembly 310 according to the modified example 3 of the fourth embodiment of the present disclosure viewed from the first air electrode side boundary surface 7.

The membrane electrode assembly 310 according to the modified example 3 of the fourth embodiment is the same as the membrane electrode assembly 310 according to the fourth embodiment in that the membrane electrode assembly 310 according to the modified example 3 includes the solid electrolyte membrane 11, the air electrode 2, and the fuel electrode 12, the air electrode 2 includes the air electrode side structural support 4 and the air electrode side pore 3 filled with the air electrode side filler 5, and the fuel electrode 12 includes the fuel electrode side structural support 14 and the fuel electrode side pore 13 filled with the fuel electrode side filler 15. Thus, detailed description of these common members is omitted.

As illustrated in Figs. 41 and 42, however, the membrane electrode assembly 310 according to the modified example 1 of the fourth embodiment has a different positional relationship between the air electrode side pore 3 and the fuel electrode side pore 13, and the air electrode side pore 3 and the fuel electrode side pore 13 have different opening sizes. More specifically, each of the air electrode side pore 3 and the fuel electrode side pore 13 has holes with two different opening sizes. More specifically, as illustrated in Fig. 42, the air electrode side pore 3 includes a second air electrode side opening 6b1 with a large opening size and a second air electrode side opening 6b2 with a small opening size. As illustrated in Fig. 40, the second air electrode side opening 6b1 and the second air electrode side opening 6b2 are alternately arranged. As illustrated in Fig. 42, the fuel electrode side pore 13 includes a second fuel electrode side opening 16b1 with a large opening size and a second fuel electrode side opening 16b2 with a small opening size. As in the air electrode side pore 3, the second air electrode side opening 6b1 and the second air electrode side opening 6b2 are alternately arranged. As illustrated in Fig. 42, a plane formed by the periphery of the second air electrode side opening 6b1 includes a plane formed by the periphery of the second fuel electrode side opening 16b2 when viewed from the top in the laminating direction of the membrane electrode assembly 10. Furthermore, a plane formed by the periphery of the second fuel electrode side opening 16b1 includes a plane formed by the periphery of the second air electrode side opening 6b2.

In the membrane electrode assembly 310 with such a structure according to the modified example 3 of the fourth embodiment, when viewed from the top in the laminating direction, the periphery of the second fuel electrode side opening 16b1 does not overlap the periphery of the second air electrode side opening 6b2, and the periphery of the second fuel electrode side opening 16b2 does not overlap the periphery of the second air electrode side opening 6b1. This can prevent stress concentration in a particular region of the solid electrolyte membrane 11 in the operating environment.

Furthermore, the ion diffusion length in the solid electrolyte membrane 11 during an electrochemical reaction can be shortened. This can decrease internal resistance in the electrochemical reaction.

The total area of the planes formed by the peripheries of the second fuel electrode side openingopenings 16b and the total area of the planes formed by the peripheries of the second air electrode side openingopenings 6b can be arbitrarily controlled. For example, the total area of the planes formed by the peripheries of the second fuel electrode side openingopenings 16b can be equalized with the total area of the planes formed by the peripheries of the second air electrode side openingopenings 6b. This can achieve a good balance between hydrogen oxidation activity, oxygen reduction activity, and electrical conductivity.

### (Modified Example 4)

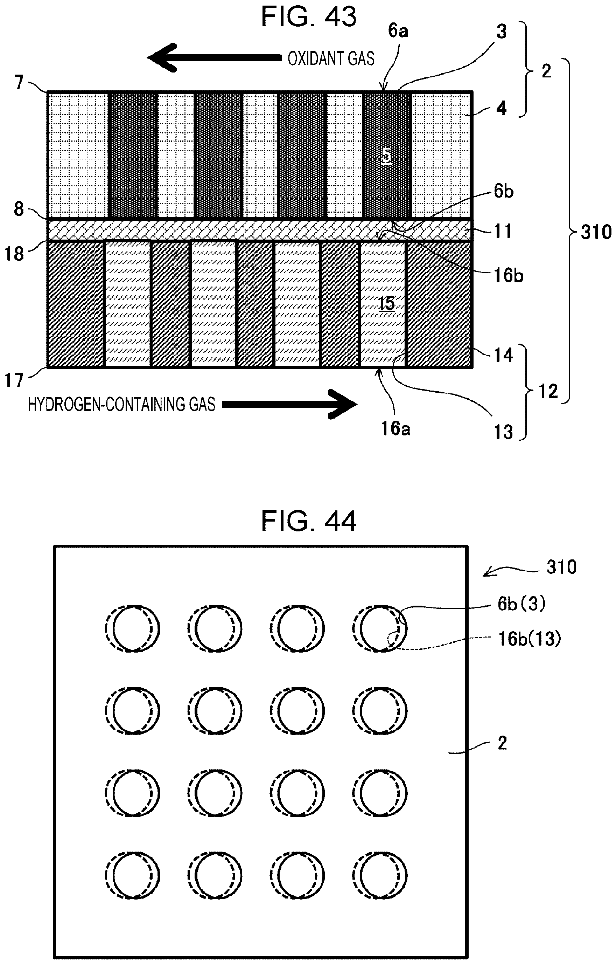

Next, a membrane electrode assembly 310 according to a modified example 4 of the fourth embodiment of the present disclosure is described with reference to Figs. 43 and 44. Fig. 43 is a schematic cross-sectional view of the structure of the membrane electrode assembly 310 according to the modified example 4 of the fourth embodiment of the present disclosure. The cross section of the membrane electrode assembly 310 according to the modified example 4 illustrated in Fig. 43 has a cross-sectional structure taken along the line B-B of the membrane electrode assembly 310 illustrated in Fig. 40. Fig. 44 is a schematic view of the positional relationship between the air electrode side pore 3 and the fuel electrode side pore 13 of the membrane electrode assembly 310 according to the modified example 4 of the fourth embodiment of the present disclosure viewed from the first air electrode side boundary surface 7.

The membrane electrode assembly 310 according to the modified example 4 of the fourth embodiment is the same as the membrane electrode assembly 310 according to the fourth embodiment in that the membrane electrode assembly 310 according to the modified example 4 includes the solid electrolyte membrane 11, the air electrode 2, and the fuel electrode 12, the air electrode 2 includes the air electrode side structural support 4 and the air electrode side pore 3 filled with the air electrode side filler 5, and the fuel electrode 12 includes the fuel electrode side structural support 14 and the fuel electrode side pore 13 filled with the fuel electrode side filler 15. Thus, detailed description of these common members is omitted.

As illustrated in Figs. 43 and 44, however, the membrane electrode assembly 310 according to the modified example 4 of the fourth embodiment has a different positional relationship between the air electrode side pore 3 and the fuel electrode side pore 13. More specifically, the periphery of the second fuel electrode side opening 16b of the fuel electrode side pore 13 and the periphery of the second air electrode side opening 6b of the air electrode side pore 3 are arranged so as to at least partly overlap when viewed from the top in the laminating direction of the membrane electrode assembly 310. The phrase "at least partly overlap" may mean that the periphery of the second fuel electrode side opening 16b crosses the periphery of the second air electrode side opening 6b when viewed from the top in the laminating direction of the membrane electrode assembly 310, as illustrated in Fig. 44. Furthermore, the periphery of the second fuel electrode side opening 16b may completely overlap the periphery of the second air electrode side opening 6b.

In such a structure, when the fuel electrode side pore 13 and the air electrode side pore 3 are arranged, the periphery of the second fuel electrode side opening 16b may overlap the periphery of the second air electrode side opening 6b when viewed from the top in the laminating direction of the membrane electrode assembly 310. This can increase the degree of freedom of the arrangement of the fuel electrode side pore 13 and the air electrode side pore 3, thus enabling a large number of arrangements. This can increase the area occupied by the fuel electrode side pore 13 in the fuel electrode 12 and the area occupied by the air electrode side pore 3 in the air electrode 2.

This can expand the reaction field and electrical conduction path for oxygen reduction or the reaction field and electrical conduction path for hydrogen oxidation and can further enhance oxygen reduction activity or hydrogen oxidation activity and electrical conductivity.

### (Modified Example 5)

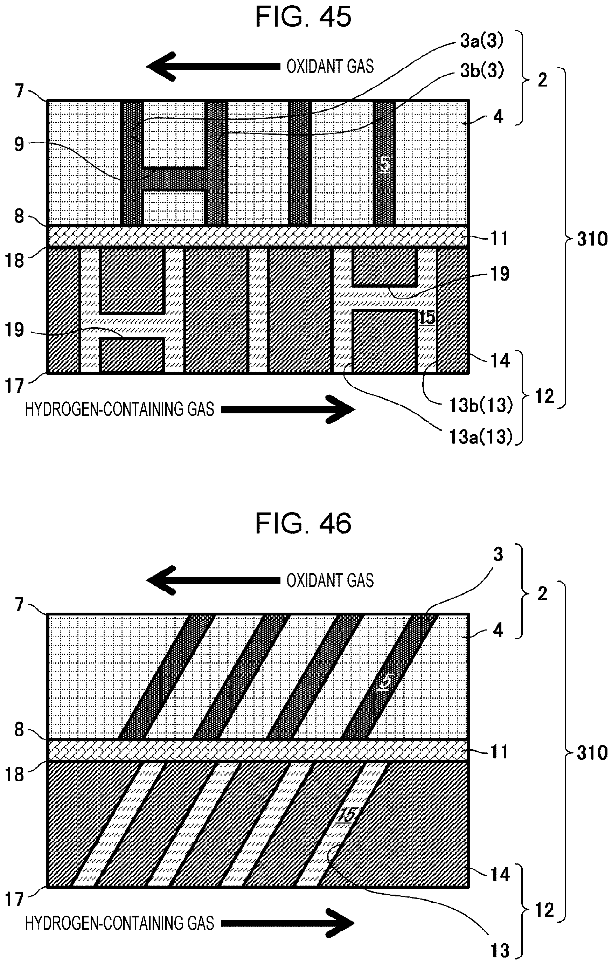

Next, a membrane electrode assembly 310 according to a modified example 5 of the fourth embodiment of the present disclosure is described with reference to Fig. 45. Fig. 45 is a schematic cross-sectional view of the structure of the membrane electrode assembly 310 according to the modified example 5 of the fourth embodiment of the present disclosure. The cross section of the membrane electrode assembly 310 according to the modified example 5 of the fourth embodiment illustrated in Fig. 45 has a cross-sectional structure taken along the line B-B of the membrane electrode assembly 310 illustrated in Fig. 40.

The membrane electrode assembly 310 according to the modified example 5 of the fourth embodiment is the same as the membrane electrode assembly 310 according to the fourth embodiment in that the membrane electrode assembly 310 according to the modified example 5 includes the solid electrolyte membrane 11, the air electrode 2, and the fuel electrode 12, the air electrode 2 includes the air electrode side structural support 4 and the air electrode side pore 3 filled with the air electrode side filler 5, and the fuel electrode 12 includes the fuel electrode side structural support 14 and the fuel electrode side pore 13 filled with the fuel electrode side filler 15. Thus, detailed description of these common members is omitted.

As illustrated in Fig. 45, however, the membrane electrode assembly 310 according to the modified example 5 of the fourth embodiment is different from the membrane electrode assembly 310 according to the fourth embodiment in that the fuel electrode side pore 13 includes the first fuel electrode side pore 13a, the second fuel electrode side pore 13b, and the fuel electrode side communication path 19 for communication between the first fuel electrode side pore 13a and the second fuel electrode side pore 13b. The membrane electrode assembly 310 according to the modified example 5 of the fourth embodiment is also different from the membrane electrode assembly 310 according to the fourth embodiment in that the air electrode side pore 3 includes the first air electrode side pore 3a, the second air electrode side pore 3b, and the air electrode side communication path 9 for communication between the first air electrode side pore 3a and the second air electrode side pore 3b.

As illustrated in Fig. 45, the fuel electrode side communication path 19 in the membrane electrode assembly 310 according to the modified example 5 of the fourth embodiment can increase the number of paths through which the hydrogen-containing gas can flow. This can further enhance hydrogen oxidation activity and electrical conductivity. Even if a failure in the path of the first fuel electrode side pore 13a or the second fuel electrode side pore 13b disrupts the flow of the hydrogen-containing gas, the hydrogen-containing gas can flow by another route through the fuel electrode side communication path 19. Thus, the fuel electrode 12 can retain hydrogen oxidation activity and electrical conductivity.

Furthermore, as illustrated in Fig. 45, the air electrode side communication path 9 in the membrane electrode assembly 310 according to the modified example 5 of the fourth embodiment can increase the number of paths through which the oxidant gas can flow. This can further enhance oxygen reduction activity and electrical conductivity. Even if a failure in the path of the first air electrode side pore 3a or the second air electrode side pore 3b disrupts the flow of the oxidant gas, the oxidant gas can flow by another route through the air electrode side communication path 9. Thus, the air electrode 2 can retain oxygen reduction activity and electrical conductivity.

In Fig. 45, the fuel electrode side communication path 19 is also filled with the fuel electrode side filler 15, and the air electrode side communication path 9 is also filled with the air electrode side filler 5. When it is sufficient to ensure the flow path of the hydrogen-containing gas in the fuel electrode side communication path 19 and the flow path of the oxidant gas in the air electrode side communication path 9, however, it is not necessary to fill the flow path with the fuel electrode side filler 15 in the fuel electrode side communication path 19 and with the air electrode side filler 5 in the air electrode side communication path 9.

However, the structure illustrated in Fig. 45 in which the fuel electrode side communication path 19 is filled with the fuel electrode side filler 15 and the air electrode side communication path 9 is filled with the air electrode side filler 5 is preferable in terms of improved hydrogen oxidation activity, oxygen reduction activity, and electrical conductivity.

Although the fuel electrode 12 and the air electrode 2 have the communication path (the fuel electrode side communication path 19 and the air electrode side communication path 9) in Fig. 45, the communication path may be provided only in the fuel electrode 12 or the air electrode 2.

### (Modified Example 6)

Next, a membrane electrode assembly 310 according to a modified example 6 of the fourth embodiment of the present disclosure is described with reference to Fig. 46. Fig. 46 is a schematic cross-sectional view of the structure of the membrane electrode assembly 310 according to the modified example 6 of the fourth embodiment of the present disclosure. The cross section of the membrane electrode assembly 310 according to the modified example 6 illustrated in Fig. 46 has a cross-sectional structure taken along the line B-B of the membrane electrode assembly 310 illustrated in Fig. 40.

The membrane electrode assembly 310 according to the modified example 6 of the fourth embodiment is the same as the membrane electrode assembly 310 according to the fourth embodiment in that the membrane electrode assembly 310 according to the modified example 6 includes the solid electrolyte membrane 11, the air electrode 2, and the fuel electrode 12, the air electrode 2 includes the air electrode side structural support 4 and the air electrode side pore 3 filled with the air electrode side filler 5, and the fuel electrode 12 includes the fuel electrode side structural support 14 and the fuel electrode side pore 13 filled with the fuel electrode side filler 15. Thus, detailed description of these common members is omitted.

As illustrated in Fig. 46, however, the fuel electrode side pore 13 and the air electrode side pore 3 of the membrane electrode assembly 310 according to the modified example 6 of the fourth embodiment extend in a different direction from the fuel electrode side pore 13 and the air electrode side pore 3 of the membrane electrode assembly 310 according to the fourth embodiment. More specifically, in the fuel electrode side structural support 14 of the membrane electrode assembly 310 according to the fourth embodiment, the fuel electrode side pores 13 extend from the side in contact with the hydrogen-containing gas (that is, the first fuel electrode side boundary surface 17) to the solid electrolyte membrane 11 side (that is, the second fuel electrode side boundary surface 18) perpendicularly to the main surface of the fuel electrode 12 (that is, the first fuel electrode side boundary surface 17 or the second fuel electrode side boundary surface 18). On the other hand, in the fuel electrode side structural support 14 of the membrane electrode assembly 310 according to the modified example 6 of the fourth embodiment, the fuel electrode side pores 13 extend obliquely from the first fuel electrode side boundary surface 17 to the second fuel electrode side boundary surface 18 at an acute angle with respect to the main surface of the fuel electrode 12. In other words, the fuel electrode side pores 13 tilt at the same angle with respect to the main surface of the fuel electrode 12 toward the downstream side in the flow direction of the hydrogen-containing gas.

This structure can improve the flow distribution of the hydrogen-containing gas flowing into the fuel electrode side pores 13 and flowing through the fuel electrode side pores 13. Thus, the membrane electrode assembly 310 according to the modified example 6 of the fourth embodiment can increase the supply of the hydrogen-containing gas and thereby improve hydrogen oxidation activity.

In the air electrode side structural support 4 of the membrane electrode assembly 310 according to the fourth embodiment, the air electrode side pores 3 extend from the side in contact with the oxidant gas (that is, the first air electrode side boundary surface 7) to the solid electrolyte membrane 11 side (that is, the second air electrode side boundary surface 8) perpendicularly to the main surface of the air electrode 2 (that is, the first air electrode side boundary surface 7 or the second air electrode side boundary surface 8). On the other hand, in the air electrode side structural support 4 of the membrane electrode assembly 310 according to the modified example 6 of the fourth embodiment, the air electrode side pores 3 extend obliquely from the first air electrode side boundary surface 7 to the second air electrode side boundary surface 8 at an acute angle with respect to the main surface of the air electrode 2. In other words, the air electrode side pores 3 tilt at the same angle with respect to the main surface of the air electrode 2 toward the downstream side in the flow direction of the oxidant gas.

This structure can improve the flow distribution of the oxidant gas flowing into the air electrode side pores 3 and flowing through the air electrode side pores 3. Thus, the membrane electrode assembly 310 according to the modified example 6 of the fourth embodiment can increase the supply of the oxidant gas and thereby improve oxygen reduction activity.

Although the fuel electrode side pore 13 and the air electrode side pore 3 extend obliquely with respect to the main surface of the fuel electrode 12 and the air electrode 2 in Fig. 46, only the fuel electrode side pore 13 or the air electrode side pore 3 may extend obliquely with respect to the main surface.

### (Modified Example 7)

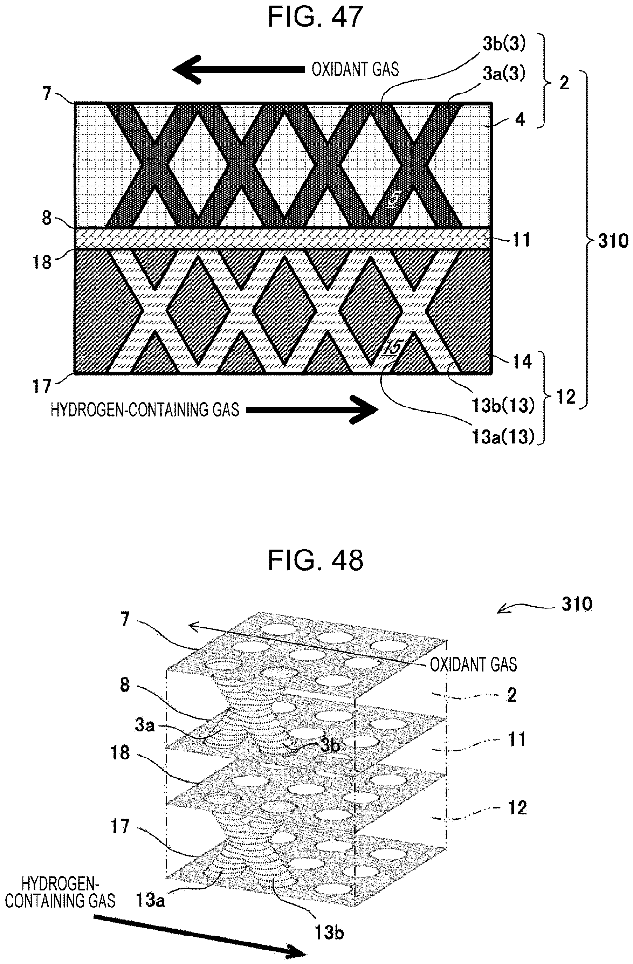

Next, a membrane electrode assembly 310 according to a modified example 7 of the fourth embodiment of the present disclosure is described with reference to Figs. 47 and 48. Fig. 47 is a schematic cross-sectional view of the structure of the membrane electrode assembly 310 according to the modified example 7 of the fourth embodiment of the present disclosure. The cross section of the membrane electrode assembly 310 according to the modified example 7 illustrated in Fig. 47 has a cross-sectional structure taken along the line B-B of the membrane electrode assembly 310 illustrated in Fig. 40. Fig. 48 is a schematic perspective view of the positional relationship between the first fuel electrode side pore 13a and the second fuel electrode side pore 13b of the fuel electrode 12 and the positional relationship between the first air electrode side pore 3a and the second air electrode side pore 3b of the air electrode 2 in the membrane electrode assembly 310 illustrated in Fig. 47.

The membrane electrode assembly 310 according to the modified example 7 of the fourth embodiment is the same as the membrane electrode assembly 310 according to the fourth embodiment in that the membrane electrode assembly 310 according to the modified example 7 includes the solid electrolyte membrane 11, the air electrode 2, and the fuel electrode 12, the air electrode 2 includes the air electrode side structural support 4 and the air electrode side pore 3 filled with the air electrode side filler 5, and the fuel electrode 12 includes the fuel electrode side structural support 14 and the fuel electrode side pore 13 filled with the fuel electrode side filler 15. Thus, detailed description of these common members is omitted.

As illustrated in Figs. 47 and 48, however, the fuel electrode side pore 13 and the air electrode side pore 3 of the membrane electrode assembly 310 according to the modified example 7 of the fourth embodiment extend in a different direction from the fuel electrode side pore 13 and the air electrode side pore 3 of the membrane electrode assembly 310 according to the fourth embodiment.

More specifically, in the fuel electrode side structural support 14 of the membrane electrode assembly 310 according to the fourth embodiment, for example, as illustrated in Fig. 33, the fuel electrode side pores 13 extend from the side in contact with the hydrogen-containing gas (that is, the first fuel electrode side boundary surface 17) to the solid electrolyte membrane 11 side (that is, the second fuel electrode side boundary surface 18) perpendicularly to the main surface of the fuel electrode 12 (that is, the first fuel electrode side boundary surface 17 or the second fuel electrode side boundary surface 18).

On the other hand, as illustrated in Figs. 47 and 48, in the fuel electrode side structural support 14 of the membrane electrode assembly 310 according to the modified example 7 of the fourth embodiment, the first fuel electrode side pore 13a crosses and communicates with the second fuel electrode side pore 13b. This arrangement is repeated to form a three-dimensional network, and the fuel electrode side pores 13 extend from the first fuel electrode side boundary surface 17 to the second fuel electrode side boundary surface 18.

Although the first fuel electrode side pore 13a crosses the second fuel electrode side pore 13b in Figs. 47 and 48, another fuel electrode side pore 13 may be arranged to cross the first fuel electrode side pore 13a and the second fuel electrode side pore 13b.

In such a structure, the first fuel electrode side pore 13a and the second fuel electrode side pore 13b can communicate with each other and form a network structure. This can promote the flow of the hydrogen-containing gas and improve hydrogen oxidation activity. This also enables the fuel electrode side filler 15 to be densely filled and can improve electrical conductivity.

Furthermore, in the air electrode side structural support 4 of the membrane electrode assembly 310 according to the fourth embodiment, for example, as illustrated in Fig. 33, the air electrode side pores 3 extend from the side in contact with the oxidant gas (that is, the first air electrode side boundary surface 7) to the solid electrolyte membrane 11 side (that is, the second fuel electrode side boundary surface 18) perpendicularly to the main surface of the fuel electrode 12 (that is, the first fuel electrode side boundary surface 17 or the second fuel electrode side boundary surface 18).

On the other hand, as illustrated in Figs. 47 and 48, in the air electrode side structural support 4 of the membrane electrode assembly 310 according to the modified example 7 of the fourth embodiment, the first air electrode side pore 3a crosses and communicates with the second air electrode side pore 3b. This arrangement is repeated to form a three-dimensional network, and the air electrode side pores 3 extend from the first air electrode side boundary surface 7 to the second air electrode side boundary surface 8.

Although the first air electrode side pore 3a crosses the second air electrode side pore 3b in Figs. 47 and 48, another air electrode side pore 3 may be arranged to cross the first air electrode side pore 3a and the second air electrode side pore 3b.

In such a structure, the first air electrode side pore 3a and the second air electrode side pore 3b can communicate with each other and form a network structure. This can promote the flow of the oxidant gas and improve oxygen reduction activity. This also enables the air electrode side filler 5 to be densely filled and can improve electrical conductivity.

### (Modified Example 8)

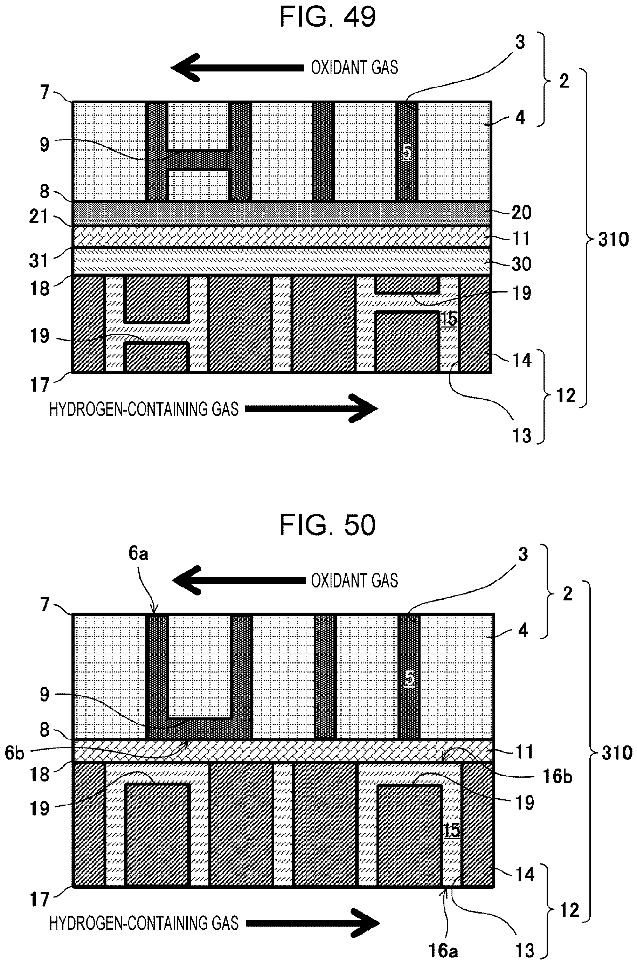

Next, a membrane electrode assembly 310 according to a modified example 8 of the fourth embodiment of the present disclosure is described with reference to Fig. 49. Fig. 49 is a schematic cross-sectional view of the structure of the membrane electrode assembly 310 according to the modified example 8 of the fourth embodiment of the present disclosure. The cross section of the membrane electrode assembly 310 according to the modified example 8 illustrated in Fig. 49 has a cross-sectional structure taken along the line B-B of the membrane electrode assembly 310 illustrated in Fig. 40.

The membrane electrode assembly 310 according to the modified example 8 of the fourth embodiment is the same as the membrane electrode assembly 310 according to the modified example 5 of the fourth embodiment in that the membrane electrode assembly 310 according to the modified example 8 includes the solid electrolyte membrane 11, the air electrode 2, and the fuel electrode 12, the air electrode 2 includes the air electrode side structural support 4 and the air electrode side pore 3 filled with the air electrode side filler 5, and the fuel electrode 12 includes the fuel electrode side structural support 14 and the fuel electrode side pore 13 filled with the fuel electrode side filler 15. The membrane electrode assembly 310 according to the modified example 8 of the fourth embodiment is also the same as the membrane electrode assembly 310 according to the modified example 5 of the fourth embodiment in that the fuel electrode 12 has the fuel electrode side communication path 19, and the air electrode 2 has the air electrode side communication path 9. Thus, detailed description of these common members is omitted.

As illustrated in Fig. 49, however, the membrane electrode assembly 310 according to the modified example 8 of the fourth embodiment is different from the membrane electrode assembly 310 according to the modified example 5 of the fourth embodiment in that the fuel electrode side functional layer 30 is further provided between the solid electrolyte membrane 11 and the fuel electrode 12, and the air electrode side functional layer 20 is further provided between the solid electrolyte membrane 11 and the air electrode 2.

The fuel electrode side functional layer 30 is formed of a material with hydrogen oxidation activity and electrical conductivity like the fuel electrode side filler 15. The fuel electrode side functional layer 30 is in contact with the fuel electrode 12 on the second fuel electrode side boundary surface 18 and is in contact with the solid electrolyte membrane 11 on the third fuel electrode side boundary surface 31. The fuel electrode side functional layer 30 may be formed of the same material as or a different material from the fuel electrode side filler 15.

This structure can increase the number of reaction fields near the solid electrolyte membrane 11 in which a hydrogen oxidation reaction occurs. This can improve hydrogen oxidation activity.

The air electrode side functional layer 20 is formed of a material with oxygen reduction activity and electrical conductivity like the air electrode side filler 5. The air electrode side functional layer 20 is in contact with the air electrode 2 on the second air electrode side boundary surface 8 and is in contact with the solid electrolyte membrane 11 on the third air electrode side boundary surface 21. The air electrode side functional layer 20 may be formed of the same material as or a different material from the air electrode side filler 5.

This structure can increase the number of reaction fields near the solid electrolyte membrane 11 in which an oxygen reduction reaction occurs. This can improve oxygen reduction activity.

The membrane electrode assembly 310 according to the modified example 8 has the fuel electrode side functional layer 30 and the air electrode side functional layer 20 in Fig. 49 but may have only the fuel electrode side functional layer 30 or the air electrode side functional layer 20.

### (Modified Example 9)

Next, a membrane electrode assembly 310 according to a modified example 9 of the fourth embodiment of the present disclosure is described with reference to Fig. 50. Fig. 50 is a schematic cross-sectional view of the structure of the membrane electrode assembly 310 according to the modified example 9 of the fourth embodiment of the present disclosure. The cross section of the membrane electrode assembly 310 according to the modified example 9 illustrated in Fig. 50 has a cross-sectional structure taken along the line B-B of the membrane electrode assembly 310 illustrated in Fig. 50.

The membrane electrode assembly 310 according to the modified example 9 of the fourth embodiment is the same as the membrane electrode assembly 310 according to the modified example 5 of the fourth embodiment in that the membrane electrode assembly 310 according to the modified example 9 includes the solid electrolyte membrane 11, the air electrode 2, and the fuel electrode 12, the air electrode 2 includes the air electrode side structural support 4 and the air electrode side pore 3 filled with the air electrode side filler 5, and the fuel electrode 12 includes the fuel electrode side structural support 14 and the fuel electrode side pore 13 filled with the fuel electrode side filler 15. The membrane electrode assembly 310 according to the modified example 9 of the fourth embodiment is also the same as the membrane electrode assembly 310 according to the modified example 5 of the fourth embodiment in that the fuel electrode 12 has the fuel electrode side communication path 19, and the air electrode 2 has the air electrode side communication path 9. Thus, detailed description of these common members is omitted.

As illustrated in Fig. 50, however, the membrane electrode assembly 310 according to the modified example 9 of the fourth embodiment is different from the membrane electrode assembly 310 according to the modified example 5 of the fourth embodiment in that the fuel electrode side communication path 19 is located along the second fuel electrode side boundary surface 18. The membrane electrode assembly 310 according to the modified example 9 is also different from the membrane electrode assembly 310 according to the modified example 5 of the fourth embodiment in that the air electrode side communication path 9 is located along the second air electrode side boundary surface 8.

As illustrated in Fig. 50, the fuel electrode side communication path 19 is located along the second fuel electrode side boundary surface 18 between the solid electrolyte membrane 11 and the fuel electrode 12 and is filled with the fuel electrode side filler 15. A wall surface of the fuel electrode side communication path 19 on the second fuel electrode side boundary surface 18 side is opened and forms the second fuel electrode side opening 16b. This can increase the contact area between the solid electrolyte membrane 11 and the fuel electrode side filler 15 as compared with a structure in which the fuel electrode side communication path 19 is not formed along the second fuel electrode side boundary surface 18. This can increase the number of reaction fields near the solid electrolyte membrane 11 in which a hydrogen oxidation reaction occurs and improve hydrogen oxidation activity.

As illustrated in Fig. 50, the air electrode side communication path 9 is located along the second air electrode side boundary surface 8 between the solid electrolyte membrane 11 and the air electrode 2 and is filled with the air electrode side filler 5. A wall surface of the air electrode side communication path 9 on the second air electrode side boundary surface 8 side is opened and forms the second air electrode side opening 6b. This can increase the contact area between the solid electrolyte membrane 11 and the air electrode side filler 5 as compared with a structure in which the air electrode side communication path 9 is not formed along the second air electrode side boundary surface 8. This can increase the number of reaction fields near the solid electrolyte membrane 11 in which an oxygen reduction reaction occurs and improve oxygen reduction activity.

Although both the fuel electrode side communication path 19 and the air electrode side communication path 9 in the membrane electrode assembly 310 according to the modified example 9 illustrated in Fig. 50 are located along the boundary surfaces of the solid electrolyte membrane 11, the present disclosure is not limited to this structure. Either the fuel electrode side communication path 19 or the air electrode side communication path 9 may be located along the boundary surface of the solid electrolyte membrane 11.

Although the fuel electrode side filler 15 with hydrogen oxidation activity and the air electrode side filler 5 with oxygen reduction activity are described above as examples of fillers in the pores, the properties of the fillers are not limited to hydrogen oxidation activity and oxygen reduction activity. The fillers may have at least one selected from the group consisting of hydrogen oxidation activity, oxygen reduction activity, proton reduction activity, steam decomposition activity, and oxide ion oxidation activity. The properties of the filler are appropriately selected according to the function of the electrode to be filled with the filler. Materials with proton reduction activity may be metals, such as Ni, Pt, Pd, and Ir, and cermets of these metals and proton conductive oxides. Materials with steam decomposition activity may be metals, such as Ni, Pt, Pd, and Ir, and cermets of these metals and oxide ion conductive oxides. Materials with oxide ion oxidation activity may be compounds containing at least one element selected from the group consisting of Mn, Fe, Co, and Ni, more specifically, for example, lanthanum strontium cobalt iron composite oxides (LSCF), lanthanum strontium cobalt composite oxides (LSC), lanthanum strontium iron composite oxides (LSF), lanthanum strontium manganese composite oxides (LSM), barium strontium cobalt iron composite oxides (BSCF), samarium strontium cobalt composite oxides (SSC), lanthanum nickel iron composite oxides, lanthanum nickel composite oxides, and barium gadolinium lanthanum cobalt composite oxides.

Furthermore, the structural supports in the electrodes may be composed of a cermet, and in such a case the pores in the structural supports can have a cavity with a tortuosity of 1.5 or less. Conversely, the structural supports forming the pores can have a tortuosity of 1 or more and 1.2 or less. The tortuosity is measured with a scanning electron microscope (FIB-SEM).

### Industrial Applicability

A membrane electrode assembly according to the present disclosure can be used as a membrane electrode assembly in an electrochemical device, such as a fuel cell or a gas sensor. A membrane electrode assembly according to the present disclosure can also be used as a membrane electrode assembly for an electrochemical device, such as an electrochemical hydrogen pump, in a hydrogen purifier or a hydrogen compressor.

### Reference Signs List

- 2: air electrode
- 3: air electrode side pore
- 3a: first air electrode side pore
- 3b: second air electrode side pore
- 4: air electrode side structural support
- 5: air electrode side filler
- 6a: first air electrode side opening
- 6b: second air electrode side opening
- 7: first air electrode side boundary surface
- 8: second air electrode side boundary surface
- 9: air electrode side communication path
- 10: membrane electrode assembly
- 11: solid electrolyte membrane
- 12: fuel electrode
- 13: fuel electrode side pore
- 13a: first fuel electrode side pore
- 13b: second fuel electrode side pore
- 14: fuel electrode side structural support
- 15: fuel electrode side filler
- 16a: first fuel electrode side opening
- 16b: second fuel electrode side opening
- 17: first fuel electrode side boundary surface
- 18: second fuel electrode side boundary surface
- 19: fuel electrode side communication path
- 20: air electrode side functional layer
- 21: third air electrode side boundary surface
- 30: fuel electrode side functional layer
- 31: third fuel electrode side boundary surface
- 110: membrane electrode assembly
- 210: membrane electrode assembly
- 212: electrode
- 213: pore
- 213a: first pore
- 213b: second pore
- 214: structural support
- 215: filler
- 217: first boundary surface
- 218: second boundary surface
- 219: communication path
- 220: functional layer
- 221: third boundary surface
- 310: membrane electrode assembly

## Claims

1. A membrane electrode assembly comprising:
a solid electrolyte membrane containing an electrolyte material; and
an electrode in contact with a reactant gas,
wherein the electrode includes
a structural support including a ceramic member, and
a pore extending from a boundary surface in contact with the reactant gas toward the solid electrolyte membrane in the structural support and filled with a filler having at least one selected from the group consisting of hydrogen oxidation activity, oxygen reduction activity, proton reduction activity, steam decomposition activity, and oxide ion oxidation activity.

2. The membrane electrode assembly according to Claim 1, wherein
the reactant gas is a hydrogen-containing gas, and
the filler has hydrogen oxidation activity and electrical conductivity.

3. The membrane electrode assembly according to Claim 1 or 2, wherein
the filler is a compound containing Ni.

4. The membrane electrode assembly according to any one of Claims 1 to 3, wherein
the filler is a cermet.

5. The membrane electrode assembly according to Claim 1, wherein
the reactant gas is an oxidant gas, and
the filler has oxygen reduction activity and electrical conductivity.

6. The membrane electrode assembly according to Claim 5, wherein
the filler is a compound containing at least one element selected from the group consisting of Mn, Fe, Co, and Ni.

7. The membrane electrode assembly according to Claim 5, wherein the filler is at least one compound selected from the group consisting of lanthanum strontium cobalt composite oxides, lanthanum strontium cobalt iron composite oxides, lanthanum strontium iron composite oxides, and lanthanum nickel iron composite oxides.

8. The membrane electrode assembly according to Claim 1, wherein
the structural support has regions in which the pores have different opening areas per unit area on the boundary surface, and satisfies a relationship of first area ratio < second area ratio, wherein the first area ratio is an opening area of the pore per unit area of a upstream region in a flow direction of the reactant gas, and the second area ratio is an opening area of the pore per unit area of a downstream region.

9. The membrane electrode assembly according to Claim 8, wherein
a relationship of first area ratio < third area ratio < second area ratio is satisfied, wherein the third area ratio is an opening area of the pore per unit area in a region between the upstream region and the downstream region.

10. The membrane electrode assembly according to Claim 8, wherein
a relationship of third area ratio < first area ratio < second area ratio is satisfied, wherein the third area ratio is an opening area of the pore per unit area in a region between the upstream region and the downstream region.

11. The membrane electrode assembly according to any one of Claims 1 to 10, wherein
the pore has
a first opening on the boundary surface into which the reactant gas flows, and
a second opening opposite the first opening at an end of the pore on a solid electrolyte membrane side.

12. The membrane electrode assembly according to any one of Claims 1 to 11, wherein
the pore includes
a first pore,
a second pore, and
a communication path which communicates between the first pore and the second pore.

13. The membrane electrode assembly according to any one of Claims 1 to 12, wherein
the filler is a porous material.

14. The membrane electrode assembly according to Claim 1, wherein
the reactant gas is a hydrogen-containing gas and an oxidant gas,
the electrode includes a fuel electrode in contact with the hydrogen-containing gas and an air electrode in contact with the oxidant gas, and the air electrode, the solid electrolyte membrane, and the fuel electrode are laminated in this order,
the fuel electrode includes
a fuel electrode side structural support as the structural support, and
a fuel electrode side pore, as the pore, extending from a fuel electrode side boundary surface in contact with the hydrogen-containing gas toward a solid electrolyte membrane side in the fuel electrode side structural support and filled with a fuel electrode side filler with hydrogen oxidation activity and electrical conductivity, and
the air electrode includes
an air electrode side structural support as the structural support, and
an air electrode side pore, as the pore, extending from an air electrode side boundary surface in contact with the oxidant gas toward the solid electrolyte membrane side in the air electrode side structural support and filled with an air electrode side filler with oxygen reduction activity and electrical conductivity.

15. The membrane electrode assembly according to Claim 14, wherein
the fuel electrode side pore includes
a first fuel electrode side opening on the fuel electrode side boundary surface into which the hydrogen-containing gas flows, and
a second fuel electrode side opening opposite the first fuel electrode side opening at an end of the fuel electrode side pore on the solid electrolyte membrane side, and
the air electrode side pore includes
a first air electrode side opening on the air electrode side boundary surface into which the oxidant gas flows, and
a second air electrode side opening opposite the first air electrode side opening at an end of the pore on the solid electrolyte membrane side.

16. The membrane electrode assembly according to Claim 15, wherein
a periphery of the second fuel electrode side opening of the fuel electrode side pore and a periphery of the second air electrode side opening of the air electrode side pore are arranged so as not to overlap when viewed from the top in a laminating direction of the membrane electrode assembly.

17. The membrane electrode assembly according to Claim 15 or 16, wherein
a plane formed by a periphery of the second fuel electrode side opening includes a plane formed by a periphery of the second air electrode side opening when viewed from the top in a laminating direction of the membrane electrode assembly.

18. The membrane electrode assembly according to Claim 15 or 16, wherein
a plane formed by a periphery of the second air electrode side opening includes a plane formed by a periphery of the second fuel electrode side opening when viewed from the top in a laminating direction of the membrane electrode assembly.

19. The membrane electrode assembly according to Claim 15, wherein
a periphery of the second fuel electrode side opening of the fuel electrode side pore and a periphery of the second air electrode side opening of the air electrode side pore are arranged so as to at least partly overlap when viewed from the top in a laminating direction of the membrane electrode assembly.

20. The membrane electrode assembly according to any one of Claims 14 to 19, wherein
the fuel electrode side pore includes
a first fuel electrode side pore,
a second fuel electrode side pore, and
a fuel electrode side communication path which communicates between the first fuel electrode side pore and the second fuel electrode side pore.

21. The membrane electrode assembly according to any one of Claims 14 to 20, wherein
the air electrode side pore includes
a first air electrode side pore,
a second air electrode side pore, and
an air electrode side communication path which communicates between the first air electrode side pore and the second air electrode side pore.

22. The membrane electrode assembly according to any one of Claims 14 to 21, wherein
the fuel electrode side filler contains Ni.

23. The membrane electrode assembly according to any one of Claims 14 to 22, wherein
the fuel electrode side filler is a cermet.

24. The membrane electrode assembly according to any one of Claims 14 to 23, wherein
the air electrode side filler is a compound containing at least one element selected from the group consisting of Mn, Fe, Co, and Ni.

25. The membrane electrode assembly according to any one of Claims 14 to 24, wherein
at least one selected from the group consisting of the fuel electrode side filler and the air electrode side filler is a porous material.

26. The membrane electrode assembly according to any one of Claims 14 to 25, wherein
at least one selected from the group consisting of the fuel electrode side structural support and the air electrode side structural support includes the ceramic member containing the electrolyte material.

27. The membrane electrode assembly according to any one of Claims 1 to 26, wherein
the pore has a cavity with a tortuosity of 1.5 or less.

28. The membrane electrode assembly according to any one of Claims 1 to 27, wherein
the structural support has a tortuosity of 1 or more and 1.2 or less.

29. The membrane electrode assembly according to any one of Claims 1 to 28, wherein
the electrolyte material has proton conductivity.

30. A fuel cell comprising the membrane electrode assembly according to any one of Claims 1 to 29.
